# NEUE EUROPÄISCHE PATENTSCHRIFT

(11) **EP 1 420 185 B2**
(45) Veröffentlichungstag und Bekanntmachung des Hinweises auf die Entscheidung über den Einspruch: **20.01.2016**
(45) Hinweis auf die Patenterteilung: 18.02.2009
(21) Anmeldenummer: 03026155.6
(22) Anmeldetag: 14.11.2003
(51) Int. Cl.: F16D 25/12

(54) **Kraftfahrzeug-Antriebsstrang mit einer Pumpenanordnung zur Versorgung einer Kupplungseinrichtung mit Druckmedium**
Vehicle drive train comprising a pumping arrangement in order to supply a clutch device with a pressurised fluid
Transmission pour véhicule automobile comprenant une pompe d'alimentation d'un système d'embrayage en fluide sous pression

(30) Priorität: 18.11.2002 DE 10253663; 18.11.2002 DE 10253658; 26.02.2003 DE 10308296; 09.04.2003 DE 10316229; 10.10.2003 DE 10347203
(43) Veröffentlichungstag der Anmeldung: 19.05.2004
(73) Patentinhaber: ZF Friedrichshafen AG, 80846 Friedrichshafen (DE)
(72) Erfinder: Busold, Thomas Bernd Dipl.-Ing., 36039 Fulda (DE); Grosspietsch, Wolfgang Dipl.-Ing. (FH), 97422 Schweinfurt (DE); Steiner, Eduard Dipl.-Ing. (FH), 97072 Würzburg (DE); Moseler, Olaf Dr., 97070 Würzburg (DE); Flückiger, Martin Dipl.-Ing. (FH), 97421 Schweinfurt (DE); Kundermann, Wolfgang Dipl.-Ing., 97422 Schweinfurt (DE); Kraus, Paul Dipl.-Ing., 97464 Niederwerrn (DE); Tögel, Matthias Dipl.-Ing. (FH), 97711 Massbach (DE); John, Thomas Dipl.-Ing., 97529 Alitzheim (DE)

(56) Entgegenhaltungen:
- EP-A- 1 150 040
- EP-A- 1 253 341
- WO-A-03/040580
- DE-A- 10 056 954
- DE-A1- 4 208 060
- DE-A1- 10 041 386
- DE-A1- 10 044 493
- DE-C1- 4 117 736
- GB-A- 2 367 866
- US-B1- 6 308 812
- H. FLEGL ET AL.: 'Das Porsche-Doppelkupplungs-(PDK-) Getriebe' AUTOMOBILTECHNISCHE ZEITUNG ATZ Bd. 89, Nr. 9, 1987, Seiten 439 - 452
- Nachdruck aus Automobiltechnische Zeitung ATZ 97 (1995) Band 10 "Das neue Automatische Getriebe W5A 330/580 für Personenwagen von Mercedes Benz/Elektrohydraulische Steuerung und äußere Schaltung" Autoren: Rudolf Rösch und Dr. Gerhard Wagner

## Beschreibung

Die Erfindung betrifft allgemein einen Kraftfahrzeug-Antriebsstrang, umfassend eine Antriebseinheit, ein Getriebe und ein Kupplungssystem mit einer zwischen der Antriebseinheit und dem Getriebe angeordneten Kupplungseinrichtung zur Momentenübertragung zwischen der Antriebseinheit und dem Getriebe, wobei die Kupplungseinrichtung wenigstens eine unter Vermittlung von Druckmedium betätigbare oder/und für einen Betrieb unter Einwirkung eines Betriebsmediums vorgesehene Kupplungsanordnung aufweist oder/und das Getriebe mittels einer zugeordneten Aktuatorik unter Vermittlung von Druckmedium betätigbar ist.

Nach einem Aspekt der Erfindung betrifft diese vor allem einen Kraftfahrzeug-Antriebsstrang, umfassend eine Antriebseinheit, ein Getriebe und ein Kupplungssystem mit einer zwischen der Antriebseinheit und dem Getriebe angeordneten Kupplungseinrichtung zur Momentenübertragung zwischen der Antriebseinheit und dem Getriebe, wobei die Kupplungseinrichtung wenigstens eine unter Vermittlung von Druckmedium betätigbare oder/und für einen Betrieb unter Einwirkung eines Betriebsmediums vorgesehene Kupplungsanordnung aufweist und das Getriebe mittels einer zugeordneten Aktuatorik unter Vermittlung von Druckmedium betätigbar ist.

WO 03 040 580 offenbart einen Kraftfahrzeug-Antriebsstrang, der als nächstliegender Stand der Technik angesehen wird. Siehe Oberbegriff des Anspruchs 1.

Beispielsweise aus der DE 100 56 954 A1 und der DE 101 02 874 A1 ist ein Kraftfahrzeug-Antriebsstrang bekannt, umfassend eine Antriebseinheit, ein Getriebe und ein Kupplungssystem mit einer zwischen der Antriebseinheit und dem Getriebe angeordneten Kupplungseinrichtung zur Momentenübertragung zwischen der Antriebseinheit und dem Getriebe, wobei die Kupplungseinrichtung wenigstens eine unter Vermittlung von Druckmedium betätigbare, für einen Betrieb unter Einwirkung eines Betriebsmediums vorgesehene Kupplungsanordnung aufweist, wobei auf Grundlage einer Pumpenanordnung i) das Druckmedium für die Betätigung der Kupplungsanordnung bereitstellbar ist und ii) der Kupplungseinrichtung für den Betrieb unter Einwirkung des Betriebsmediums Betriebsmedium zuführbar ist.

Betreffend das angesprochene Kupplungssystem wird, wie auch aus der DE 100 56 954 A1 und DE 101 02 874 A1 entnehmbar, insbesondere an ein Nasslauf-Doppelkupplungssystem mit zwei nasslaufenden Lamellen-Kupplungsanordnungen gedacht, die unter Vermittlung von in die Kupplungseinrichtung integrierten Nehmerzylindern auf hydraulischem Wege betätigbar sind. Bei der Kupplungseinrichtung kann es sich beispielsweise um eine Kupplungseinrichtung gemäß einer Konstruktion der Anmelderin handeln, wie sie in der deutschen Offenlegungsschrift DE 100 04 179 A1 beschrieben ist.

Ein derartiges Nasslauf-Doppelkupplungssystem benötigt zur Betätigung der Lamellen-Kupplungsanordnungen einen kleinen Volumenstrom an Druckmedium bei hohem Druck und zur Kühlung der Reibbeläge bzw. Lamellen einen vergleichsweise großen Volumenstrom an Betriebsmedium (Kühlmedium) bei vergleichsweise geringem Druck. Gegenüber herkömmlichen Lösungen mit einer von der Antriebseinheit mechanisch angetriebenen Pumpe, die stets (mangels Steuerbarkeit bzw. Regelbarkeit unabhängig von der Drehzahl der Antriebseinheit) einen der momentanen Drehzahl der Antriebseinheit entsprechenden Volumenstrom bzw. Abgabedruck bereitstellt, hat die Anmelderin bisher in diesem Zusammenhang aus energetischen Gründen vorrangig den Ansatz favorisiert, für jeden Volumenstrom eine eigene abgestimmte Pumpenanordnung (Pumpe) zu verwenden (vgl. die genannten deutschen Offenlegungsschriften DE 100 56 954 A1 und DE 101 02 874 A1). In diesem Zusammenhang wurde unter anderem an elektromotorisch angetriebene Pumpen gedacht. Es hat sich nun aber gezeigt, dass bei besonders leistungs- bzw. drehmomentstarken Antriebseinheiten (Motoren) der Kühlölbedarf der Kupplungseinrichtung unter Umständen so groß sein kann, dass der Einsatz eines Elektromotors zum Antreiben einer elektromotorischen Pumpe zum Kühlen der Kupplungseinrichtung bzw. deren wenigstens einen Kupplungsanordnung aufgrund zu großen, durch die erforderliche Pumpenleistung bedingten Bauraumbedarfs nachteilig ist und unter Umständen nicht mehr praktikabel bzw. tragbar ist. Ferner hat sich gezeigt, dass bei den bisherigen Lösungen zur Erreichung eines möglichst guten Wirkungsgrads durchaus noch einiger Entwicklungsaufwand mit entsprechenden Kosten nötig ist und auch durchaus beachtliche Fertigungskosten zu tragen sind. Auch werden bei einer optimalen Lösung auf Grundlage der bisherigen Ansätze vergleichsweise viele Bauteile benötigt, z. B. Hydrospeicher. Eine Rückkehr zu der herkömmlichen Lösung mit einer einfachen, durch die Antriebseinheit permanent angetriebenen Pumpe ohne Steuerbarkeit/Regelbarkeit des abgegebenen Drucks bzw. des abgegebenen Volumenstroms kommt aus verschiedenen Gründen aber nicht in Betracht. So führt ein nicht bedarfsangepasster, zu großer Kühlölvolumenstrom zu ungewünschten Schleppmomenten in einer nasslaufenden Lamellen-Kupplungsanordnung. Ferner ist die Gefahr von zu hohen Drücken zu gegenwärtigen, die zu Beschädigungen führen können. Ferner spielt der Wirkungsgrad bzw. der Energieverbrauch eine nicht unwichtige Rolle. Es wurde nun aber erkannt, dass man auch im Falle einer durch die Antriebseinheit permanent angetriebene bzw. antreibbaren Pumpe mittels einer zugeordneten Steuer/Regel-Ventilanordnung eine Steuerbarkeit bzw. Regelbarkeit des wirksamen Abgabedrucks oder/und des wirksamen Abgabe-Volumenstroms der Pumpe erreichen kann, ohne dass hierzu ein übermäßiger mechanischer und ansteuerungsmäßiger Aufwand erforderlich ist.

Der Erfindung liegt eine möglichst einfache und preiswerte Hydraulikversorgung für einen Kraftfahrzeug-Antriebsstrang wie oben angesprochen zugrunde. Diese Aufgabe wird durch einen Kraftfahrzeug-Antriebsstrang gemäß den Merkmalen des Anspruchs 1 gelöst.

Durch eine gemeinsame Druckmediumversorgung bzw. Betriebsmediumversorgung für die Kupplungseinrichtung und das Getriebe können Komponenten, etwa gesonderte Pumpen usw., eingespart werden, so dass sich beachtliche Kostenvorteile ergeben. Durch geeignete Maßnahmen kann man dabei sicherstellen, dass etwa ein kurzzeitiger hoher Druckmediumbedarf für die Getriebebetätigung nicht schädlich auf die Versorgung der Kupplungseinrichtung mit Betriebsmedium bzw. auf die Bereitstellung von Druckmedium für die Betätigung der Kupplungseinrichtung rückwirkt.

Vorteilhafte Ausgestaltungen des Antriebsstrangs ergeben sich aus den Unteransprüche.

Die Pumpenanordnung kann wenigstens eine durch die Antriebseinheit antreibbare Pumpe oder/und wenigstens eine elektromotorisch antreibbare Pumpe umfassen. Die Pumpenanordnung kann speziell auch wenigstens eine durch die Antriebseinheit antreibbare Pumpe umfassen, die hinsichtlich des Abgabedrucks oder/und hinsichtlich des Abgabe-Volumenstroms steuerbar oder regelbar ist. Eine andere, demgegenüber bevorzugte Möglichkeit ist, dass die Pumpenanordnung wenigstens eine durch die Antriebseinheit antreibbare Pumpe umfasst, deren Eingangsseite und Ausgangseite über eine Steuer/Regel-Ventilanordnung verbindbar ist, um durch Rückführung von Medium von der Ausgangsseite zur Eingangsseite das Medium auf der Ausgangsseite oder an einer ausgangsseitigen Abgabestelle auf einem Soll-Druck bereitzustellen oder/und durch Rückführung von Medium von der Ausgangsseite zur Eingangsseite einen Soll-Volumenstrom an Medium an der Ausgangsseite oder der ausgangsseitigen Abgabestelle bereitzustellen.

Die Anpassung des Mediumdrucks bzw. Medium-Volumenstroms an den momentanen Bedarf erfolgt nach diesem Vorschlag durch Rückführung von Medium von der Ausgangsseite zur Eingangsseite der Pumpe. Es braucht damit keine Pumpe eingesetzt werden, die selbst steuerbar ist, und man kann auch darauf verzichten, elektromotorische Pumpen einzusetzen. Es ergeben sich gegenüber bisherigen Ansätzen große Kostenvorteile. Insgesamt kann beispielsweise eine vergleichsweise einfache und preiswerte Hydraulikversorgung bzw. Kühlölversorgung für etwa eine nasslaufende Lamellen-Kupplung, ggf. Lamellen-Doppelkupplung, bzw. eine hydraulisch betätigbare Kupplung sowie ggf. für ein Getriebe (etwa Automatgetriebe oder automatisiertes Getriebe) bereitgestellt werden. Betreffend die letztgenannte Einsatzmöglichkeit ist darauf hinzuweisen, dass bei Automatgetrieben in der Regel herkömmlich eine dem Automatgetriebe zugeordnete eigene Pumpe verwendet wird, wobei die benötigten Druckniveaus durch verschiedene Druckminderventile bereitgestellt werden.

Wenn hier von einer Rückführung von Medium von der Eingangsseite zur Ausgangsseite der Pumpe die Rede ist, so schließt dies auch die Möglichkeit ein, dass das Medium in ein Mediumreservoir, beispielsweise in eine Ölwanne, zurückgeführt wird, aus der die Pumpe, ggf. über einen Saugfilter, das Medium ansaugt. Demgegenüber ist es aber bevorzugt, dass - insbesondere im Falle der Verwendung eines Saugfilters - das Medium unmittelbar zum Ansauganschluss der Pumpe zurückgeführt wird, so dass - wenn vorgesehen - das rückgeführte Medium den Saugfilter nicht noch einmal passieren muss und insoweit ein besserer energetischer Wirkungsgrad erreicht werden kann.

Allgemein wird vorgeschlagen, dass die Pumpenanordnung eine Druckmediumpumpe und eine Betriebsmediumpumpe umfasst. Von diesen Pumpen kann wenigstens eine, vorzugsweise wenigstens Betriebsmediumpumpe, durch die Antriebseinheit antreibbar sein. Dies ist aber nicht zwingend.

Eine bevorzugte Ausführungsform zeichnet sich dadurch aus, dass die Pumpenanordnung eine vorzugsweise durch die Antriebseinheit antreibbare Pumpe umfasst, auf deren Grundlage i) das Druckmedium für die Betätigung der Kupplungsanordnung bereitstellbar ist oder/und der Kupplungseinrichtung für den Betrieb unter Einwirkung des Betriebsmediums Betriebsmedium zuführbar ist sowie das Druckmedium für die Betätigung des Getriebes bereitstellbar ist, oder ii) das Druckmedium für die Betätigung der Kupplungsanordnung bereitstellbar ist und der Kupplungseinrichtung für den Betrieb unter Einwirkung des Betriebsmediums Betriebsmedium zuführbar ist. Es wird insbesondere daran gedacht, dass die Eingangsseite und die Ausgangsseite über eine Steuer/Regel-Ventilanordnung verbindbar ist, um durch Rückführung von Medium von der Ausgangsseite zur Eingangsseite das Medium auf der Ausgangsseite oder an einer ausgangsseitigen Abgabestelle auf einem Soll-Druck bereitzustellen oder/und durch Rückführung von Medium von der Ausgangsseite zur Eingangsseite einen Soll-Volumenstrom an Medium an der Ausgangsseite oder der ausgangsseitigen Abgabestelle bereitzustellen.

Allgemein wird vorgeschlagen, dass die der Pumpe zugeordnete Steuer/Regel-Ventilanordnung wenigstens ein Aufstau-Ventil zum Aufstauen des von der Pumpe geförderten Mediums auf ein höheres Druckniveau für die Betätigung der Kupplungsanordnung oder/und des Getriebes und wenigstens ein Druck-Steuer/Regel-Ventil oder wenigstens ein Volumen-Steuer/Regel-Ventil zur Rückführung von Medium von der Eingangsseite zur Ausgangsseite insbesondere für die Versorgung der Kupplungseinrichtung mit Betriebsmedium umfasst.

Spezieller wird vorgeschlagen, dass die Pumpenanordnung umfasst: wenigstens eine durch die Antriebseinheit antreibbare Druckmediumpumpe, deren Eingangsseite und Ausgangsseite über eine zugeordnete Steuer/Regel-Ventilanordnung verbindbar ist, um durch Rückführung von Druckmedium von der Ausgangsseite zur Eingangsseite das Druckmedium auf der Ausgangsseite oder an einer ausgangsseitigen Abgabestelle auf einem Soll-Druck bereitzustellen.

Ferner wird vorgeschlagen, dass die Pumpenanordnung (alternativ oder - vorzugsweise - zusätzlich zur durch die Antriebseinheit antreibbaren Druckmediumpumpe) umfasst: wenigstens eine durch die Antriebseinheit antreibbare Betriebsmediumpumpe, deren Eingangsseite und Ausgangsseite über eine zugeordnete Steuer/Regel-Ventilanordnung verbindbar ist, um durch Rückführung von Betriebsmedium von der Ausgangsseite zur Eingangsseite einen Soll-Volumenstrom an Betriebsmedium an der Ausgangsseite oder einer ausgangsseitigen Abgabestelle bereitzustellen.

Eine andere Möglichkeit ist, dass die Pumpenanordnung umfasst: eine durch die Antriebseinheit antreibbare Pumpe, deren Eingangsseite und Ausgangsseite über eine zugeordnete Steuer/Regel-Ventilanordnung verbindbar ist, um durch Rückführung von Medium von der Ausgangsseite zur Eingangsseite einen Soll-Volumenstrom an Medium an der Ausgangsseite oder einer ausgangsseitigen Abgabestelle oder/und das Druckmedium auf der Ausgangsseite oder an der ausgangsseitigen Abgabestelle auf einem Soll-Druck bereitzustellen, wobei die Pumpe sowohl als Druckmediumpumpe zur Bereitstellung des Mediums als Druckmedium für die Betätigung der Kupplungsanordnung als auch als Betriebsmediumpumpe zur Bereitstellung des Mediums als Betriebsmedium für die Zufuhr zur Kupplungseinrichtung dient.

Betreffend die Ausbildung der Steuer/Regel-Anordnung für die Einstellung des Soll-Volumenstroms bzw. Soll-Drucks wird allgemein vorgeschlagen, dass die einen ausgangsseitigen Mediumdruck an einem Steuereingang empfangende Steuer/Regel-Ventilanordnung als Druckbegrenzungsventil betreibbar ist.

Allgemein wird vorgeschlagen, dass die Steuer/Regel-Ventilanordnung wenigstens ein Wegeventil aufweist, das zwischen die Ausgangsseite und die Eingangsseite geschaltet oder schaltbar ist und unter dessen Vermittlung der Soll-Druck oder der Soll-Volumenstrom einstellbar ist. Eine weitere, speziellere Möglichkeit ist, dass die Steuer/Regel-Ventilanordnung wenigstens ein Druck-Steuer/Regelventil aufweist, das zwischen die Ausgangsseite und die Eingangsseite geschaltet oder schaltbar ist und unter dessen Vermittlung der Soll-Druck oder - über Einstellung einer Druckdifferenz oder eines Druckniveaus - der Soll-Volumenstrom einstellbar ist. Ferner kann man vorsehen, dass die Steuer/Regel-Ventilanordnung wenigstens ein Volumen-Steuer/Regelventil aufweist, das zwischen die Ausgangsseite und die Eingangsseite geschaltet oder schaltbar ist und unter dessen Vermittlung der Soll-Volumenstrom oder - über Einstellung eines Volumenstroms - der Soll-Druck einstellbar ist. In Zusammenhang mit diesem Weiterbildungsvorschlag wird bevorzugt daran gedacht, dass das vorzugsweise nach dem Druckwaage-Prinzip arbeitende Volumen-Steuer/Regelventil auf einen Differenzdruck zwischen zwei Steueranschlüssen des Volumen-Steuer/Regelventils anspricht und in Abhängigkeit zumindest vom Differenzdruck einen durch das Volumen-Steuer/Regelventil fließenden Volumenstrom einstellt. Beispielsweise kann das Volumen-Steuer/Regelventil in Abhängigkeit vom Differenzdruck und einem am Volumen-Steuer/Regelventil anliegenden Vorgabesignal einen durch das Volumen-Steuer/Regelventil fließenden Volumenstrom einstellen. Bei dem Vorgabesignal kann es sich beispielsweise um ein elektrisches oder hydraulisches Signal handeln.

Eine zweckmäßige Ausführungsform zeichnet sich dadurch aus, dass das Volumen-Steuer/Regelventil in Reihe oder parallel zu einer gewünschtenfalls verstellbaren Referenzdrossel oder Referenzblende zwischen die Ausgangsseite und die Eingangsseite oder/und zwischen die Ausgangsseite und die Kupplungseinrichtung geschaltet oder schaltbar ist, und dass ein an der Referenzdrossel oder Referenzblende abfallender Differenzdruck an den Steueranschlüssen angelegt oder anlegbar ist. Die Referenzdrossel oder Referenzblende kann verstellbar sein, ggf. auf elektrischem oder hydraulischem Wege, um durch Beeinflussung des Zusammenhangs zwischen dem abfallenden Differenzdruck und dem diesen erzeugenden Mediumstrom den Volumenstrom einzustellen. Insoweit kann die Beeinflussung des Volumenstroms über ein am Volumen-Steuer/Regelventil anliegendes Vorgabesignal entfallen.

Es kommt durchaus aber auch als zweckmäßig in Betracht, dass von den Pumpen wenigstens eine, vorzugsweise wenigstens die Druckmediumpumpe, als elektromotorisch antreibbare Pumpe ausgeführt ist.

Wie oben angesprochen, kann das Getriebe vermittels der Aktuatorik auf Grundlage von durch die Pumpenanordnung bereitgestelltem Druckmedium betätigbar sein. Bei dem Getriebe kann es sich um ein Automatgetriebe oder um ein automatisiertes Getriebe, im Falle einer Doppel-Kupplungseinrichtung speziell um ein Doppelkupplungsgetriebe (ggf. auch als Lastschaltgetriebe bezeichenbar) handeln.

Man kann vorsehen, dass das Getriebe vermittels der Aktuatorik auf Grundlage von durch die Druckmediumpumpe bereitgestelltem Druckmedium betätigbar ist. Eine andere, ebenfalls sehr zweckmäßige Möglichkeit ist, dass das Getriebe vermittels der Aktuatorik auf Grundlage von durch die Betriebsmediumpumpe bereitgestelltem Betriebsmedium, dass als Druckmedium für die Getriebebetätigung dient, betätigbar ist. Diese Ausführungsvariante bietet den großen Vorteil, dass die Getriebebetätigung keinen Druckabfall an der Kupplungseinrichtung betreffend deren Betätigung zur Folge hat, also keine möglicherweise ungünstige Rückwirkung der Getriebebetätigung auf die Kupplungsbetätigung auftreten kann.

Eine bevorzugte Ausführungsform zeichnet sich dadurch aus, dass die Druckmediumpumpe dafür ausgelegt ist, einen momentanen Haltedruck zum Halten eines momentanen Betätigungszustands der Kupplungsanordnung bereitzustellen, erforderlichenfalls unter Ausgleich etwaiger Druckmediumverluste durch Nachförderung von Druckmedium, und dass die Kupplungsanordnung auf Grundlage von durch die Betriebsmediumpumpe bereitgestelltem Betriebsmedium, das als Druckmedium für die Kupplungsbetätigung und ggf. für die Getriebebetätigung dient, von einem unbetätigten in einen betätigten Zustand überführbar ist.

Weiterbildend wird betreffend die Getriebebetätigung auf Grundlage von durch die Betriebsmediumpumpe bereitgestelltem Druckmedium vorgeschlagen, dass der Betriebsmediumpumpe ausgangsseitig eine Aufstaustufe zur Bereitstellung des Betriebsmediums auf einem für die Getriebebetätigung hinreichendem Druckniveau nachgeschaltet ist. Die Aufstaustufe kann wenigstens ein verstellbares Ventil oder/und wenigstens eine Drossel umfassen. Verallgemeinert wird vorgeschlagen, dass eine der Betriebsmediumpumpe oder Pumpe ausgangsseitig nachgeschaltete Aufstaustufe vorgesehen ist zur Bereitstellung des Betriebsmediums bzw. Druckmediums auf einem für die Getriebebetätigung bzw. Kupplungsbetätigung hinreichenden Druckniveau, wobei die Aufstaustufe vorzugsweise wenigstens ein verstellbares Ventil oder/und wenigstens eine Drossel umfasst.

Es wird insbesondere daran gedacht, dass die Aufstaustufe ein Schaltventil umfasst, das in einer ersten Stellung eine Verbindung zwischen der Betriebsmediumpumpe und der Kupplungseinrichtung freigibt und in einer zweiten Stellung die Verbindung zwischen der Betriebsmediumpumpe und der Kupplungseinrichtung unterbricht oder drosselt.

Zur Aufstaustufe bzw. zum Schaltventil kann ein Druckbegrenzungsventil vorteilhaft parallel geschaltet sein. Eine Möglichkeit ist, dass die Aufstaustufe bzw. der Schaltventil der Steuer/Regel-Ventilanordnung oder zumindest einem Ventil derselben nachgeschaltet ist. Eine andere, ebenfalls vorteilhafte Möglichkeit ist, dass die Aufstaustufe bzw. das Schaltventil der Steuer/Regel-Ventilanordnung oder zumindest einem Ventil derselben vorgeschaltet ist.

Ferner wird vorgeschlagen, dass wenigstens ein Ventil der Steuer/Regel-Ventilanordnung wahlweise als Steuer/Regel-Ventil oder als Aufstaustufe betreibbar ist.

Allgemein wird vorgeschlagen, dass das oben angesprochene Aufstauventil oder allgemein wenigstens ein Ventil der Aufstaustufe als Druck-Steuer/Regelventil oder Druck-Begrenzungsventil ausgeführt ist, vorzugsweise als Proportional-Druck-Steuer/Regelventil oder Proportional-Druck-Begrenzungsventil. Eine bevorzugte Ausgestaltung zeichnet sich dadurch aus, dass mittels des Aufstauventils bzw. des Ventils der Aufstaustufe ein Betätigungsdruckniveau für die Getriebebetätigung oder/und die Betätigung der Kupplungsanordnung einstellbar ist, ggf. um einen Betätigungskraftbereich einzustellen, und dass mittels wenigstens einem nachgeschalteten oder nachschaltbaren Ventils, ggf. eines Wegeventils oder - vorzugsweise - Proportional-Wegeventils, ein Betätigungs-Volumenstrom einstellbar ist, ggf. um eine Betätigungsgeschwindigkeit einzustellen.

Man kann vorteilhaft vorsehen, dass ein der Getriebebetätigung zugeordneter Hydrauliksystemabschnitt von einem der Betätigung der Kupplungsanordnung oder/und der Versorgung der Kupplungseinrichtung mit Betriebsmedium zugeordneten, die Pumpenanordnung aufweisenden Hydrauliksystemabschnitt hydraulisch abkoppelbar ist. Hierzu wird speziell vorgeschlagen, dass der der Getriebebetätigung zugeordnete Hydrauliksystemabschnitt vermittels eines vorzugsweise von einem anliegenden Hydraulikdruck betätigbaren Ventils an dem die Pumpenanordnung aufweisenden Hydrauliksystemabschnitt hydraulisch ankoppelbar und von diesem abkoppelbar ist. Insbesondere kann man vorteilhaft vorsehen, dass an einem Steuereingang des vorzugsweise als Schaltventil ausgeführten Ventils ein momentan im die Pumpenanordnung aufweisenden Hydrauliksystemabschnitt herrschender Betriebsdruck anliegt, und dass das Schaltventil eine Hydraulikverbindung zwischen den Hydrauliksystemabschnitten herstellt, wenn der Betriebsdruck eine Druckschwelle übersteigt, und die Hydraulikverbindung unterbricht, wenn der Betriebsdruck kleiner als die/eine Druckschwelle ist. Eine andere Möglichkeit ist, dass das Ventil als Druck-Steuer/Regelventil ausgeführt ist.

Gemäß einer Ausführungsvariante ist vorgesehen, dass wenigstens ein elektrisch ansteuerbares Steuer/Regel-Ventil zur Erzeugung eines Steuer/Regel-Drucks in wenigstens zwei vorgegebenen oder vorgebbaren Druckniveaubereichen oder auf wenigstens zwei vorgegebenen oder vorgebbaren Druckniveaus vorgesehen ist, und dass das Schaltventil und wenigstens ein Ventil der Steuer/Regel-Ventilanordnung als auf Grundlage des daran anliegenden Steuer/Regeldrucks ansteuerbare Ventile ausgeführt sind. Weiterbildend wird vorgeschlagen, dass das Ventil der Steuer/Regel-Ventilanordnung auf Grundlage eines ersten, vorzugsweise niedrigeren Druckniveaubereichs bzw. Druckniveaus und das Schaltventil auf Grundlage eines zweiten, vorzugsweise höheren Druckniveaubereichs bzw. Druckniveaus ansteuerbar oder betätigbar ist. Das Ventil der Steuer/Regel-Ventilanordnung kann auf Grundlage eines dritten, vorzugsweise noch höheren Druckniveaubereichs bzw. Druckniveaus ansteuerbar oder betätigbar sein.

Betreffend eine oben schon angesprochene Ausführungsvariante wird weiterbildend vorgeschlagen, dass wenigstens ein elektrisch ansteuerbares Steuer/Regel-Ventil zur Erzeugung eines Steuer/Regel-Drucks in wenigstens zwei vorgegebenen oder vorgebbaren Druckniveaubereichen oder auf wenigstens zwei vorgegebenen oder vorgebbaren Druckniveaus vorgesehen ist, und dass das wahlweise als Steuer/Regel-Ventil oder als Aufstaustufe betreibbare Ventil als auf Grundlage des daran anliegenden Steuer/Regeldrucks ansteuerbares Ventil ausgeführt ist. Man kann in diesem Zusammenhang vorteilhaft vorsehen, dass das wahlweise als Steuer/RegelVentil oder Aufstaustufe betreibbare Ventil auf Grundlage eines ersten, vorzugsweise niedrigeren Druckniveaubereichs bzw. Druckniveaus als Steuer/Regel-Ventil arbeitet und auf Grundlage eines zweiten, vorzugsweise höheren Druckniveaubereichs bzw. Druckniveaus als Aufstaustufe arbeitet.

Allgemein wird vorgeschlagen, dass die Aufstaustufe auf Grundlage eines anliegenden Steuer/Regel-Drucks oder/und auf elektrischem Wege aktivierbar und deaktivierbar ist.

Die Druckmediumpumpe und die Betriebsmediumpumpe können eine gemeinsame Antriebswelle aufweisen, die mit der Antriebseinheit zum Drehantrieb gekoppelt oder koppelbar ist. Durch die gemeinsame Antriebswelle ergeben sich nicht unbeachtliche Kostenvorteile (Bauteileersparnis), und es resultiert ein vergleichsweise geringer Bauraumbedarf. In diesem Zusammenhang ist es besonders bevorzugt, dass die Pumpenanordnung eine als Einheit handhabbare Pumpeneinheit aufweist, die die Druckmediumpumpe und die Betriebsmediumpumpe enthält. Neben vergleichsweise geringen Herstellungskosten resultieren ferner auch vergleichsweise geringe Montagekosten bei Montage der Pumpeneinheit am bzw. im Antriebsstrang. Besonders vorteilhaft ist in diesem Zusammenhang, wenn die Druckmediumpumpe und die Betriebsmediumpumpe ein gemeinsames Pumpengehäuse aufweisen.

Wenigstens ein Ventil der der Druckmediumpumpe zugeordneten Steuer/Regel-Ventilanordnung oder/und wenigstens ein Ventil der Betriebsmediumpumpe zugeordneten Steuer/Regel-Ventilanordung kann vorteilhaft Bestandteil der Pumpeneinheit sein. Ferner kann - wenn vorgesehen - die Aufstaustufe, oder wenigstens ein Ventil oder wenigstens eine Drossel der Aufstaustufe, Bestandteil der Pumpeneinheit sein.

Die Steuer/Regel-Ventilanordnung bzw. die der der Druckmediumpumpe zugeordnete Steuer/Regel-Ventilanordnung oder/und die der Betriebsmediumpumpe zugeordneten Steuer/Regel-Ventilanordnung, kann wenigstens ein elektrisch oder - vorzugsweise - auf Grundlage eines daran anliegenden Steuer/Regeldrucks ansteuerbares Steuer/Regel-Ventil umfassen. Es wird in diesem Zusammenhang nach einem Ansatz vorgeschlagen, dass ein ausgangsseitiger Mediumdruck, insbesondere der Druckmediumdruck bzw. Betriebsmediumdruck auf der Ausgangsseite oder an der Abgabestelle der Druckmediumpumpe bzw. Betriebsmediumpumpe, an dem bzw. an einem Steuer/Regel-Ventil als Steuer/Regeldruck angelegt oder anlegbar ist, um den Volumenstrom oder/und Druck des Mediums, insbesondere Druckmediums bzw. Betriebsmediums, zu steuern oder zu regeln. Ferner wird in diesem Zusammenhang nach einem anderen Ansatz vorgeschlagen, dass aus einem ausgangsseitigen Mediumdruck, insbesondere aus dem Druckmediumdruck auf der Ausgangsseite oder an der Abgabestelle der Druckmediumpumpe, mittels wenigstens eines weiteren, elektrisch ansteuerbaren Steuer/Regel-Ventils der Steuer/Regeldruck erzeugbar ist, der an dem bzw. an einem Steuer/RegelVentil angelegt oder anlegbar ist, um den Volumenstrom oder/und Druck des Mediums, insbesondere den Volumenstrom des Betriebsmediums bzw. den Druck des Druckmediums, zu steuern oder zu regeln.

In der Regel wird es sinnvoll sein, eine Druckbegrenzungsfunktion vorzusehen. Nach einem Ansatz wird hierzu vorgeschlagen, dass ein ausgangsseitiger Mediumdruck, insbesondere der Druckmediumdruck bzw. Betriebsmediumdruck auf der Ausgangsseite oder an der Abgabestelle der Druckmediumpumpe bzw. Betriebsmediumpumpe, an dem bzw. an einem Steuer/Regel-Ventil als Steuer/Regeldruck angelegt oder anlegbar ist, um die Druckbegrenzungsfunktion durch bedarfsweises Öffnen der Verbindung zwischen der Eingangsseite und der Ausgangsseite vorzusehen. Weiterbildend wird vorgeschlagen, dass der ausgangsseitige Mediumdruck über ein Rückschlagventil oder/und ein Druckbegrenzungsventil am Steuer/Regel-Ventil anlegbar ist.

Nach einem anderen Ansatz wird vorgeschlagen, dass wenigstens ein Druckbegrenzungsventil vorgesehen ist, über das bedarfsweise eine Rückführverbindung zwischen Eingangsseite und Ausgangsseite freigebbar ist, um die Druckbegrenzungsfunktion vorzusehen.

Es kann vorteilhaft wenigstens ein ausgangsseitig der Pumpenanordnung angeordneter Drucksensor vorgesehen sein, der vorteilhaft in die Pumpeneinheit integriert sein kann. Ferner kann vorteilhaft wenigstens ein ausgangsseitig der Pumpenanordnung angeordneter Mediumspeicher vorgesehen sein, der als Druckspeicher bzw. Volumenspeicher für Druckmedium oder Betriebsmedium dient. Der Mediumspeicher kann in die Pumpeneinheit integriert sein.

Betreffend das Getriebe wird beispielsweise daran gedacht, dass dieses ein einem ersten Satz von Getriebegängen zugeordnetes erstes Teilgetriebe und ein einem zweiten Satz von Getriebegängen zugeordnetes zweites Teilgetriebe aufweist, die zumindest im Falle einer Doppel- oder Mehrfach-Kupplungseinrichtung vorzugweise unabhängig voneinander betätigbar sind, um eine Lastschaltfunktion vorzusehen. Betreffend die Getriebebetätigung kann vorgesehen sein, dass wenigstens eine Schaltstange des Getriebes oder zumindest eines der Teilgetriebe mittels einer dieser zugeordneten Kraftzylinderanordnung auf Grundlage zugeführten Druckmediums axial verstellbar ist. Dabei kann die Kraftzylinderanordnung einen direkt oder indirekt mit der Schaltstange gekoppelten oder koppelbaren doppelt wirkenden Zylinder aufweisen.

Eine spezielle, sehr vorteilhafte Ausführungsform zeichnet sich dadurch aus, dass der doppelt wirkende Zylinder als Differentialzylinder ausgeführt oder betreibbar ist, wobei für eine axiale Verstellung der Schaltstange in einer axialen Richtung ein Kolben des Differentialzylinders auf beiden Seiten mit Druckmedium beaufschlagbar und für eine axiale Verstellung der Schaltstange in die andere axialer Richtung der Kolben nur auf einer Seite, vorzugsweise auf der Seite mit der kleineren Beaufschlagungsfläche, mit Druckmedium beaufschlagbar ist. Dabei ist insbesondere ein Flächenverhältnis von etwa zwei zu eins der Beaufschlagungsfläche der beiden Kolbenseiten vorteilhaft. Man kann dann nämlich jeweils auf Grundlage des gleichen Drucks gleiche Betätigungskräfte für beide Betätigungsrichtungen erreichen.

Eine andere, ebenfalls zweckmäßige Möglichkeit ist, dass die Kraftzylinderanordnung zwei direkt oder indirekt mit der Schaltstange gekoppelte oder koppelbare einfach wirkende Zylinder aufweist, von denen der eine für axiale Verstellung der Schaltstange in einer axialen Richtung mit Druckmedium beaufschlagbar und der andere für axiale Verstellung der Schaltstange in die andere axialer Richtung mit Druckmedium beaufschlagbar ist.

Eine sehr vorteilhafte Möglichkeit ist, dass mehreren Schaltstangen des Getriebes bzw. Teilgetriebes jeweils eine eigene Kraftzylinderanordnung, vorzugsweise jeweils umfassend einen direkt oder indirekt mit der Schaltstange gekoppelten oder koppelbaren doppelt wirkenden Zylinder, zur axialen Verstellung zugeordnet ist.

Betreffend die Betätigung der Schaltstangen in axialer Richtung wird vorgeschlagen, dass mehreren zur axialen Verstellung wenigstens einer zugeordneten Schaltstangen des Getriebes dienenden Kraftzylinderanordnungen jeweils eine eigene Steuer/Regel-Ventilanordnung zur gesteuerten oder geregelten Zufuhr oder/und Abfuhr von Druckmedium zugeordnet ist. Demgegenüber ist es aber bevorzugt, dass mehreren zur axialen Verstellung wenigstens einer zugeordneten Schaltstangen des Getriebes dienenden Kraftzylinderanordnungen eine gemeinsame Steuer/Regel-Ventilanordnung zur gesteuerten oder geregelten Zufuhr bzw. Abfuhr von Druckmedium zugeordnet ist, und dass mittels einer Schaltventilanordnung jede der Kraftzylinderanordnungen für eine Zufuhr oder/und Abfuhr von Druckmedium auswählbar ist durch Verbindung mit der gemeinsamen Steuer/Regel-Ventilanordnung oder mit einem Druckmediumabfluss oder einer Druckmediumaufnahme über die Schaltventilanordnung. Durch Verwendung einer bzw. einer jeweiligen Steuer/Regel-Ventilanordnung in Zuordnung zu mehreren Schaltstangen ergeben sich Kostenvorteile, insbesondere wenn Proportional-Druckregelventile oder dergleichen eingesetzt werden sollen.

Die (jeweilige) Steuer/Regel-Ventilanordnung kann vorteilhaft zwei Steuer/Regel-Ventile aufweisen, von denen das eine die (jeweilige) Kraftzylinderanordnung bzw. die ausgewählte Kraftzylinderanordnung (im Falle einer Gassenauswahlmechanik) für eine axiale Verstellung der Schaltstange in einer ersten Axialrichtung und das andere die Kraftzylinderanordnung für eine axiale Verstellung der Schaltstange in einer zur ersten Axialrichtung entgegengesetzten Axialrichtung mit Druckmedium beaufschlagt.

Man kann mehrere Kraftzylinderanordnungen vorsehen, die einander paarweise zugeordnet sind. Hierzu wird speziell vorgeschlagen, dass die beiden Kraftzylinderanordnungen eines Paares mittels wenigstens eines diesen gemeinsam zugeordneten Schaltventils, vorzugsweise wenigstens eines 3/2-Wege-Ventils, für eine Beaufschlagung mit Druckmedium, insbesondere im Sinne einer Verstellung der betreffenden Schaltstange in einer ausgewählten Axialrichtung, oder/und für eine Abfuhr von Druckmedium alternativ auswählbar sind. Es wird vor allem daran gedacht, dass wenigstens eine Schaltstange des ersten Teilgetriebes und wenigstens eine Schaltstange des zweiten Teilgetriebes das (jeweilige) Paar definieren.

Eine vorteilhafte Möglichkeit zeichnet sich dadurch aus, dass mehrere Kraftzylinderanordnungen vorgesehen sind, die in wenigstens zwei Gruppen gruppiert sind, derart, dass jede Gruppe wenigstens eine Kraftzylinderanordnung umfasst, und dass eine jeweilige Gruppe von Kraftzylinderanordnungen mittels wenigstens eines dieser zugeordneten Schaltventils, vorzugsweise wenigstens eines X/Y-Wege-Ventils, für eine Beaufschlagung mit Druckmedium auswählbar ist. Dabei kann man vorteilhaft vorsehen, dass im Falle eines X/Y-Wege-Ventils die Zahl X der Anzahl von Gruppen multiplikativ erhöht um den Faktor 2 oder um den Faktor 4 und die Zahl Y der Anzahl von Gruppen entspricht.

Weiterbildend wird vorgeschlagen, dass zwischen dem Schaltventil und jeder der Gruppen von Kraftzylinderanordnungen jeweils wenigstens ein der betreffenden Gruppe zugeordnetes weiteres Schaltventil, vorzugsweise wenigstens ein weiteres X/Y-Schaltventil, angeordnet ist, mittels dem die beaufschlagbaren Druckräume der betreffenden Gruppe für ein Beaufschlagung mit Druckmedium oder/und für eine Abfuhr von Druckmedium alternativ auswählbar sind. Dabei kann man vorteilhaft vorsehen, dass im Falle eines weiteren X/Y-Wege-Ventils die Zahl X der Anzahl der einer Schaltstange zugeordneten, mit Druckmedium beaufschlagbaren Druckräumen der betreffenden Gruppe multiplikativ erhöht um den Faktor 4 und die Zahl Y der Anzahl von über die Gruppe von Kraftzylinderanordnungen betätigbaren Schaltstangen entspricht.

Eine andere, ebenfalls praktisch und auch hinsichtlich der Kosten vorteilhafte Möglichkeit ist, dass mehrere Kraftzylinderanordnungen vorgesehen sind, denen jeweils wenigstens ein eigenes Schaltventil, vorzugsweise genau ein eigenes 4/2-Wege-Ventil, zugeordnet ist, wobei die Kraftzylinderanordnungen mittels des zugeordneten Schaltventils jeweils für eine Beaufschlagung mit Druckmedium, insbesondere im Sinne einer Verstellung der betreffenden Schaltstange in einer ausgewählten Axialrichtung, oder/und für eine Abfuhr von Druckmedium auswählbar sind. Auf diese Art und Weise kann ebenfalls eine gemeinsame Steuer/Regel-Ventilanordnung vorteilhaft in Zuordnung zu mehreren Schaltstangen eingesetzt werden.

Man kann wenigstens einen Drucksensor zur Erfassung eines momentanen Druckmediumdrucks oder Betriebsmediumdrucks vorsehen. Eine bevorzugte Ausgestaltung zeichnet sich dadurch aus, dass der Drucksensor über eine Ventilanordnung mit mehreren Messstellen des Hydrauliksystems alternativ in Messverbindung bringbar ist. Weiterbildend wird vorgeschlagen, dass die Ventilanordnung wenigstens ein druckgesteuertes Ventil aufweist, um eine selbsttätige Umschaltung zwischen mehreren Messstellen vorzusehen. Alternativ oder zusätzlich wird ferner vorgeschlagen, dass die Ventilanordnung wenigstens ein elektrisch oder hydraulisch ansteuerbares Ventil aufweist, um eine wahlweise oder/und selbsttätige Umschaltung zwischen mehreren Messstellen oder zwischen mehreren Gruppen von Messstellen vorzusehen. Unabhängig davon, wie im Detail ausgeführt, ist die Zuordnung eines Drucksensors zu mehreren Messstellen kostensparend, da ein einzelner Sensor mehrere Einzelsensoren ersetzen kann.

Erfindungsgemäß ist die Kupplungsanordnung eine nasslaufende Kupplungsanordnung. Erfindungsgemäß ist der Betrieb unter Einwirkung des Betriebsmediums ein nasslaufender Betrieb und das Betriebsmedium eine Betriebsflüssigkeit, ggf. Kühlflüssigkeit. Die Kupplungsanordnung kann als Lamellen-Kupplungsanordnung ausgebildet sein.

Das Druckmedium ist ein hydraulisches Druckmedium, insbesondere ein Hydrauliköl, das auch als Betriebsflüssigkeit dient.

Wie schon erwähnt, kann die Kupplungseinrichtung als Mehrfach-Kupplungseinrichtung, insbesondere Doppel-Kupplungseinrichtung, ausgeführt sein. Es wird in diesem Zusammenhang insbesondere daran gedacht, dass die Kupplungseinrichtung eine erste Kupplungsanordnung, der wenigstens ein erster Nehmerzylinder zugeordnet ist, und eine zweite Kupplungsanordnung, der wenigstens ein zweiter Nehmerzylinder angeordnet ist, aufweist, wobei den beiden Nehmerzylindern unabhängig voneinander von der Pumpenanordnung bereitgestelltes Medium als Druckmedium zuführbar ist.

Erfindungsgemäß ist vorgesehen, dass die Aktuatorik wenigstens einen doppelt wirkenden Betätigungszylinder aufweist, dem wahlweise in Zuordnung zu einem ersten Zylinderdruckraum Druckmedium zuführbar und von dem wahlweise in Zuordnung zu einem zweiten Zylinderraum Druckmedium abführbar ist. Es wird in diesem Zusammenhang insbesondere daran gedacht, dass mehreren doppelt wirkenden Betätigungszylindern der Aktuatorik wenigstens ein Druck-Steuer/Regel-Ventil, vorzugsweise wenigstens zwei Druck-Steuer/Regel-Ventile zugeordnet ist/sind, wobei mittels einer die Betätigungszylinder und das Druck-Steuer/Regel-Ventil bzw. die Druck-Steuer/Regel-Ventile verbindenden Auswahlanordnung die Betätigungszylinder wahlweise für eine Betätigung in einer ersten Betätigungsrichtung oder für eine Betätigung in einer zweiten, zur ersten Betätigungsrichtung entgegengesetzten Betätigungsrichtung auswählbar sind. Weiterbildend wird vorgeschlagen, dass bei einem ausgewählten doppelt wirkenden Betätigungszylinder der erste Zylinderraum, dem für eine Betätigung in der ersten Betätigungsrichtung Druckmedium zuführbar und aus dem für eine Betätigung in der zweiten Betätigungsrichtung Druckmedium abführbar ist, über die Auswahlanordnung mit einem zugeordneten ersten Druck-Steuer/Regel-Ventil und der zweite Zylinderraum, dem für eine Betätigung in der zweiten Betätigungsrichtung Druckmedium zuführbar und aus dem für eine Betätigung in der ersten Betätigungsrichtung Druckmedium abführbar ist, über die Auswahlanordnung mit einem zugeordneten zweiten Druck-Steuer/Regel-Ventil verbunden ist. Man kann in diesem Zusammenhang vorteilhaft vorsehen, dass mehrere doppelt wirkende Betätigungszylinder gleichzeitig auswählbar sind, wobei zu einem Zeitpunkt eine erste Gruppe von Betätigungszylindern auswählbar ist, unter Nichtauswahl oder Aufhebung der Auswahl einer zweiten Gruppe von Betätigungszylindern.

Eine andere vorteilhafte Möglichkeit ist, dass von den doppelt wirkenden Betätigungszylindern zu einem Zeitpunkt nur einer auswählbar ist, unter Aufhebung der Auswahl eines vorangehend ausgewählten Betätigungszylinders.

Weiterbildend wird ferner vorgeschlagen, dass die Aktuatorik wenigstens einen einfach wirkenden Betätigungszylinder aufweist, dem wahlweise Druckmedium zur Betätigung zuführbar bzw. von dem wahlweise Druckmedium abführbar ist. Die Aktuatorik kann vorteilhaft mehrere einfach wirkende Betätigungszylinder aufweisen, die mittels einer Auswahlanordnung oder mittels der vorstehend schon angesprochenen Auswahlanordnung wahlweise für eine Betätigung auswählbar sind. In diesem Zusammenhang wird vor allem daran gedacht, dass bei einem ausgewählten einfach wirkenden Betätigungszylinder dessen Zylinderraum mit einer Druckmediumquelle oder einem mit der Druckmediumquelle verbundenen Druck-Steuer/Regel-Ventil verbunden ist. Es können mehrere einfach wirkende Betätigungszylinder gleichzeitig auswählbar sein, wobei zu einem Zeitpunkt eine erste Gruppe von Betätigungszylindern auswählbar ist, unter Nichtauswahl oder Aushebung der Auswahl einer zweiten Gruppe von Betätigungszylindern. Man kann vorteilhaft aber auch vorsehen, dass von den einfach wirkenden Betätigungszylindern zu einem Zeitpunkt nur einer auswählbar ist, unter Aufhebung der Auswahl eines vorangehend ausgewählten Betätigungszylinders.

Sind mehrere doppelt wirkende Zylinder und mehrere einfach wirkende Zylinder vorgesehen, so ist es bevorzugt, dass den doppelt wirkenden Zylindern und den einfach wirkenden Zylindern eine gemeinsame Auswahlanordnung zugeordnet ist.

Die den doppelt wirkenden Zylindern zugeordnete Auswahlanordnung bzw. die den einfach wirkenden Zylindern zugeordnete Auswahlanordnung bzw. die den doppelt wirkenden und den einfach wirkenden Zylindern zugeordnete gemeinsame Auswahlanordnung kann zweckmäßig zwischen mehreren Auswahlzuständen umschaltbar sein, auf Grundlage von an wenigstens einem Ventil der Auswahlanordnung anlegbarem Druckmedium. Es wird in diesem Zusammenhang beispielsweise daran gedacht, dass wenigstens ein erster Auswahlzustand der Auswahlanordnung anliegendem Druckmedium und wenigstens ein zweiter Auswahlzustand der Auswahlanordnung nicht anliegendem Druckmedium entspricht. Ferner wird daran gedacht, dass mehrere Auswahlzustände der Auswahlanordnung unterschiedlichen Druckniveaus des anliegenden Druckmediums entsprechen. Die Druckniveaus können mittels eines Druck-Steuer/RegelVentils einstellbar sein.

Die den doppelt wirkenden Zylindern zugeordnete Auswahlanordnung bzw. die den einfach wirkenden Zylindern zugeordnete Auswahlanordnung bzw. die den doppelt wirkenden Zylindern und den einfach wirkenden Zylindern gemeinsam zugeordnete Auswahlanordnung kann vorteilhaft wenigstens ein Schaltventil oder/und wenigstens ein Nachfolgeschieberventil umfassen.

Die Erfindung wird im Folgenden anhand von in den Figuren gezeigten Beispielen näher erläutert.
- Fig. 1 bis 9: zeigen Beispiele von Pumpenanordnungen mit zugehörigen Ventilanordnungen, die einerseits zur Druckölversorgung und andererseits zur Kühlölversorgung etwa im Zusammenhang mit einer nasslaufenden, hydraulisch betätigbaren Kupplungseinrichtung sowie ggf. einem hydraulisch betätigbaren Getriebe einsetzbar sind, ggf. als Teil eines erfindungsgemäßen Antriebsstrangs.
- Fig. 10 bis 15: zeigen Beispiele für einer nasslaufenden, hydraulisch betätigbaren Doppelkupplungseinrichtung und einem hydraulisch betätigbaren Doppelkupplungsgetriebe zugeordnete Hydrauliksysteme.
- Fig. 16: zeigt ein weiteres Beispiel für ein einer nasslaufenden, hydraulisch betätigbaren Doppelkupplungseinrichtung und einen hydraulisch betätigbaren Doppelkupplungsgetriebe zugeordnetes Hydrauliksystem.
- Fig. 17: zeigt ein Beispiel für eine Betätigungsanordnung zur Betätigung des Doppelkupplungsgetriebes, die im Zusammenhang mit dem Hydrauliksystem der Fig. 16 einsetzbar ist.
- Fig. 18: zeigt (bis auf weggelassene Zylindergehäuse) eine teilgeschnittene Ansicht auf die Anordnung der Fig. 17 in Sichtrichtung A, gemäß Schnittlinie A-A.
- Fig. 19: entspricht im Wesentlichen (bis auf ein weggelassenes Zylindergehäuse) einer teilgeschnittenen Ansicht der Anordnung der Fig. 17 in Sichtrichtung B, gemäß Schnittlinie B-B, wobei zusätzlich zugehörige Schaltstangen des Getriebes dargestellt sind.
- Fig. 20: entspricht im Wesentlichen (bis auf weggelassene Zylindergehäuse) einer perspektivischen Ansicht der Anordnung gemäß Fig. 17.
- Fig. 21-27: zeigen weitere Beispiele für einer nasslaufenden, hydraulisch betätigbaren Doppelkupplungseinrichtung und einem hydraulisch betätigbaren Doppelkupplungsgetriebe zugeordnete Hydrauliksysteme.
- Fig. 28-32: zeigen weitere Beispiele für einer nasslaufenden, hydraulisch betätigbaren Doppelkupplungseinrichtung und einen hydraulisch betätigbaren Doppelkupplungsgetriebe zugeordnete Hydrauliksysteme. Die Beispiele der Fig. 28 und 29 könnten Teil eines erfindungsgemäßen Antriebsstrangs sein.
- Fig.33: zeigt ein weiteres Beispiel für einen Getriebebetätigungsabschnitt eines einem hydraulisch betätigbaren Doppelkupplungsgetriebe zugeordneten Hydrauliksystems.
- Fig. 34: zeigt ein Beispiel einer beim Beispiel der Fig. 17 bis 20 alternativ verwendbaren Wählbetätigungsstange zur Erläuterung einer Ausführungsvariante der Betätigungsanordnung zur Betätigung des Doppelkupplungsgetriebes.
- Fig. 35: zeigt ein weiteres Beispiel für eine Betätigungsanordnung zur Betätigung des Doppelkupplungsgetriebes, die beispielsweise im Zusammenhang mit dem Hydrauliksystem der Fig. 16 oder einer der weiteren Varianten von Hydrauliksystemen einschließlich dem Hydrauliksystem der Fig. 33 einsetzbar ist.
- Fig. 36: zeigt schematisch eine teilgeschnittene Seitenansicht in axialer Richtung der Wählbetätigungsstange auf die Anordnung der Fig. 35.
- Fig. 37: zeigt ein im Wesentlichen dem Hydrauliksystem der Fig. 27 entsprechendes Hydrauliksystem mit einem gegenüber Fig. 27 und den anderen Beispielen verallgemeinerten Getriebebetätigungsabschnitt.
- Fig. 38: zeigt eine vorteilhafte Abwandlung des Hydrauliksystems der Fig. 37 mit einem der Kühlölpumpe zugeordneten Volumenstrom-Regelventil.
- Fig. 39: zeigt ein Beispiel, wie ein Volumenstrom-Regelventil prinzipiell ausgeführt sein könnte, und gibt in den Teilfiguren 39a und 39b zwei Verschaltungsmöglichkeiten eines derartigen Ventils in Zuordnung zu einer Pumpe und einer Versorgungsstelle an.
- Fig. 40: zeigt ein weiteres Beispiel für ein einer nasslaufenden, hydraulisch betätigbaren Doppelkupplungseinrichtung und einem hydraulisch betätigbaren Doppelkupplungsgetriebe zugeordnetes Hydrauliksystem, das mit sehr wenigen elektrischen Ventilen auskommt und dementsprechend sehr kostengünstig ist.
- Fig. 41: zeigt eine Abwandlung des Beispiels der Fig. 40, mit acht einfach wirkenden Betätigungszylindern an Stelle von vier Differential-Betätigungszylindern zur Getriebebetätigung.
- Fig. 42: zeigt ein weiteres Beispiel für ein Hydrauliksystem, das an Stelle von elektrisch angesteuerten Ventilen vorgesteuerte Ventile verwendet, mit jeweils zugeordnetem Vorsteuerventil.
- Fig. 43: zeigt eine Ausführungsvariante der Fig. 42 mit einem eingangsseitig anders ausgeführten Getriebebetätigungsabschnitt.

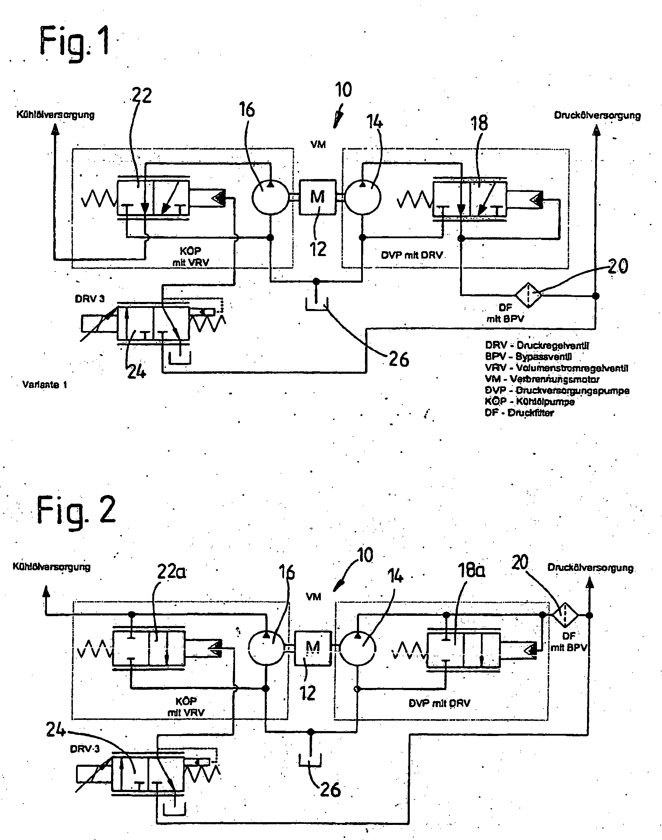

Ein Beispiel eines Kraftfahrzeug-Antriebsstrangs umfasst eine Antriebseinheit, beispielsweise eine Brennkraftmaschine, ein Doppelkupplungssystem und ein Doppelkupplungsgetriebe oder Lastschaltgetriebe, wobei das Doppelkupplungssystem eine zwischen der Antriebseinheit und dem Getriebe angeordnete Doppelkupplungseinrichtung aufweist, die zwei hydraulisch betätigbare nasslaufende Lamellen-Kupplungsanordnungen umfasst, die jeweils einer eigenen Getriebeeingangswelle zugeordnet sind. Zur Bestätigung der Doppelkupplungseinrichtung wird ein Druckmedium, beispielsweise ein hydraulisches Drucköl, auf einem bestimmten Druckniveau benötigt. Ferner ist im Betrieb den Lamellen-Kupplungsanordnungen ein Betriebsmedium, beispielsweise ein Kühlöl, zuzuführen, wobei als Kühlöl ggf. das Hydrauliköl verwendbar ist. Zur Bereitstellung des Kühlöls und des Drucköls können beispielsweise die Pumpenanordnungen der Fig. 1 bis 9 dienen. Die Pumpenanordnungen in den Fig. 1 bis 9 können ferner auch dazu dienen, Drucköl für die Betätigung des Getriebes, wenn dieses hydraulisch betätigbar ist, bereitzustellen. Die Pumpenanordnungen der Fig. 1 bis 9 können aber durchaus auch in anderem Zusammenhang vorteilhaft einsetzbar sein.

Den Beispielen der Fig. 1 bis 9 ist gemeinsam, dass die jeweilige Pumpenanordnung 10 zwei durch einen Motor, vorliegend den Verbrennungsmotor 12 des Antriebsstrangs, angetriebene Pumpen 14 und 16 umfasst. Die Pumpe 14 ist dafür ausgebildet, Drucköl auf einem vergleichsweise hohem Druckniveau bereitzustellen, das ausreicht, die Kupplungseinrichtung zu betätigen. Die Pumpe 16 ist dafür ausgebildet, einen vergleichsweise großen Volumenstrom an als Kühlöl dienendem Öl bereitzustellen, in der Regel auf einem gegenüber dem Druckniveau des Drucköls niedrigerem Druckniveau. Eine besonders bevorzugte Ausgestaltung der Pumpenanordnung 10 zeichnet sich dadurch aus, dass die beiden Pumpen 14 und 16 eine als Einheit handhabbare Pumpeneinheit bilden. Hierzu weisen die beiden Pumpen eine gemeinsame Antriebswelle auf, über die die beiden Pumpen durch den Verbrennungsmotor 12 angetrieben werden können. Die beiden Pumpen können ein gemeinsames Pumpengehäuse aufweisen und einen gemeinsamen Ansaugtrakt bzw. eine gemeinsame Ansaugleitung besitzen. Die im Folgenden näher beschriebenen Ventile, die zur Steuerung bzw. Regelung des Volumenstroms bzw. Abgabeöldrucks dienen, können ebenfalls Bestandteil der Pumpeneinheit sein, beispielsweise ins Pumpengehäuse integriert sein.

Gemäß Fig. 1 ist der Druckölpumpe 14 ein 3/2-Wege-Druckregelventil 18 zugeordnet, das auf einer Seite mit einer Federkraft beaufschlagt ist und auf der anderen Seite mit dem Systemdruck (Drucköldruck) beaufschlagt wird. In Abhängigkeit von der Stellung des Ventilschiebers wird ein Teil des von der Druckölpumpe 14 geförderten Öls zur Eingangsseite der Druckölpumpe 14 zurückgeführt. Das Druckregelventil 18 regelt so einen konstanten Systemdruck für die Druckölversorgung ein.

Gemäß dem Beispiel wird das für die Systemdruckversorgung bereitgestellte Drucköl nach dem Ventil 18 durch einen Druckfilter 20 geleitet, so dass nachfolgende Bauteile von möglichen Verschmutzungen geschützt sind. Alternativ oder zusätzlich könnte man auch einen Saugfilter in der Ansaugleitung vorsehen, wobei die Rückführung des Drucköls durch das Regelventil 18 zur Eingangsseite der Pumpe 14 vorzugsweise stromaufwärts des Saugfilters erfolgen würde, so dass das rückgeführte Drucköl den Saugfilter nicht noch einmal passieren muss.

Die Steuerung bzw. Regelung des Kühlölvolumenstroms erfolgt mittels eines 3/2-Volumenstromregelventils 22, das über ein 3/2-Wege-Druckregelventil 24 vorgesteuert wird, indem das Ventil 22 mit gegen die Federvorspannung des Ventilschiebers wirkenden Ansteuerdrücken beaufschlagt wird. Als Eingangsdruck für das Ventil 24 dient der Systemdruck für die Druckölversorgung. Gemäß der in Fig. 1 gezeigten Stellung des Ventils 24 liegt kein Steuerdruck am Ventil 22 an, so dass dieses einen maximalen Kühlölvolumenstrom durchlässt. Es wird also beispielsweise das gesamte von der Pumpe 16 geförderte Öl durch einen Kühler bzw. durch die Kupplungseinrichtung zur Kühlung der Kupplungsanordnungen gefördert. Wird durch entsprechende elektrische Ansteuerung des Ventils 24 der Steuerdruck auf den Schieber des Ventils 22 erhöht, so führt das Ventil 22 eine zunehmende Menge an Kühlöl zurück in den Ansaugtrakt der Pumpe 16. Abgabeseitig des Ventils 22, also auf der Kühlölversorgungsseite, kann ebenfalls ein Ölfilter in der Art des Filters 20 vorgesehen sein. Alternativ oder zusätzlich kann ein Ansaugfilter auf der Eingangsseite der Pumpe 16 vorgesehen sein, wobei vorzugsweise das durch das Ventil 22 rückgeführte Kühlöl stromaufwärts des Saugfilters zuströmt und dementsprechend den Saugfilter nicht noch einmal passieren muss. Vorteilhaft kann für die beiden Pumpen 14 und 16 ein gemeinsamer Saugfilter verwendet werden.

Erwähnt werden sollte, dass es aber durchaus auch in Betracht kommt, das durch das Ventil 18 bw. Ventil 22 rückgeführte Drucköl bzw. Kühlöl nicht direkt zur Eingangsseite bzw. in den Ansaugtrakt der betreffenden Pumpe zurückzuführen, sondern in das Ölreservoir 26, ggf. den Ölsumpf 26, aus dem die Pumpen 14 und 16 ansaugen.

Fig. 2 zeigt eine Ausführungsvariante, bei der zur Steuerung/Regelung des Drucks bzw. des Volumenstroms anstelle der 3/2-Wege-Ventile 18 und 22 etwas kostengünstigere 2/2-Wege-Ventile 18a und 22a eingesetzt sind. Ansonsten entspricht die Anordnung der Fig. 2 der Anordnung der Fig. 1.

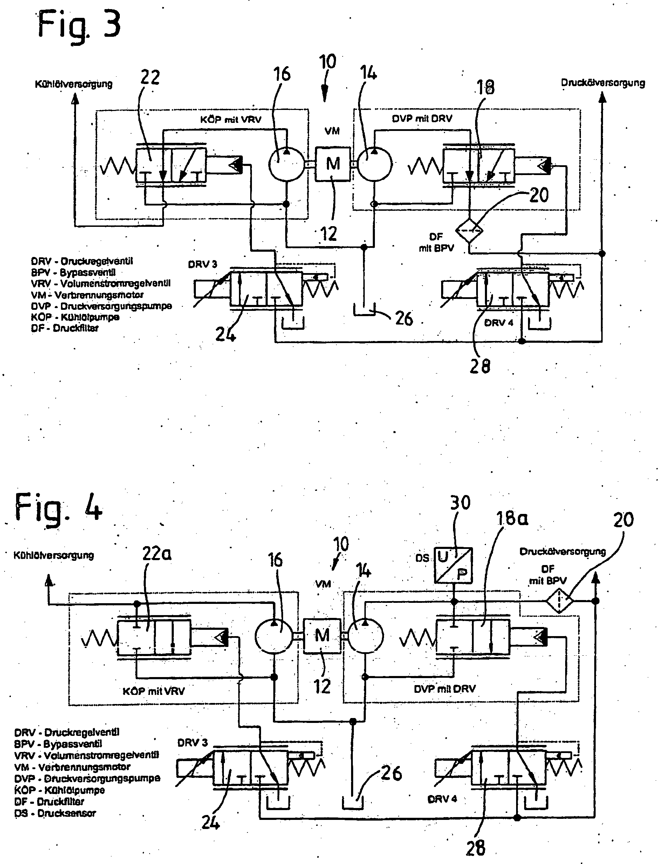

Fig. 3 zeigt eine Ausführungsvariante, die im Wesentlichen dem Beispiel der Fig. 1 entspricht, bei der aber auch für das 3/2-Wege-Druckregelventil 18 eine Vorsteuerung mittels eines elektrisch ansteuerbaren 3/2-Wege-Druckregelventils 28 vorgesehen ist, so dass der sich einstellende Systemdruck durch entsprechende Ansteuerung des Ventils 28 wählbar ist. Dies ist insbesondere deswegen sinnvoll, um den Systemdruck an einen momentan gerade benötigten Systemdruck anzupassen und so den Wirkungsgrad zu verbessern. Die schon gemäß Fig. 1 vorgesehene Einstellbarkeit des Kühlölvolumenstroms über entsprechende Ansteuerung des Ventils 24 ist insoweit besonders sinnvoll, als dass durch im Übermaß zugeführtes Kühlöl entstehende Schleppmomente in der Kupplungseinrichtung vermeidbar sind. Auch energetisch ist es vorteilhaft, nur gerade so viel Kühlöl zuzuführen, wie momentan aus thermischen Gründen benötigt wird.

Fig. 4 zeigt eine Ausführungsvariante, bei der - ähnlich wie bei Fig. 3 - die 3/2-Wege-Ventile 18 und 22 durch kostengünstigere 2/2-Wege-Ventile 18a und 22a ersetzt sind. Zusätzlich ist noch ein Drucksensor 30 auf der Abgabeseite der Pumpe 14 vorgesehen. Der Drucksensor 30 ermöglicht die exakte Messung des Versorgungsdrucks und ermöglicht eine genauere Einstellung des Druckniveaus durch entsprechende Ansteuerung des Ventils 28 und damit entsprechende Druckbeaufschlagung des Schiebers des Ventils 18a. Es kann insbesondere ein Druckregelkreis umfassend die Ventile 28, 18a und umfassend den Sensor 30, realisiert sein. Dies ist insoweit vorteilhaft, als dass die Ventile eine gewisse Hysterese aufweisen und eine reine Steuerung für manche Anwendungen zu ungenau ist. Ein entsprechender Drucksensor kann auch beim Beispiel der Fig. 3 vorteilhaft eingesetzt werden.

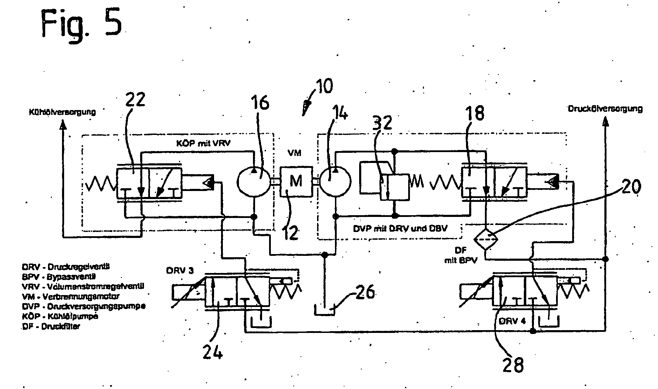

Das Beispiel der Fig. 5 entspricht weitgehend dem Beispiel der Fig. 3. Zur Systemdruckbegrenzung ist zusätzlich noch ein Druckbegrenzungsventil 32 parallel zum Druckregelventil 18 zwischen Eingangsseite und Ausgangsseite der Druckölpumpe 14 geschaltet, so dass auch im Falle eines Ausfalls der Ventile 18 und 28 der maximal zulässige Systemdruck abgesichert ist.

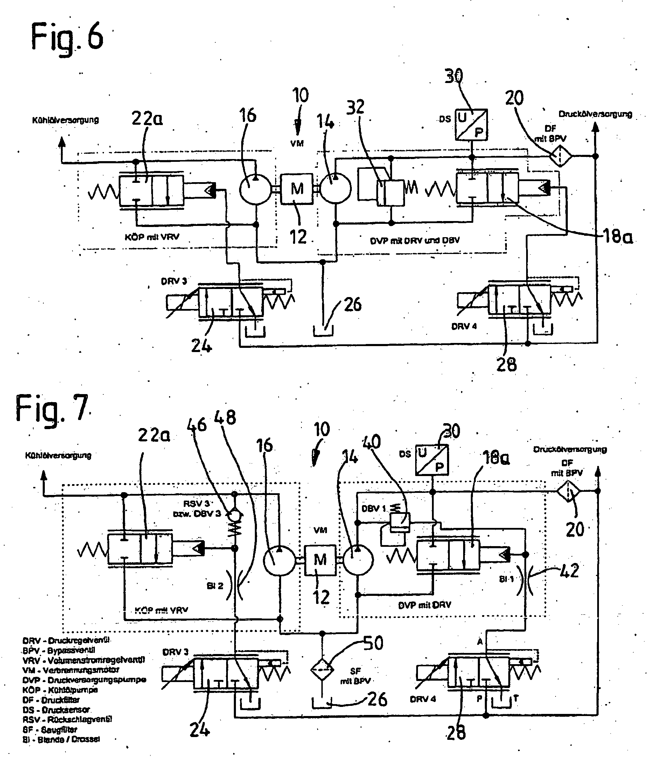

Das Beispiel der Fig. 6 entspricht im Wesentlichen dem Beispiel der Fig. 5. Zusätzlich ist noch ein Drucksensor 30 wie beim Beispiel der Fig. 4 vorgesehen. Mithilfe dieses Sensors lässt sich der Versorgungsdruck exakt messen und das Druckregelventil 18a über das Druckregelventil 28 genauer ansteuern. Es sei angemerkt, dass ein derartiger Drucksensor 30 auch beim Beispiel der Fig. 5 vorgesehen sein könnte.

Ein weiterer Unterschied zwischen Fig. 5 und Fig. 6 ist, dass die 3/2-Wege-Ventile 18 und 22 wiederum durch 2/2-Wegeventile 18a und 22a ersetzt sind.

Das Beispiel der Fig. 7 lässt sich zweckmäßig ausgehend vom Beispiel der Fig. 4 erläutern. Gegenüber dem Beispiel der Fig. 4 ist auf der Druckölversorgungsseite zusätzlich ein Druckbegrenzungsventil 40 eingebaut, das den Druckausgang der Druckölpumpe 14 mit dem Steuereingang des Druckregelventils 18a verbindet. Das Druckbegrenzungsventil 40 hat die Aufgabe, im Falle eines zu hohen Systemdrucks zu öffnen und einen entsprechenden Druck am Steuereingang des Ventils 18a anzulegen, so dass der Schieber des Druckregelventils 18a so betätigt wird, dass das Druckregelventil 18a die Ausgangsseite mit der Eingangsseite der Pumpe 14 verbindet und so den zu hohen Druck abbaut. Um ein Abfließen des über das Druckbegrenzungsventil 40 im Auslösefall in Richtung zum Steuereingang des Ventils 18a fließenden Öls über das Ventil 28 in das Ölreservoir zu verhindern, ist eine Blende oder Drossel 42 zwischen dem Steuereingang des Ventils 28a und dem Ventil 28 eingebaut. Die Blende oder Drossel 42 und das Ventil 28 sollten gemeinsam einen höheren Strömungswiderstand besitzen als das Druckbegrenzungsventil 40 samt dem Widerstand, der der Schieber des Ventils 18a dem anliegenden Drucköl entgegensetzt. Insbesondere sollte der hydraulische Widerstand im Druckregelventil 28 von A nach T so groß sein, dass die Feder des Schiebers des Druckregelventils 18a durch das über den Steuereingang einströmende Öl überdrückt werden kann. Gegebenenfalls kann zwischen dem Ausgang T des Druckregelventils 28 und dem Ölsumpf bzw. Ölreservoir noch eine weitere Drossel oder Blende eingesetzt werden. Zu erwähnen ist noch, dass das Druckbegrenzungsventil 40 auch als Einwegventil dient, das im normalen Betrieb kein Öl und im Auslösefall Öl nur in einer Richtung durchlässt.

Gegenüber der Ausführungsform der Fig. 5 bietet die Ausführungsform der Fig. 7 den Vorteil, dass das Druckbegrenzungsventil 40 kleiner sein und somit kostengünstiger gebaut und verbaut werden kann als das Druckbegrenzungsventil 32 gemäß Fig. 5. Gemäß Fig. 5 muss nämlich der gesamte geförderte Volumenstrom der Druckversorgungspumpe 14 durch das Druckbegrenzungsventil 32 zurück zum Pumpeneingang fließen, wohingegen nach Fig. 7 das Druckbegrenzungsventil 40 nur zur Betätigung des Druckregelventils 18a dient und dann der gesamte geförderte Volumenstrom der Druckversorgungspumpe 14 über das Druckregelventil 18a zurück zum Pumpeneingang fließen kann.

Auch auf der Kühlölversorgungsseite der Pumpenanordnung 10 ist nach Fig. 7 eine Begrenzungsschaltung vorgesehen. Anstelle eines Druckbegrenzungsventils ist gemäß der Darstellung in Fig. 7 ein Rückschlagventil 46 vorgesehen. Alternativ könnte aber auch ein Druckbegrenzungsventil eingesetzt werden, das in der Regel allerdings einen geringeren Öffnungsdruck als das Druckbegrenzungsventil 40 aufweisen müsste, weil der Druck des Kühlöls in der Regel geringer als der Systemdruck auf der Druckölversorgungsseite sein wird.

Im Falle des Einsatzes des Rückschlagventils 46 kann die Feder des Schiebers für das Volumenstromregelventil 22a mit einer gewissen Vorspannung derart eingebaut werden, dass die Vorspannung dem Druck entspricht, an dem das Volumenstromregelventil 22a beginnt, das von der Kühlölpumpe 16 geförderte Öl in den Ansaugtrakt zurückzuleiten, den Kühlölvolumenstrom also abzuregeln.

Zwischen dem Druckregelventil 24 und dem Steuereingang des Volumenstromregelventils 22a ist ähnlich wie die Drossel oder Blende 42 auf der Druckölseite eine Drossel oder Blende 48 eingebaut. Der Strömungswiderstand des Rückschlagventils 46 bzw. des hier alternativ vorgesehenen Druckbegrenzungsventils sollte kleiner sein als der Strömungswiderstand der Blende oder Drossel 48 samt dem Strömungswiderstand des Ventils 24 in Richtung zum Ölreservoir, so dass ein Abfließen des Öls vom Steuereingang des Volumenstromregelventils 22a in Richtung zum Tank verhindert wird.

Zwar ist - wie erwähnt - der Kühlöldruck in der Regel niedriger als der Drucköldruck. Gleichwohl ist es sinnvoll, einen maximalen Kühlöldruck abzusichern. Dies wird beim Beispiel der Fig. 7 vermittels des Volumenstromregelventils 22a erreicht, indem über die Ansteuerung vermittels des Rückschlagventils 46 bzw. des Druckbegrenzungsventils der Schieber des Volumenstromregelventils in Absteuerstellung bewegt wird. Es kommt durchaus aber auch in Betracht, ein zwischen Eingangsseite und Ausgangsseite der Kühlölpumpe 16 geschaltetes Druckbegrenzungsventil (vgl. Ventil 32 in Fig. 5) vorzusehen.

Durch die verschiedenen geschilderten Druckbegrenzungsfunktionen werden Fail-Save-Eigenschaften der betreffenden Schaltungsanordnung erreicht, die eine hohe Sicherheit gegen Beschädigungen durch zu hohen Druck geben.

Zur Fig. 7 ist noch darauf hinzuweisen, dass die Verwendung eines Saugfilters 50 in einer den beiden Pumpen 14 und 16 gemeinsamen Ansaugleitung gezeigt ist.

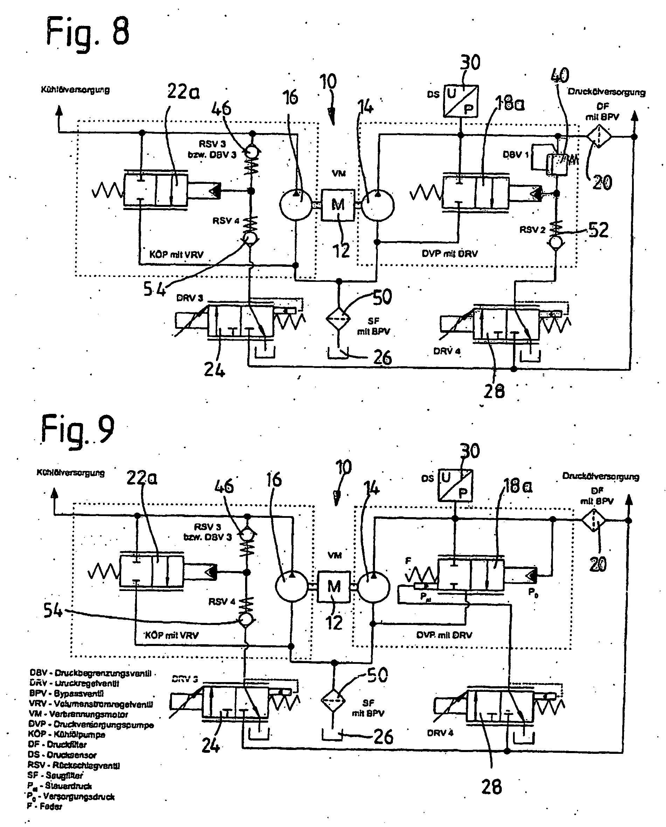

Das Beispiel der Fig. 8 entspricht im Wesentlichen dem Beispiel der Fig. 7. Anstelle der Blenden 42 und 48 sind allerdings Rückschlagventile 52 und 54 vorgesehen. Die Rückschlagventile bieten den Vorteil, dass sie kein Öl in der Gegenrichtung durchlassen, so dass kein Öl fälschlich zum Reservoir abfließen kann. Es brauchen deswegen keine speziellen Strömungswiderstände eingehalten werden. Allerdings sollten gewisse Leckagen etwa an den Schiebern des Druckregelventils 18a und des Volumenstromregelventils 22a oder an den Rückschlagventilen 52 und 54 vorgesehen werden, damit sich der auf die Schieber der Ventile 18a und 22a wirkende Öldruck wieder abbauen kann.

Beim Beispiel der Fig. 9 ist das Druckregelventil 18a der Druckversorgungspumpe 14 ähnlich wie beim Beispiel der Fig. 2 in Selbstregelung ausgeführt, indem der Schieber des Druckregelventils 18a von der einen Seite mit dem Systemdruck Pₒ beaufschlagt wird. Im Gegensatz zum Beispiel der Fig. 2 wirkt aber in entgegengesetzter Betätigungsrichtung zum Öldruck auf den Ventilschieber nicht nur eine Federvorspannkraft, sondern zusätzlich ein vom Druckregelventil 28 bereitgestellter Steuerdruck Pₛₜ. Die wirksamen Kolbenflächen des Schiebers in Bezug auf den Systemdruck Pₒ und den Steuerdruck Pₛₜ sind derart gewählt, dass die aus dem Versorgungsdruck Pₒ resultierende Federkraft in Abregelrichtung für den maximal zulässigen Systemdruck auf jeden Fall größer ist als die Federvorspannkraft und der maximal mögliche Steuerdruck Pₛₜ, so dass die Pumpe im Fehlerfall auf jeden Fall sicher abgeregelt wird. Im Fehlerfall steht also jedenfalls eine Druckregelfunktion entsprechend Fig. 2 zur Verfügung, wobei im Normalfall aber überdies eine Einstellung des resultierenden Öldruckniveaus vermittels des Ventils 28 möglich ist.

Allgemein ist darauf hinzuweisen, dass die Drucksensoren, die bei den verschiedenen Varianten zum Teil dargestellt sind, nicht zwingend erforderlich sind, aber zur Verbesserung der Regelgenauigkeit des Versorgungsdrucks durchaus sehr vorteilhaft sind. Wird kein Drucksensor verwendet, so können Kennlinien der verschiedenen Ventile in einer Steuerelektronik abgelegt werden und der Versorgungsdruck dann gesteuert eingestellt werden. Entsprechendes gilt für die Kühlölvolumenströme.

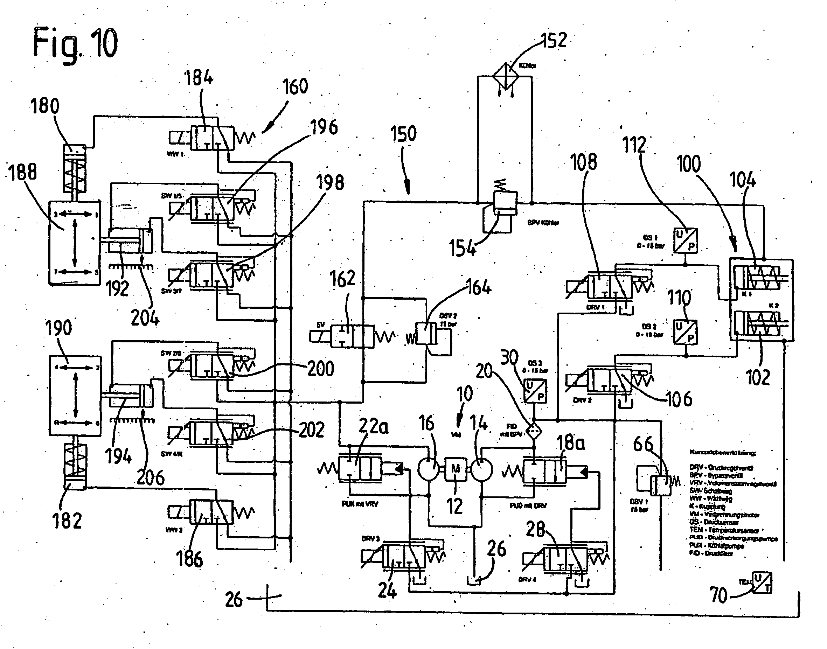

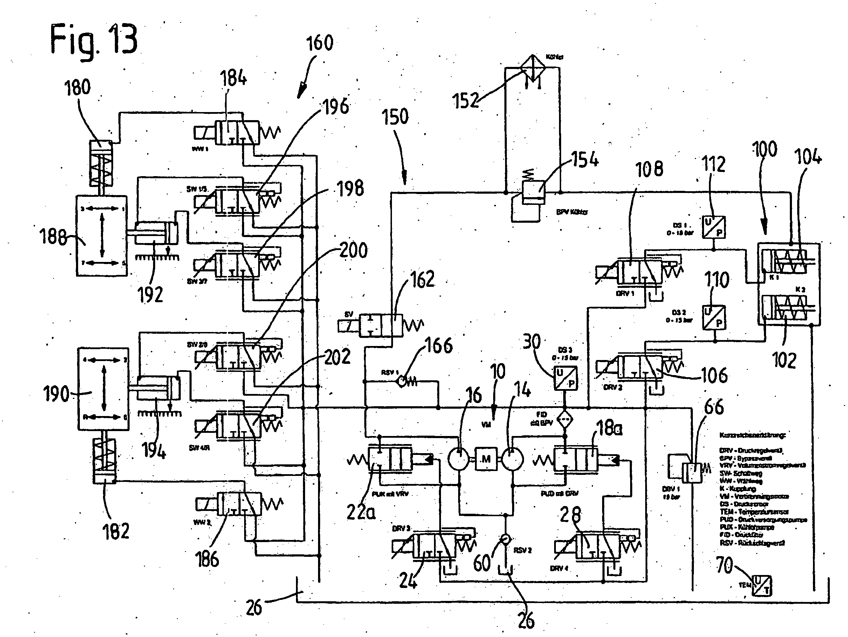

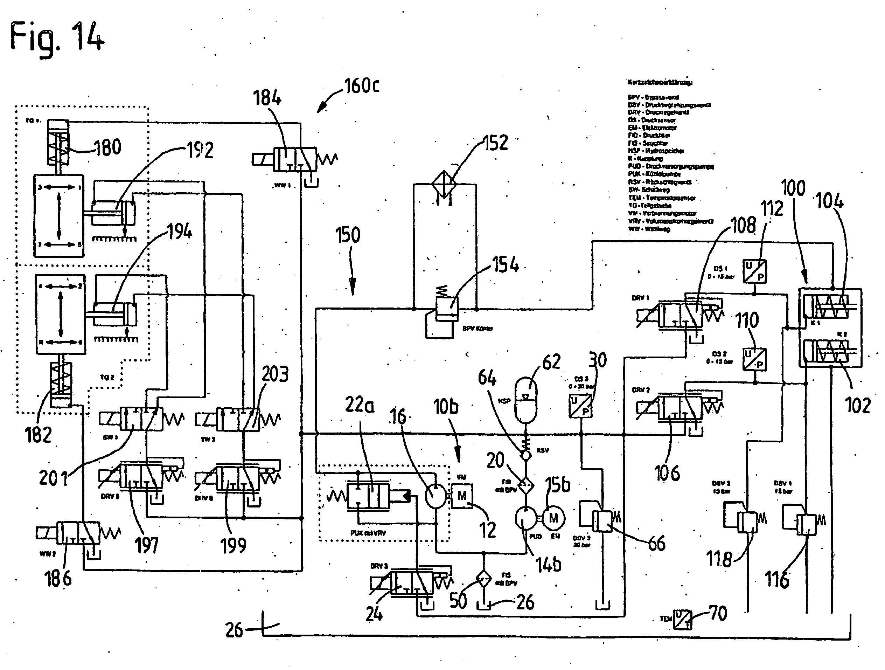

Fig. 10 bis 13 zeigen jeweils hydraulische Schaltpläne mit einer Pumpenanordnung 10, die im Wesentlichen der Pumpenanordnung gemäß Fig. 4 entspricht. Soweit vorgesehen, ist der Drucksensor 30 allerdings auf der anderen Seite des Druckfilters 20 angeordnet. Man könnte den Druckfilter aber ohne weiteres entsprechend Fig. 4 auf der der Druckpumpe 14 näheren Seite des Druckfilters vorsehen. Alternativ oder zusätzlich zum Druckfilter könnte ferner ein Saugfilter zweckmäßig eingesetzt werden, beispielsweise in der gemeinsamen Ansaugleitung der beiden Pumpen 14 und 16. Gemäß Fig. 13 ist in der gemeinsamen Ansaugleitung der beiden Pumpen 14 und 16 ein Rückschlagventil 60 angeordnet, das durchaus mit einem Saugfilter in Reihe geschaltet sein könnte. Durch das Rückschlagventil 60 wird erreicht, dass zur Eingangsseite der Pumpe 14 bzw. Pumpe 16 rückgeführtes Öl nicht in das Ölreservoir 26 zurückläuft, sondern eingangsseitig der beiden Pumpen ohne Druckverluste zur Verfügung steht. Ein derartiges Rückschlagventil könnte ohne weiteres auch bei den anderen Beispielen der Fig. 1 bis 12 sowie auch bei den Beispielen der Fig. 13 und 14 zweckmäßig vorgesehen sein.

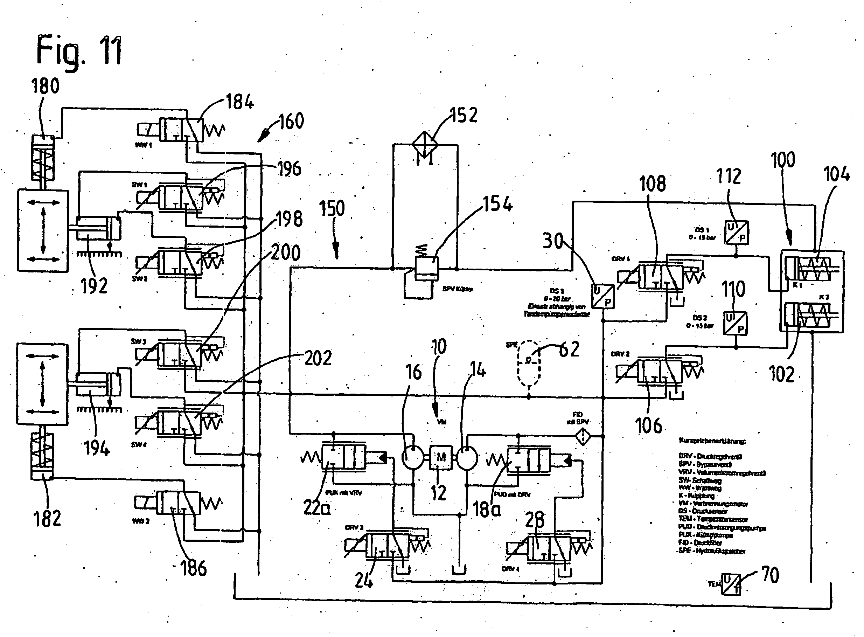

Fig. 11 deutet gestrichelt die zweckmäßige Möglichkeit an, einen Druckspeicher oder Hydrospeicher 62 ausgangsseitig der Druckölpumpe 14 vorzusehen, um Druckschwankungen im Druckölversorgungssystem zu vermeiden und bei einer geeigneten Auslegung des Systems auch unabhängig von dem Laufen des Verbrennungsmotors 12, etwa in einer Startphase des Kraftfahrzeugs, Betätigungsdruck für die Betätigung der Kupplungseinrichtung oder/und des Getriebes zur Verfügung zu haben. Um ein Abfließen von Drucköl aus dem Druck- oder Hydrospeicher aufgrund von Leckagen oder dergleichen zu verhindern, könnte man den Druck- oder Hydrospeicher über ein Schaltventil am Druckölsystem anschließen.

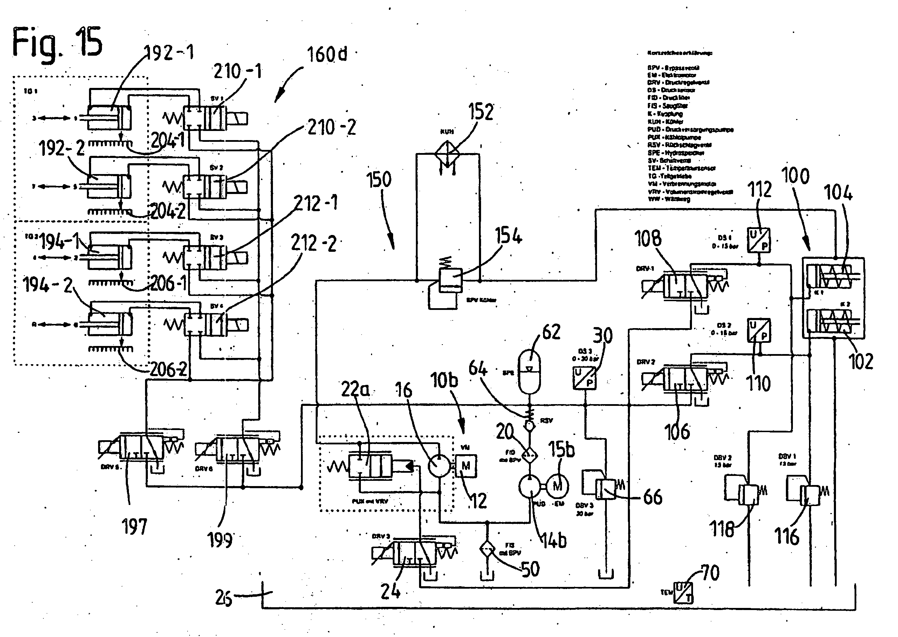

Eine grundsätzlich anders ausgeführte Pumpenanordnung 10b ist im Falle der Beispiele der Fig. 14 und 15 realisiert. Es ist eine durch den Verbrennungsmotor 12 angetriebene Kühlölpumpe 16 vorgesehen, die wie die Kühlölpumpe 16 etwa der Pumpenanordnung 10 gemäß Fig. 4 mittels eines 2/2-Wege-Volumenstromregelventils 22a und eines dieses vorsteuernden Druckregelventils 24 durch bedarfsweise Rückführung von Kühlöl zum Pumpeneingang hinsichtlich des effektiv abgegebenen Kühlölvolumenstroms steuerbar oder regelbar ist. Als Druckölpumpe 14b ist hingegen eine durch einen Elektromotor 15b angetriebene Pumpe 14b vorgesehen, deren Abgabedruck durch entsprechende Ansteuerung des Elektromotors 15b einstellbar, ggf. steuerbar oder regelbar, ist. Beide Pumpen 16 und 14b saugen über eine gemeinsame Ansaugleitung Öl aus dem Ölreservoir 26 an, wobei in der gemeinsamen Ansaugleitung ein Saugfilter 50 vorgesehen ist.

Im Falle der elektromotorisch angetriebenen Druckölpumpe ist die Ausstattung des Druckölsystems mit einem Druckspeicher oder Hydrospeicher 62 besonders zweckmäßig, da ein bedarfsweiser Betrieb der Druckölpumpe in Abhängigkeit vom etwa mittels des Drucksensors 30 erfassten Drucks zum Wiederauffüllen des Speichers 62 möglich und energetisch sehr sinnvoll ist. Um ein Abfließen von Drucköl aus dem Hydrospeicher bzw. aus dem Druckölsystem zu verhindern, ist in der Abgabeleitung der Druckölpumpe 14b die Reihe mit dem Druckfilter 20 ein Rückschlagventil 64 angeordnet. Zur Vermeidung von schädlichen Überdrücken ist parallel zur Druckölpumpe 14b ein Druckbegrenzungsventil 66 eingebaut, das im Auslösefall unmittelbar zum Ölreservoir 26 hin aufmacht. Derartige Druckbegrenzungsventile 66 finden sich auch bei den Beispielen der Fig. 10 und 13.

Betreffend die Ölversorgung ist noch anzumerken, das bei allen Beispielen der Fig. 10 bis 15 im Ölreservoir 26 (ggf. Ölsumpf) ein Temperatursensor 70 angeordnet ist, der für Überwachungszwecke dient und ggf. temperaturabhängige Eingriffe in das Hydrauliksystem ermöglicht, beispielsweise zur Ergreifung von speziellen Kühlmaßnahmen.

Bei allen Beispielen der Fig. 10 bis 15 ist eine hydraulisch betätigte Doppelkupplung 100 mit zwei Lamellen-Kupplungsanordnungen vorgesehen, die jeweils durch einen hydraulischen Nehmerzylinder 102 bzw. 104 repräsentiert sind, der zur Betätigung der jeweiligen Lamellenkupplungsanordnung im Einrücksinne dient. Den beiden hydraulischen Nehmerzylindern 102 und 104 ist jeweils ein 3/2-Wege-Druckregelventil 106 bzw. 108 zugeordnet, über das der jeweilige Nehmerzylinder gesteuert oder geregelt mit Drucköl bzw. Druck beaufschlagbar ist. Hierzu sind die Druckregelventile eingangsseitig an der Druckölversorgung der Pumpenanordnung 10 bzw. 10b, speziell an der Druckölpumpe 14 bzw. 14b, angeschlossen. Der von den Druckregelventilen 106 und 108 eingestellte Öldruck ist mittels eines jeweiligen Drucksensors 110 bzw. 112 erfassbar, so dass besonders zweckmäßig eine geregelte Kupplungsbetätigung realisiert sein kann. Der eingangsseitige Druck für die Druckregelventile 106 und 108 ist im Falle der Beispiele der Fig. 10, 11, 13, 14 und 15 durch den schon angesprochenen Drucksensor 30 erfassbar und im Falle der Beispiele der Fig. 10, 13, 14 und 15 durch das zur Druckölpumpe 14 parallel geschaltete Druckbegrenzungsventil 66 auf einen maximal zulässigen Druck abgesichert. Im Falle der Beispiele der Fig. 14 und 15 ist ferner noch der vom jeweiligen Druckregelventil 106 bzw. 108 abgegebene, den jeweiligen hydraulischen Nehmerzylinder 102 bzw. 104 beaufschlagende Druck durch ein zum Reservoir 26 hin öffnendes Druckbegrenzungsventil 116 bzw. 118 auf einen maximal zulässigen Druck abgesichert. Derartige unmittelbar den die hydraulischen Nehmerzylinder beaufschlagenden Betätigungsdruck absichernde Druckbegrenzungsventile können auch im Falle der anderen Beispiele zweckmäßig vorgesehen sein.

Die Doppelkupplung 100 wird über einen Kühlölkreislauf 150 mit von der Kühlölpumpe 16 bereitgestelltem Kühlöl versorgt. Kühlöl, das durch die Doppelkupplung 100 geflossen ist und dort Wärme aufgenommen hat, wird in das Ölreservoir 26 zurückgeführt. Der Kühlölkreislauf weist stromaufwärts der Doppelkupplung 100 einen Ölkühler 152 auf, der beispielsweise einen Wärmeaustausch mit der Umgebungsluft oder mit einem Kühlwasserkreislauf ermöglicht. Zum Ölkühler 152 ist ein als Bypassventil dienendes Druckbegrenzungsventil 154 parallel geschaltet, das dann aufmacht, wenn der Kühlöldruck eine bestimmte Druckschwelle übersteigt. Dies ist beispielsweise dann der Fall, wenn bei sehr kaltem Öl, etwa in einer Startphase des Kraftfahrzeugs, das Öl noch recht zähflüssig ist und den Ölkühler 152 nur unter Aufbau eines großen Drucks und dann ggf. in zur Kühlung der Doppelkupplung nicht hinreichender Menge passieren kann. Anstelle des als Druckbegrenzungsventil ausgeführten Bypassventils 154 könnte man auch ein elektrisch schaltbares Schaltventil vorsehen, das beispielsweise auf Grundlage der mittels des Temperatursensors 70 erfassten Temperatur geöffnet und geschlossen wird.

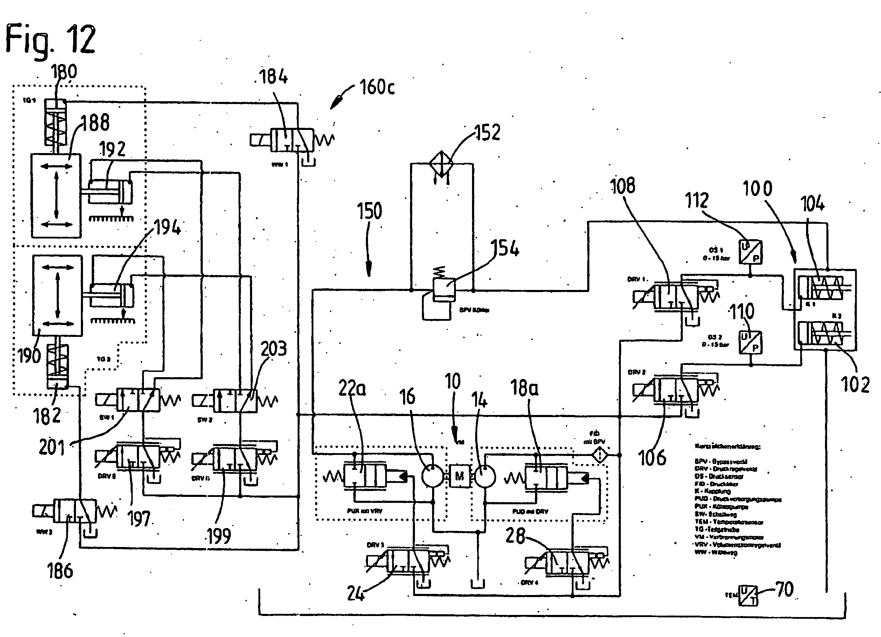

Die hydraulischen Schaltungen der Fig. 10 bis 15 zeigen jeweils noch einen Getriebetätigungsabschnitt 160 (Fig. 10, 11 und 13), 160c (Fig. 12 und 14) und 160d (Fig. 15).

Gemäß Fig. 10 wird der Getriebebetätigungsabschnitt 160 von der Kühlölpumpe 16 mit Kühlöl versorgt, das als Drucköl für die Getriebebetätigung unter Vermittlung von hydraulischen Nehmerzylindern dient, wie im Detail noch zu erläutern ist. Zum Schalten des Getriebes wird das Kühlöl durch ein im Kühlölkreislauf 150 angeordnetes Schaltventil 162 aufgestaut und so auf das zum Schalten nötige Druckniveau gebracht. Eine Überdruckabsicherung ist durch das parallel zum Schaltventil 162 geschaltete Druckbegrenzungsventil 164 erreicht.

Gemäß Fig. 10 ist also die Druckölpumpe 14 alleine für die Kupplungsbetätigung und die Kühlölpumpe 16 einerseits für die Kühlung der Kupplung und andererseits zum Betätigen des Getriebes über die Getriebeaktuatorik zuständig. Eine derartige Trennung der Betätigungen von Kupplung und Getriebeaktuatorik ist insbesondere dann sinnvoll, wenn die Druckregelgüte der Kupplungsbetätigungspumpe nicht ausreichend schnell oder nicht ausreichend genau ist. Beim Betätigen der Getriebeaktuatorik wird nämlich in kurzer Zeit vergleichsweise viel Öl benötigt. Dies könnte zu einem Einbrechen des Versorgungsdrucks für die Kupplungsbetätigung führen, was zur Folge hätte, dass eine eingerückte Kupplungsanordnung für eine kurze Zeitspanne in einem gewissen Ausmaß ausrücken bzw. das gerade benötigte Moment nicht übertragen könnte.

Gemäß den Beispielen der Fig. 11, 12, 14 und 15 wird das Drucköl für die Getriebebetätigung dem Getriebebetätigungsabschnitt 160 bzw. 160c bzw. 160d von der auch der Kupplungsbetätigung dienenden Druckölpumpe 14 bzw. 14b bereitgestellt. Um der im Zusammenhang mit Fig. 10 erwähnten Gefahr eines Abfalls des Betätigungsdrucks für die Kupplungseinrichtung zu begegnen, kann zweckmäßig ein Hydrospeicher oder Druckspeicher wie der Druckspeicher 62 eingesetzt werden.

Die Bereitstellung der Druckversorgung für die Getriebeaktuatorik durch die Druckversorgungspumpe der Kupplungseinrichtung ist dann besonders sinnvoll, wenn die Druckölpumpe trotz unterschiedlicher momentaner Fördervolumina einen nahezu konstanten Druck erzeugt oder in einen Hydrospeicher, wie schon erwähnt, fördert. Dieser hat die Aufgabe, sowohl das benötigte Drucköl zu speichern als auch Druckspitzen bzw. Druckeinbrüche zu glätten. Eine Alternative zur durch den Verbrennungsmotor angetriebenen Druckölpumpe, deren Betrieb vom Betrieb des Verbrennungsmotors abhängt, kommt als besonders zweckmäßige Alternative auch die schon angesprochene elektromotorisch angetriebene Druckölpumpe 15b in Betracht, die insbesondere dazu verwendet werden kann, bedarfsweise den Hydrospeicher 62 von Zeit zu Zeit zu füllen.

Beim Beispiel der Fig. 13 ist ebenfalls vorgesehen, dass das Drucköl für die Getriebebetätigung durch die Druckölpumpe 14 bereitgestellt wird, die auch zur Kupplungsbetätigung dient. Zur Verbesserung der Start-Stopp-Fähigkeit ist allerdings vorgesehen, dass zusätzlich zu dem von der Druckölpumpe 14 geförderten Öl von der Kühlölpumpe 16 gefördertes Öl der Druckölversorgung für die Getriebebetätigung oder/und für die Kupplungsbetätigung dient. Hierzu ist eine Verbindung zwischen dem Kühlölkreislauf 150 und einer zum Getriebebetätigungsabschnitt 160 und zu den Druckregelventilen 106 und 108 führenden Druckölleitung vorgesehen. In dieser Verbindung ist ein Rückschlagventil 166 angeordnet, das dann aufmacht, wenn eingangsseitig des Rückschlagventils 166 ein Mindestdruck sich aufgebaut hat. Hierzu ist im Druckölkreislauf 150 ein Schaltventil 162 vorgesehen. Wird dies Schaltventil 162 geschlossen, so baut sich eingangsseitig des Rückschlagventils 166 ein entsprechender Druck auf, und das sich aufstauende Kühlöl fließt in Richtung zum Getriebebetätigungsabschnitt 160 oder/und zu den Druckregelventil 106 und 108 ab, in Ergänzung zum von der Druckölpumpe 14 abgegebenen Drucköl.

Durch die bedarfsweise Verwendung von Kühlöl als Drucköl zur Kupplungsbetätigung oder/und zur Getriebebetätigung werden die Start-Stopp-Eigenschaften des Kraftfahrzeugs deutlich verbessert. So kann bei einem Motorstart das Schaltventil 162 geschlossen werden und das von der Kühlölpumpe 16 geförderte Öl zusätzlich zu dem von der Druckölpumpe 14 geförderten Öl zum Schließen der Kupplungen sowie ggf. zum Betätigen des Getriebes verwendet werden. Eine Getriebebetätigung ist im Prinzip vermeidbar, wenn die Gänge vor dem Abstellen eines Kraftfahrzeugs in geeigneter Weise voreingelegt werden. Im normalen Fahrbetrieb herrscht im Druckölkreislauf ein hinreichender Druck, so dass das Schaltventil 162 wieder geöffnet werden bzw. geöffnet bleiben kann und das Rückschlagventil 166 sich schließt bzw. geschlossen bleibt.

Zur Fig. 13 ist noch zu erwähnen, dass das Rückschlagventil 60 ein Rückfließen des Öls im Ansaugtrakt der Pumpen 14 und 16 in den Öltank verhindert. Damit lässt sich beim Motorstart Zeit sparen, die benötigt wird, um das Öl anzusaugen. Wird im Start-Stopp-Betrieb das Schaltventil 162 bei abgestelltem Motor ebenfalls geschlossen, so wird auch hier ein Leerlaufen der Leitung verhindert.

Wie schon erläutert, ist nach Fig. 14 und Fig. 15 eine elektromotorische Druckölpumpe bzw. Druckölversorgungspumpe 14b vorgesehen, während die Kühlölversorgung wie bei den anderen Beispielen mittels einer verbrennungsmotorischen Pumpe 16 sichergestellt wird. Die elektromotorisch angetriebene Druckölpumpe 14b saugt das Öl durch den Saugfilter 50 an, fördert es durch den Druckfilter 20 und das Rückschlagventil 64 in den Hydrospeicher 62. Aus diesem Speicher 62 wird dann die Getriebeaktuatorik (Getriebebetätigungsabschnitt 160c) und die Kupplungsbetätigungsaktuatorik (Ventile 106, 108 mit den Nehmerzylindern 102 und 104) mit Drucköl versorgt. Der Drucksensor 30 überwacht den Speicherdruck. Auf Grundlage dieses Sensorsignals steuert eine zugehörige Steuereinheit den Elektromotor 15b der Druckölpumpe 14b an. Das Druckbegrenzungsventil 66 sichert den Druckölkreislauf gegen Überdruck ab. Die Druckbegrenzungsventile 116 und 118 sichern die Kupplungsanordnungen bzw. die Nehmerzylinder 102 und 104 gegen Überdruck ab. Die Druckregelventile 106 und 108 stellen den benötigten Kupplungsbetätigungsdruck bereit, der mittels der Drucksensoren 110 und 112 eingeregelt werden kann. Ein Vorteil der Anordnung gemäß Fig. 14 ist die verbrennungsmotorenunabhängige Druckölversorgung. Es lässt sich so eine gute Start-Stopp-Funktion realisieren, da die Druckerzeugung auch bei ausgeschaltetem Verbrennungsmotor funktioniert.

Betreffend die Ausführung des Getriebes und die Ausführung der zugehörigen Getriebeaktuatorik bestehen vielseitige Möglichkeiten. Die Fig. 10 bis 15 zeigen Beispiele, die sich auf ein Sieben-Gang-Getriebe (mit Rückwärtsgang ein Acht-Gang-Getriebe) beziehen. Die acht Gänge sind auf zwei Teilgetriebe aufgeteilt. Die ungeraden Getriebegänge werden durch ein erstes Teilgetriebe und die geraden Getriebegänge werden durch ein zweites Teilgetriebe realisiert. Die Schaltaktuatorik für ein jeweiliges Teilgetriebe umfasst nach den Fig. 10, 11 und 13 einen jeweiligen einfach wirkenden Stellzylinder 180 bzw. 182, der in einer Richtung federvorgespannt ist und in der anderen Richtung mit Drucköl von einem zwei Schaltstellungen aufweisenden 3/2-Wege-Ventil 184 bzw. 186 mit Drucköl beaufschlagbar ist. Anstelle der Schaltventile 184 und 186 können durchaus auch Druckregelventile verwendet werden. Da der zugeordnete hydraulische Nehmerzylinder 180 bzw. 182 aber zur Gassenauswahl des jeweiligen Teilgetriebes mittels einer Gassenmechanik 188 bzw. 190 dient, reicht eine einfache, ungesteuerte bzw. ungeregelte Beaufschlagung des betreffenden hydraulischen Nehmerzylinders 180 bzw. 190 mit Drucköl zur Gassenauswahl aus.

Die eigentliche Schaltbewegung in einer ausgewählten Gasse des jeweiligen Teilgetriebes wird mittels eines doppelt wirkenden Nehmerzylinders 192 bzw. 194 bewerkstelligt, der über zwei zugeordnete Druckregelventile 196 und 198 bzw. 200 und 202 gesteuert oder geregelt mit Druck zur Verstellung einer jeweiligen Schaltstange in einer Axialrichtung bzw. der Schaltstange in der hierzu entgegengesetzten Axialrichtung beaufschlagbar ist. Die 3/2-Wege-Druckregelventile 196, 198, 200 und 202 sind vorzugsweise als Proportional-Druckregelventile ausgeführt, um auf Basis eines variabel einstellbaren Drucks unterschiedliche Synchronkräfte einstellen zu können.

Je nach Stellung des Wählwegzylinders bzw. Gassenwählzylinders 180 bzw. 182 und der Richtung des Schaltweges der über den doppelt wirkenden Zylinder 192 bzw. 194 betätigten Schaltstange wird auf einem betreffenden Teilgetriebe einer der Gänge 1, 3, 5 und 7 bzw. 2, 4, 6 und R eingelegt. Man kann selbstverständlich auch eine andere Gangbelegung als die hier angesprochene und in Fig. 10 schematisch gezeigte vorsehen.

Man kann vorteilhaft eine Wegsensierung für die Schaltbewegung vorsehen. Beispielsweise kann man dem doppelt wirkenden Zylinder 192 bzw. 194 einen jeweiligen Wegsensor 204 bzw. 206 zuordnen, insbesondere wenn variable Synchronkräfte einzustellen sind. Eine derartige Wegsensierung für die Schaltwege ist auf jeden Fall wichtiger als eine im Prinzip ebenfalls mögliche Wegsensierung für den Wählweg, da der Gassenwählzylinder 180 bzw. 182 nur die beiden Endlagen ansteuern muss. Die Schaltweg-Wegsensierung wird in der Regel dann kaum entbehrlich sein, wenn eine gezielte Einstellung und Änderung von Synchronkräften über einen variabel eingestellten Betätigungsdruck gewünscht ist.

Bei den Beispielen der Fig. 10, 11 und 13 sind vier Druckregelventile, insbesondere Proportional-Druckregelventile, für die Getriebebetätigung bezogen auf eine ausgewählte Gasse der beiden Teilgetriebe erforderlich. Demgegenüber kommen die Beispiele der Fig. 12 und 14 mit nur zwei 3/2-Wege-Druckregelventilen 197 und 199 aus, die ebenfalls vorzugsweise als Proportional-Druckregelventile ausgeführt sind. Diese Druckregelventile dienen zum Einlegen der Gänge, die die Schaltstangen der Teilgetriebe entweder in die eine oder die andere Richtung betätigen. Die Auswahl, welches der beiden Teilgetriebe vermittels des jeweiligen Druckregelventils 197 bzw. 199 zu schalten ist, erfolgt über zwei 3/2-Wege-Ventile 201 bzw. 203, die mit dem vom Druckregelventil 197 bzw. 199 abgegebenen Betätigungsdruck entweder den doppelt wirkenden Nehmerzylinder 192 oder den doppelt wirkenden Nehmerzylinder 194 auf einer dem jeweiligen Ventil 201 bzw. 203 zugeordneten Kolbenseite beaufschlagen. Durch die Reduzierung der Anzahl von vergleichsweise teueren Druckregelventilen von vier auf zwei werden durchaus beachtliche Kostenvorteile erreicht.

Im Falle des Beispiels der Fig. 12 erfolgt die Gassenwahl des jeweiligen Teilgetriebes wie bei den Beispielen der Fig. 10, 11 und 13 mittels eines jeweiligen einfach wirkenden Nehmerzylinders 180 bzw. 182 und eines jeweils zugeordneten 3/2-Wege-Ventil 184 bzw. 186 mit zwei Schaltstellungen, das den federbelasteten Zylinder 180 bzw. 182 mit Drucköl versorgt.

Betreffend die Gassenauswahlmechaniken 188 und 190 ist noch zu erwähnen, dass diese beispielsweise jeweils für die Auswahl einer zu schaltenden von jeweils zwei Schaltstangen des betreffenden Teilgetriebes dienen, um diese entweder in die eine oder in die andere Richtung mittels des jeweiligen doppelt wirkenden Nehmerzylinders 192 bzw. 194 zu betätigen. Das die beiden Teilgetriebe aufweisende Getriebe kann also insgesamt vier derartige Schaltstangen aufweisen, von denen die beiden Schaltstangen eines Teilgetriebes mittels eines doppelt wirkenden Nehmerzylinders 192 bzw. 194 wahlweise betätigbar sind.

Ein weiteres Beispiel für einen zweckmäßigen Getriebebetätigungsabschnitt 160d ist in Fig. 15 dargestellt. Auf eine Gassenauswahlmechanik mit zugehörigem Betätigungszylinder ist verzichtet. Alle vier Schaltstangen des Getriebes, also jeweils alle beide Schaltstangen der beiden Teilgetriebe, sind durch einen eigenen doppelt wirkenden Nehmerzylinder 192-1 bzw. 192-2 für das erste Teilgetriebe und 194-1 bzw. 194-2 für das zweite Teilgetriebe betätigbar. Der Druck für die Betätigung der Schaltstangen mittels der angesprochenen doppelt wirkenden Nehmerzylinder wird betreffend die eine Schaltrichtung von einem vorzugsweise als Proportionalventil ausgeführten 3/2-Wege-Druckregelventil 197 und betreffend die andere Schaltrichtung von einem vorzugsweise als Proportionalventil ausgeführten 3/2-Wege-Druckregelventil 199 bereitgestellt. Die vier Nehmerzylindern 192-1, 192-2, 194-1 und 194-2 sind über ein jeweiliges 4/2-Wege-Schaltventil 210-1, 210-2, 212-1 bzw. 212-2 parallel an den beiden Druckregelventil 197 und 199 angeschlossen. Diese 4/2-Wege-Ventile haben die Aufgabe, dass an ihnen anstehende Drucköl bedarfsweise an einen jeweils zu beaufschlagenden Zylinder freizugeben. Dabei können alle Zylinder in eine gemeinsame Richtung bewegt oder einzeln geschaltet werden. Im Prinzip ist auswählbar, ob nur ein einzelner oder mehrere der Zylinder bewegt werden. Soweit mehrere Zylinder bewegt werden, ist es bei der in Fig. 15 realisierten Schaltung zwingen, dass diese sich in der gleichen Richtung bewegen. Vorzugsweise ist eine Erfassung der momentanen Stellposition über einen jeweiligen Wegsensor 204-1, 204-2, 206-1 bzw. 206-2 vorgesehen.

Der Vorteil der Getriebeaktuatorschaltung des Getriebebetätigungsabschnitts 160d gemäß Fig. 15 ist, dass ein vergleichsweise einfacher Aufbau realisiert ist, der mit wenigen Bauteilen auskommt. Insbesondere lassen sie sich einfache Schaltventile verwenden, in Kombination mit den beiden Druckregelventilen.

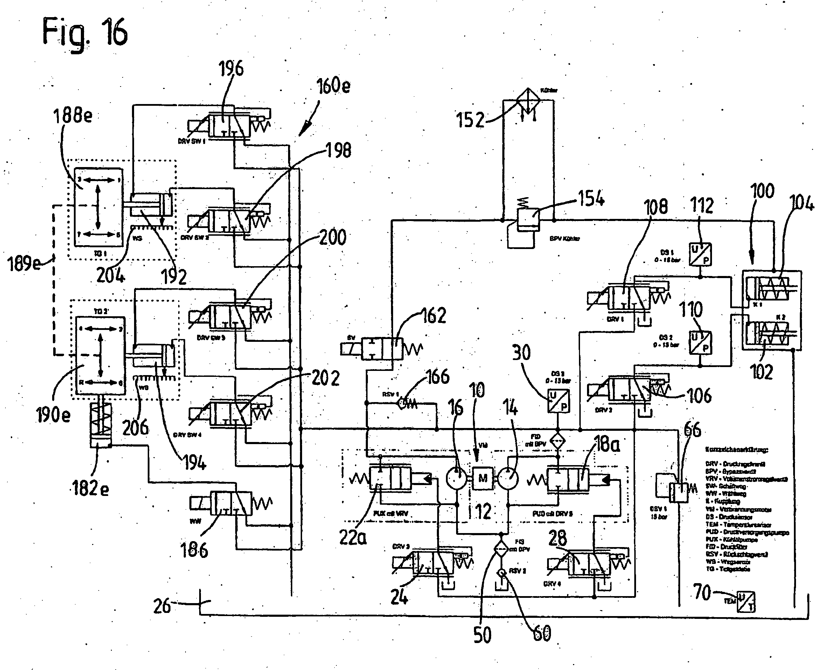

Fig. 16 zeigt einen weiteren hydraulischen Schaltplan mit einer Pumpenanordnung 10, die im Wesentlichen der Pumpenanordnung gemäß Fig. 4 entspricht. Der Schaltplan der Fig. 16 unterscheidet sich vom Schaltplan der Fig. 13 zum einen dadurch, dass in der gemeinsamen Ansaugleitung der beiden Pumpen 14 und 16 sowohl ein Saugfilter 50 als auch ein Rückschlagventil 60 vorgesehen ist. Ferner unterscheidet sich der Schaltplan der Fig. 16 vom Schaltplan der Fig. 13 in der Ausgestaltung des Getriebebetätigungsabschnitts. Der Getriebebetätigungsabschnitt 160e der Fig. 16 entspricht hinsichtlich der axialen Betätigung der Getriebeschaltstangen mittels der doppelt wirkenden Zylinder 192 und 194 und der zugeordneten Druckregelventile 196, 198, 200 und 202 dem Getriebebetätigungsabschnitt 160 der Fig. 13. Unterschiedlich ist hingegen die Art und Weise der Gassenauswahl. Gemäß Fig. 16 erfolgt diese mittels eines beiden Teilgetrieben zugeordneten hydraulischen Nehmerzylinders 182e, der wie der Zylinder 182 gemäß Fig. 13 in einer Richtung federvorgespannt ist und in der anderen Richtung mit Drucköl von dem zwei Schaltstellungen aufweisenden 3/2-Wege-Ventil 186 mit Drucköl beaufschlagbar ist. Der hydraulische Nehmerzylinder 182e ist gemeinsam zwei Teil-Gassenmechaniken 188e und 190e zugeordnet, von denen die Teil-Gassenmechanik 188e auf Schaltstangen des ersten Teilgetriebes und die Teil-Gassenmechanik 190e auf Schaltstangen des zweiten Teilgetriebes wirkt. Die beiden Teil-Gassehmechaniken 188e und 190e sind Teile einer Gesamt-Gassenmechanik des Getriebes. Der hydraulische Nehmerzylinder 182e steht mit der Teil-Gassenmechanik 190 in Wirkverbindung oder ist mit dieser Teil-Gassenmechanik in Wirkverbindung bringbar. Ferner steht der hydraulische Nehmerzylinder 182e mit der Teil-Gassenmechanik 188e in Wirkverbindung, oder ist mit dieser Teil-Gassenmechanik in Wirkverbindung bringbar, wie dies durch die gestrichelte Linie 189e repräsentiert ist. Alternativ oder zusätzlich kann die gestrichelte Linie 189e auch eine Verkoppelung oder Verkoppelbarkeit der beiden Teil-Gassenmechaniken 188e und 190e repräsentieren.

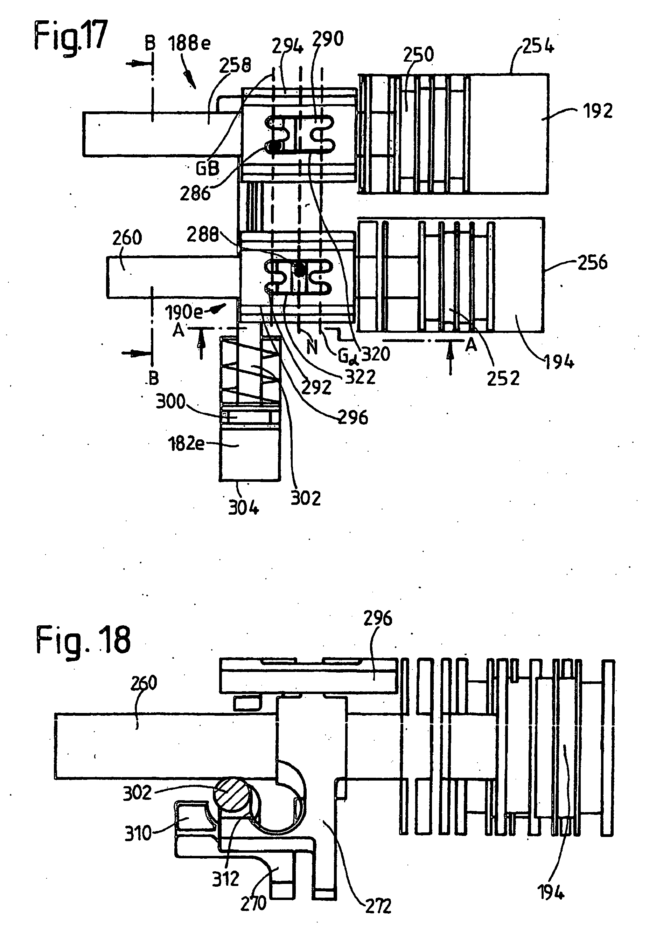

Die Gesamt-Gassenmechanik, der zugehörige hydraulische Nehmerzylinder 182e und die zur axialen Betätigung der Schaltstangen des Getriebes dienenden doppelt wirkenden Nehmerzylinder 192 und 194 bilden eine Betätigungsanordnung des Getriebes, die beispielsweise in der Art der Ausführungsform der im Folgenden zu beschreibenden Fig. 17 bis 20 ausgeführt ist.

Fig. 17 bis 20 zeigen ein Beispiel für eine Getriebebetätigungsanordnung, die beispielsweise als Teil bzw. in Kombination mit dem hydraulischen Schaltplan der Fig. 16 einsetzbar ist. Hiervon wird im Folgenden ausgegangen. Die Betätigungsanordnung der Fig. 17 bis 20 weist dementsprechend zwei doppelt wirkende hydraulische Nehmerzylinder 192 und 194 auf, denen eine zwei Teil-Gassenmechaniken 188e und 190e aufweisende Gesamt-Gassenmechanik zugeordnet ist, die mittels eines einfach wirkenden hydraulischen Nehmerzylinders 182e betätigbar ist.

Die beiden doppelt wirkenden Zylinder 192 und 194 weisen jeweils einen Kolben 250 bzw. 252 in einem jeweiligen Zylindergehäuse 254 bzw. 256 auf. Die Kolben sind an einem zylinderinneren Ende einer als Betätigungsstange dienenden Kolbenstange 258 bzw. 260 angeordnet. Die Kolbenstange oder Betätigungsstange 285 ist zwei Schaltstangen 262 und 264 des einen Teilgetriebes zugeordnet. Die Kolbenstange oder Betätigungsstange 260 ist zwei Schaltstangen 266 und 268 des anderen Teilgetriebes zugeordnet. Mittels der Schaltstangen und ggf. diesen zugeordneten Schaltgabeln oder Schubgabeln können im Wege einer axialen Betätigung (Verschiebung) wenigstens einer der Schaltstangen auf an sich bekannte Art und Weise Getriebegänge eingelegt und ausgelegt werden. Zur axialen Betätigung einer jeweiligen ausgewählten der Schaltstange ist die Betätigungsstange 158 mit beiden der zugeordneten Schaltstangen 262 und 264 und ist die Betätigungsstange 260 mit beiden der zugeordnete Schaltstangen 266 und 268 axial bewegungsverkoppelbar, wobei zu einem Zeitpunkt jeweils nur eine der beiden Schaltstangen 262 und 264 bzw. 266 und 268 mit der zugeordneten Betätigungsstange 258 bzw. 260 axial bewegungsverkoppelt sein kann. Zur Bewegungsverkopplung mit einer ausgewählten der beiden jeweils zugeordneten Schaltstangen tragen die Betätigungsstangen 258 und 260 jeweils ein axial daran festgelegtes, um die betreffende Schaltstange schwenkbares Mitnahmeglied 270 bzw. 272, das zur Herstellung einer formschlüssigen Mitnahmeverbindung mit einer ausgewählten der jeweils zugeordneten beiden Schaltstangen dient. Das Mitnahmeelement 270 ist zwischen einer ersten Schwenkstellung, die der Schaltstange 262 zugeordnet ist, und einer zweiten Schwenkstellung, die der Schaltstange 264 zugeordnet ist, verschwenkbar. Das Mitnahmeelement 272 ist zwischen einer ersten Schwenkstellung, die der Schaltstange 266 zugeordnet ist, und einer zweiten Schwenkstellung, die der Schaltstange 268 zugeordnet ist, verschwenkbar. Befinden sich die Schaltstangen und die zugeordnete Betätigungsstange jeweils in einer vorgegebenen relativen Axialstellung zueinander, so kann das betreffende Mitnahmeelement wahlweise in die erste bzw. zweite Schwenkstellung geschwenkt werden, in der es dann mit einem Eingriffsfinger 280 bzw. 282 im Falle des Mitnahmeelements 270 bzw. einer Eingriffszunge 284 im Falle des Mitnahmeelements 272 in eine Nut der betreffenden Schaltstange 262 bzw. 264 bzw. in eine Nut der betreffenden Schaltstange 266 bzw. 268 eingreifen kann.

Tatsächlich kann dieser Eingriff nur in einer ganz bestimmten absoluten Axialstellung der betreffenden Betätigungsstange 258 bzw. 260 und der zugeordneten Schaltstange 262 bzw. 264 (erste Gruppe von Schaltstangen) bzw. 266 und 268 (zweite Gruppe von Schaltstangen) hergestellt werden, da die Mitnahmeelemente 270 und 272 mit einem jeweiligen Führungsstift 286 bzw. 288 in eine H-Gassenkulisse 290 bzw. 292 in einem zugehörigen, stationär angeordneten Kulissenelement 294 bzw. 296 eingreifen. Die beiden Mitnahmeelemente 270 und 272 sind jeweils nur in einer axialen Stellung schwenkbar, die als Neutralstellung bezeichenbar ist, in der sie mit ihrem jeweiligen Führungsstift 286 bzw. 288 sich an einer Axialposition befinden, die in Fig. 17 durch die gestrichelte Linie N angegeben ist. In dieser Neutralposition kann ein bestehender Mitnahmeeingriff mit einer der Schaltstangen 262 und 264 bzw. 266 und 268 aufgehoben oder, unter der Voraussetzung, dass sich die Schaltstange in einer entsprechenden Axialposition befindet, hergestellt werden. Da die Schaltstangen eine eingestellte Axialposition halten, sofern sie nicht mittels des zugehörigen hydraulischen Kraftzylinders axial verschoben werden, ist es stets gewährleistet, dass eine momentan nicht ausgewählte, also nicht mit dem zugehörigen Mitnahmeelement in Mitnahmeeingriff stehende Schaltstange, eine Axialposition einnimmt, die der Neutralstellung entspricht, so dass durch entsprechendes Verschwenken des Mitnahmeelements 270 bzw. 272 der Mitnahmeeingriff herstellbar ist. In diesem Zusammenhang ist zu beachten, dass aufgrund der H-Gassenkulisse 290 bzw. 292 ein bestehender Mitnahmeeingriff nur in der Neutralstellung aufhebbar ist.

Zur bedarfsweisen Betätigung der beiden Mitnahmeelemente 170 und 172 im Sinne eines in Eingriffbringens mit einer auszuwählenden der zugeordneten Schaltstange bzw. Außereingriffbringens von einer momentan ausgewählten Schaltstange dient der hydraulische Nehmerzylinder 182e, der einen federvorgespannten Kolben 300 aufweist. Eine als Wählbetätigungsstange dienende Kolbenstange 302, an deren einen Ende der Kolben 300 innerhalb eines Zylindergehäuses 304 angeordnet ist, erstreckt sich im Wesentlichen orthogonal zu den Betätigungsstangen 258 und 260 und den Schaltstangen 262, 264, 266 und 268. Die Wählbetätigungsstange weist zwei Mitnahmenuten 306 und 308 auf, in die eine Mitnahmenase 310 bzw. 312 des Mitnahmeelements 270 bzw. 272 eingreifen kann, und zwar in der Neutralstellung N der betreffenden Betätigungsstange 258 bzw. 260 bzw. des betreffenden Mitnahmeelements. Die Herstellung des Eingriffs zwischen der Mitnahmenase 310 und der Mitnahmenut 306 bzw. zwischen der Mitnahmenase 312 und der Mitnahmenut 308 ist nur dann durch Verstellung der betreffenden Betätigungsstange 258 bzw. 260 mittels des Zylinders 192 bzw. 194 möglich, wenn die Betätigungsstange aus einer einem eingelegten Gang entsprechenden Axialstellung Gα bzw. Gβ (vgl. gestrichelte Linien Gα und Gβ in Fig. 17) in die Neutralstellung verschoben wird und zwar bei einer der momentanen Schwenkstellung des jeweiligen Mitnahmeelements 270 bzw. 272 entsprechenden Axialstellung der Wählbetätigungsstange 302. Diese Axialstellung ist vermittels des hydraulischen Nehmerzylinders 182e einstellbar.

Vermittels des hydraulischen Nehmerzylinders 182e und der Wählbetätigungsstange 302 lassen sich die beiden Mitnahmeelemente 270 und 272 so schwenken, dass sie einmal die eine, einmal in die andere Schaltstange der beiden jeweils zugeordneten Schaltstangen 262 und 264 bzw. 266 und 268 eingreifen. Wie erläutert, sind die Mitnahmeelemente jeweils nur in der Neutralstellung, also wenn im betreffenden Teilgetriebe kein Gang eingelegt ist, vermittels des hydraulischen Nehmerzylinders 182e und des formschlüssigen Eingriffs zwischen der Mitnehmernase 310 und der Mitnahmenut 306 bzw. der Mitnahmenase 312 und der Mitnahmenut 308 betätigbar. Durch Einlegen eines ausgewählten, der betreffenden Schaltstange zugeordneten Gangs, also durch Verschieben der Schaltstange entweder in die Axialposition Gα oder Gβ, wird der Eingriff zwischen der betreffenden Mitnahmenase und der betreffenden Mitnahmenut wieder aufgehoben. Ist ein Gang eingelegt, so besteht also keine Koppelung mehr zwischen der Wählbetätigungsstange 302 und dem betreffenden Mitnahmeelement 270 bzw. 272. Somit kann dann die Wählbetätigungsstange 302 frei verschoben werden und zur von der momentanen Schwenkposition des betreffenden Mitnahmeelements unabhängigen Verschwenkung des jeweils anderen Mitnahmeelements dienen. Es können also mit nur einer Wählanordnung (hydraulischer Nehmerzylinder 182e mit der die Mitnahmenuten 306 und 308 aufweisenden Wählbetätigungsstange 302) unabhängig voneinander jeweils gewünschte Wählpositionen der beiden Mitnahmeelemente 270 und 272 eingestellt werden. Dabei sorgt pro Mitnahmeelement die H-förmige Gasse (gate) 290 und 292 und der darin geführte Führungsstift 286 bzw. 288 für eine exakte Führung der Mitnahmeelemente.

Die Verkopplung der Mitnahmeelemente mit der Schaltstange 308 vermittels der Nase 310 und der Nut 306 bzw. vermittels der Nase 312 und der Nut 308 stellt nur eine Möglichkeit von vielen dar. Man kann selbstverständlich auch Mitnahmenasen oder dergleichen an der Schaltstange und zugeordnete Nuten in den Mitnahmeelementen vorsehen. Eine andere Möglichkeit ist, eine permanente Betätigungskraftübertragung zwischen der Schaltstange 302 und den Mitnahmeelementen 270 und 272 vorzusehen, beispielsweise vermittels einer jeweiligen Federanordnung. Die jeweiligen Betätigungskräfte würden aufgrund der Kulisse nur in der jeweiligen Neutralposition N im Sinne einer Verschwenkung des jeweiligen Mitnahmeelements wirksam sein. Soweit die Schaltstangen bzw. die Mitnahmeelemente aus der-Neutralposition wegbewegt sind, also sich beispielsweise in der Position Gα bzw. Gβ befinden, würden die Betätigungskräfte durch den die Gassenkulisse 290 bzw. 292 begrenzenden Rand 320 bzw. 322 des Elements 294 bzw. 296 abgestützt werden.

Die Betätigung der Mitnahmeelemente vermittels des hydraulischen Nehmerzylinders 182e und Betätigung der Betätigungsstangen 258 und 260 und damit der Schaltstangen 262, 264 bzw. 266, 268 vermittels der Zylinder 192 und 194 muss - jedenfalls beim Beispiel der Fig. 17 bis 20 - aufeinander abgestimmt erfolgen, um bei einer Verstellung einer jeweiligen Betätigungsstange in die Neutralstellung die Wählbetätigungsstange 302 in einer die Herstellung des Eingriffs zwischen der betreffenden Nase 310 bzw. 312 und der betreffenden Nut 306 bzw. 308 ermöglichenden Axialstellung zu haben. Diese Axialstellung der Wählbetätigungsstange 302, die die Herstellung des Mitnahmeeingriffs mit dem betreffenden Mitnahmeelement ermöglicht, hängt von der momentanen Schwenkstellung des Mitnahmeelements ab. Wäre die Axialstellung der Wählbetätigungsstange 302 nicht auf die momentane Schwenkstellung des betreffenden Mitnahmeelements angepasst, so würde die Mitnahmenase 310 bzw. 312 an der Wählbetätigungsstange anschlagen und dementsprechend die betreffende Betätigungsstange 258 bzw. 260 nicht in die Neutralstellung N verstellbar sein. Eine die benötigten Wähl- und Schaltvorgänge ermöglichende aufeinander abgestimmte Betätigung der doppelt wirkenden Schaltzylinder 192 und 194 einerseits und des einfach wirkenden Wählzylinders 182e andererseits ist aber ohne weiteres möglich, indem eine die Zylinder über entsprechende Ventile (vgl. Fig. 16) ansteuernde Steuereinheit die momentanen Schaltpositionen, Wählpositionen bzw. Betätigungspositionen berücksichtigt. Diese momentanen Positionen können sich aus einer "Buchführung" über die durchgeführten Schaltbewegungen, Wählbewegungen bzw. Betätigungsbewegungen ergeben oder durch eine zugehörige Sensoranordnung erfassbar sein.

Anzumerken ist noch, dass sich durchaus auch beide Betätigungsstangen 258 und 260 gleichzeitig in der Neutralstellung befinden können. Dies entspricht einem Getriebezustand, bei dem in beiden Teilgetrieben kein Gang eingelegt ist. Dabei kann es vorkommen, dass beide Betätigungselemente 270 und 272 gleichzeitig vermittels der Wählbetätigungsstange 302 im gleichen Sinne geschwenkt werden, etwa von einem Eingriff des Betätigungselements 270 mit der Schaltstange 264 in einen Eingriff mit der Schaltstange 262 und des Mitnahmeelements 272 von einem Eingriff mit der Schaltstange 268 in einen Eingriff mit der Schaltstange 266, oder umgekehrt. Man kann demgegenüber aber auch vorsehen, dass zumindest im Zuge normaler Schaft- und Wählvorgänge nur jeweils eines der beiden Mitnahmeelemente 270 und 272 mit der Wählbetätigungsstange 202 momentan gekoppelt und dementsprechend vermittels des Nehmerzylinders 182e schwenkbar ist.

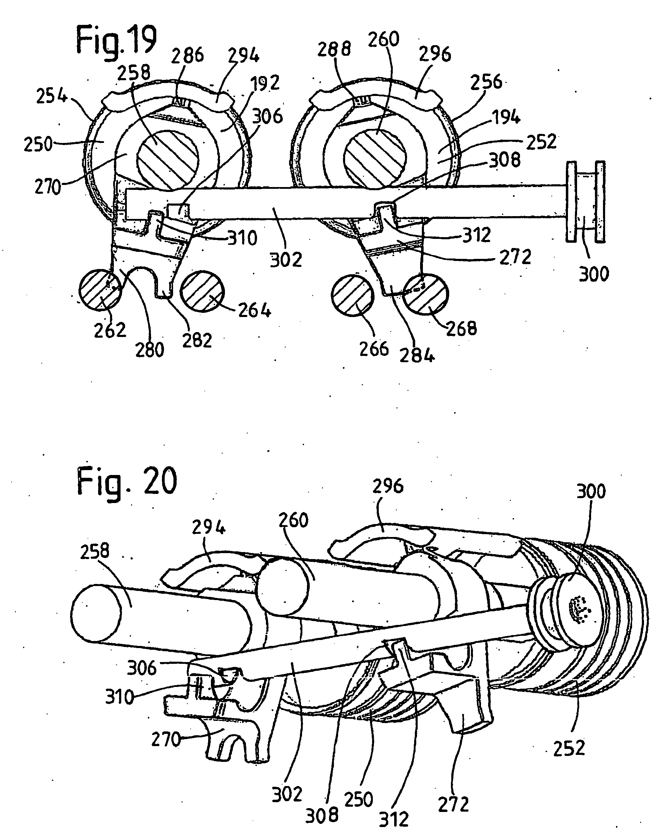

Bezug nehmend auf die Fig. 17 und 19 kann beispielsweise folgende Ausgangslage vorliegen. Der Schaltstange 262 sind die Getriebegänge 4 und 6 zugeordnet. Die Schaltstange 264 sind die Getriebegänge R (Rückwärtsgang) und 2 zugeordnet. Der Schaltstange 266 sind die Getriebegänge 5 und 7 zugeordnet. Der Schaltstange 268 sind die Getriebegänge 1 und 3 zugeordnet. Die Gänge 4, R, 5 und 1 entsprechen beispielsweise der Position Gα und die Gänge 6, 2, 7 und 3 entsprechen beispielsweise der Position Gβ. Entsprechend den Fig. 17 und 19 ist dementsprechend auf der Schaltstange 262 der sechste Gang eingelegt. Auf den anderen Schaltstangen, insbesondere auch auf den anderen Schaltstangen des anderen Teilgetriebes, ist momentan kein Gang eingelegt. Das Mitnahmeelement 270 ist entsprechend der Axialposition Gβ nicht mit der Wählbetätigungsstange 302 gekoppelt. Die andere Betätigungsstange 270 befindet sich hingegen in der Neutralstellung, und das Mitnahmeelement 272 ist dementsprechend mit der Wählbetätigungstange 302 gekoppelt. Kommt jetzt beispielsweise der Schaltwunsch "eingelegten Gang 6 auf der Schaltstange 262 auslegen, dann mittels des Mitnahmeelements 272 auf der Schaltstange 268 den dritten Gang einlegen" auf, so ist beispielsweise der folgende Schaltablauf möglich: Gang 6 kann momentan nicht ausgelegt werden, weil sich die Mitnahmenase 310 und die Mitnahmenut 306 nicht gegenüberliegen. Es ist deswegen die Wählbetätigungsstange 302 axial zu bewegen, so dass die Nase 310 und die Nut 306 einander gegenüberliegen. Der Eingriff zwischen der Nase 312 des anderen Mitnahmeelements 272 und der Nut 308 der Wählbetätigungsstange 302 kann hierbei erhalten bleiben. Mittels des Zylinders 192 kann nun die Betätigungsstange 258 in die Neutralstellung und dementsprechend die Schaltstange 262 in die Neutralstellung bewegt werden, wodurch der sechste Gang ausgelegt wird. Nur sind beide Betätigungsstangen und dementsprechend alle Schaltstangen in der Neutralstellung. Die Wählbetätigungsstange 302 kann nun zurück in die Stellung gemäß Fig. 19 bewegt werden. Die Mitnahmeelement 270 und 272 bzw. deren Führungsstifte 286 und 288 befinden sich nun in den Gassen 1-3 bzw. R-2. Dies ist gleichbedeutend damit, dass der Finger 282 des Mitnahmeelements 270 in die Schaltstange 264 und die Zunge 284 des Mitnahmeelements 272 in die Schaltstange 268 formschlüssig eingreift. Nun kann vermittels des Zylinders 194 die Betätigungsstange 260 in die Stellung Gβ verschoben und damit auf der Schaltstange 268 der dritte Gang eingelegt werden.

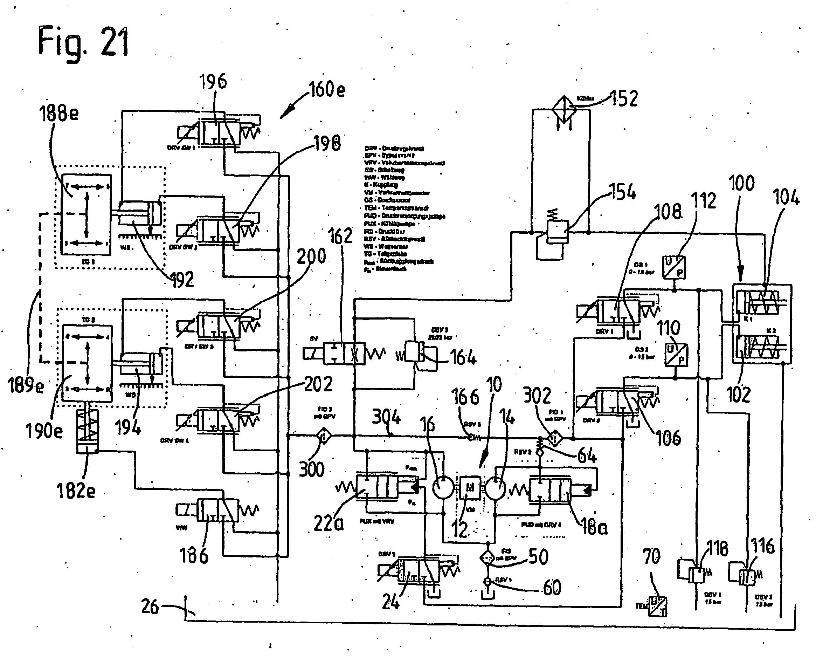

Fig. 21 bis 27 zeigen hydraulische Schaltpläne mit einer jeweiligen Pumpenanordnung 10 in Zuordnung zu einem Getriebe und einer Doppelkupplung. In den hydraulischen Schaltplänen oder/und betreffend die Pumpenanordnung sind jeweils Abwandlungen oder Weiterbildungen gegenüber den hydraulischen Schaltplänen der Fig. 10 bis 16 bzw. den Pumpenanordnungen der Fig. 1 bis 16 realisiert. Es werden hier jeweils nur die Unterschiede gegenüber den jeweils vorangehend schon beschriebenen Anordnungen erläutert, soweit diese hier von Interesse sind.

Das Beispiel der Fig. 21 unterscheidet sich auf den ersten Blick wenig vom Beispiel der Fig. 16. Es ist ein Getriebebetätigungsabschnitt 160e wie bei Fig. 16 vorgesehen, allerdings mit einer etwas anderen Zuordnung der Gänge zu den Gassen und Schaltpositionen. Zum Schaltventil 162 ist das Druckbegrenzungsventil 164 parallel geschaltet. Zwischen dem Hydrauliksystemabschnitt des Getriebebetätigungsabschnitts 160e einerseits und der von der Pumpenanordnung 10 einschließlich der zugehörigen Ventile 18a, 22a und 24 gebildeten Druckölversorgung andererseits ist ein Druckfilter 300 zwischengeschaltet. Ferner ist zwischen der angesprochenen Druckversorgung einerseits und den Steuer/Regel-Ventilen 106, 108 für die Kupplungsbetätigung andererseits ein Druckfilter 302 zwischengeschaltet. Wie auch bei den anderen Filtern (Druckfilter bzw. Saugfilter) der verschiedenen Hydrauliksysteme können die Filter mit einem Bypassventil ausgeführt sein.

Von der Abgabeseite der Druckölpumpe 14 ist das Drucköl über das Rückschlagventil 64 und den Druckfilter 302 den Steuer/Regel-Ventilen 106 und 108 zuführbar. Der Zulauf von der Kühlölpumpe 16 und der Zulauf von der Druckölpumpe 14 sind durch eine Ölleitung 304 miteinander verbunden, im Effekt ähnlich wie bei den Beispielen der Fig. 13 und 16, wobei das Rückschlagventil 166 vorgesehen ist, das vom Zulauf der Kühlölpumpe 16 in Richtung zu den Steuer/Regel-Ventilen 106 und 108 durchlässt, nicht aber vom Zulauf der Druckölpumpe 14 in Richtung zum Hydraulikabschnitt des Getriebebetätigungsabschnitts 160e und zur Kühlölzuführung über das Schaltventil 162 bzw. das Druckbegrenzungsventil 164 in Richtung zur Doppelkupplung 100.

Eine aus dem Diagramm der Fig. 21 alleine nicht ersichtliche Spezialität ist folgende. Die Druckölpumpe 14 ist für eine vergleichsweise kleine Förderleistung ausgelegt und dementsprechend auch baulich klein, während die Kühlölpumpe 16 für eine vergleichsweise große Förderleistung und auch für die Bereitstellung eines vergleichsweise großen Drucks ausgeführt ist.

Die Kühlölpumpe 16 ist dafür vorgesehen, bedarfsweise die Druckölpumpe 14 beim Aufbau des benötigten Betätigungsdrucks zu unterstützen. Die Druckölpumpe selbst ist nur dafür vorgesehen, einen schon aufgebauten Betätigungsdruck an der Doppelkupplung 100 aufrecht zu erhalten. Das Fördervolumen der Druckölpumpe 14 ist hierzu dafür ausgelegt, nur etwaige Leckagen an den Drehdurchführungen und Ventilen durch Nachförderung von Drucköl auszugleichen. Der demgegenüber wesentlich größere Ölvolumenstrom, der zum schnellen Befüllen der Betätigungszylinder der Doppelkupplung 100 bzw. zum Betätigen der Getriebeaktuatorik erforderlich ist, wird durch die Kühlölpumpe 16 bereitgestellt.

Letzteres geschieht dadurch, dass das Schaltventil 162 geschlossen wird. Damit steigt der Druck auf der Abgabeseite der Kühlölpumpe 16 an und wird über eine Rückführung zum Ventil 22a (p_{rück}) und den vom Ventil 24 abgegebenen Steuerdruck (pₛₜ) durch das Ventil 22a eingestellt. Das Rückschlagventil 166 macht auf, wenn der Öldruck abgabeseitig der Pumpe 16 größer als der Öldruck abgabeseitig der Pumpe 14 ist. Damit kann dann der der jeweils zu betätigenden Kupplungsanordnung der Doppelkupplung 100 angeordnete, zu befüllende Betätigungszylinder schnell auf Grundlage des von der Kühlölpumpe 16 bereitgestellten Ölvolumenstroms gefüllt werden. Ist ein gewünschter Betätigungszustand erreicht, wird das Schaltventil 122 wieder geöffnet und die Druckölpumpe 14 übernimmt das "Halten" des momentanen Betätigungsdruckes an der Doppelkupplung 100.

Die Auslegung der verschiedenen Ventile und Steuer- und Betätigungsdrücke ist eine dem Fachmann geläufige Aufgabe. Beispielsweise kann das Ventil 22a so ausgelegt sein, dass die Federkraft von der Kraft infolge der Rückführung p_{rück} erst kompensiert wird, wenn ein Rückführungsdruck p_{rück} größer als 29 bar (beispielsweise p_{rück} = 30 bar) erreicht ist. In Kombination mit einer entsprechenden Auslegung des Druckbegrenzungsventils 164, das zum Schaltventil 162 parallel geschaltet ist, wird so erreicht, dass während einer Schaltung (Schaltventil 162 geschlossen) die Doppelkupplung 100 über das Druckbegrenzungsventil 164 gekühlt werden kann. Ist während einer Schaltung keine Kühlung für die Doppelkupplung erforderlich, so kann über den Steuerdruck pₛₜ (eingestellt über das Druckregelventil 24) eine zusätzliche Kraft auf das Ventil 22a erzeugt werden, so dass dieses Ventil aufmacht und der Druck auf der Abgabeseite der Kühlölpumpe 16 gesenkt wird.

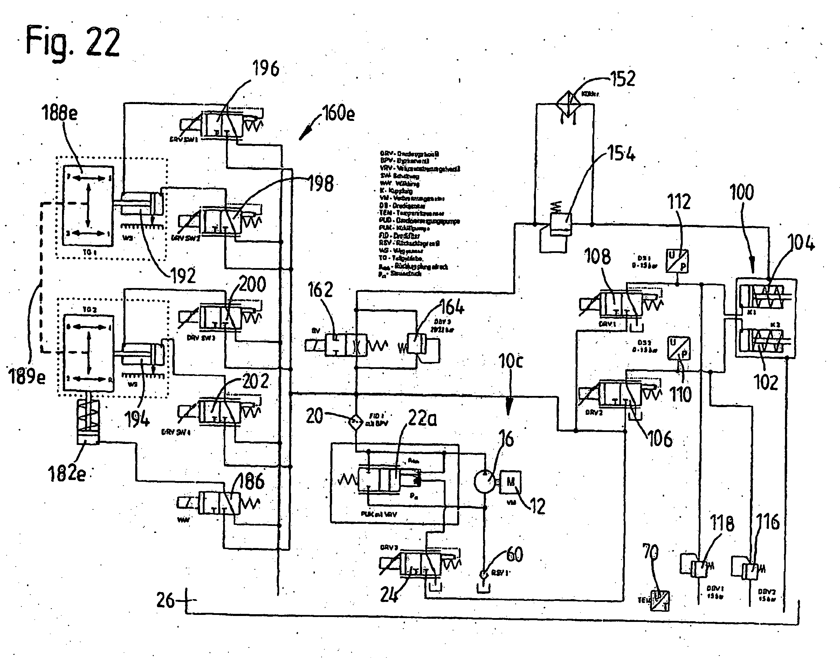

Fig. 22 zeigt eine Ausführungsvariante, bei der die Kupplungs- und Getriebebetätigung und die Kupplungskühlung auf Grundlage einer einzigen Pumpe 16 einer Pumpenanordnung 10c erfolgt. Die Pumpe 16 wird vorzugsweise durch den Verbrennungsmotor 12 angetrieben, wie in der Darstellung der Fig. 22 gezeigt. Zur Einstellung, insbesondere Steuerung oder - vorzugsweise - Regelung des abgabeseitigen Drucks bzw. des abgegebenen Ölvolumenstroms ist das 2/2-Wege-Ventil 22a vorgesehen, das in seiner Funktion den vorangehend erläuterten Ventilen an entsprechender Stelle, etwa dem Ventil 22a oder 18a, entspricht, wobei eine Rückführung des abgabeseitigen Öldrucks an einen Steuereingang des Ventils 22 wie beim Ventil 22a der Fig. 21 realisiert ist.

Die Einstellung des Versorgungsdrucks wird ähnlich wie beim Beispiel der Fig. 21 durch zwei Ventile erreicht, nämlich durch das auch als Volumenstrom-Regelventil bezeichenbare Ventil 22a und das Schaltventil 162. Das Ventil 22a wird dabei durch den Rückführungsdruck p_{rück} von der Abgabeseite der Pumpe 16 und den Steuerdruck pₛₜ vom Druckregelventil 24 gesteuert. Mit diesem Steuerdruck kann durch entsprechende Ansteuerung des Druckregelventils 24 der benötigte Systemdruck, der für die Ansteuerung der Kupplung oder/und für die Getriebebetätigung benötigt wird, eingestellt werden. Steigt der Systemdruck über einen gewissen Wert, so sorgt der Rückkopplungsdruck p_{rück} dafür, dass das Ventil 22 geöffnet wird und so ein weiterer Druckanstieg verhindert wird.

Soll die Getriebeaktuatorik betätigt werden, so wird das elektrisch betätigbare Schaltventil 162 durch entsprechende Ansteuerung geschlossen. Das parallel geschaltete Druckbegrenzungsventil 164 sorgt dafür, dass der Druck einen gewissen Wert nicht übersteigt, wodurch auch für einen gewissen Kühlölstrom in Richtung zur Doppelkupplung 100 gesorgt wird.

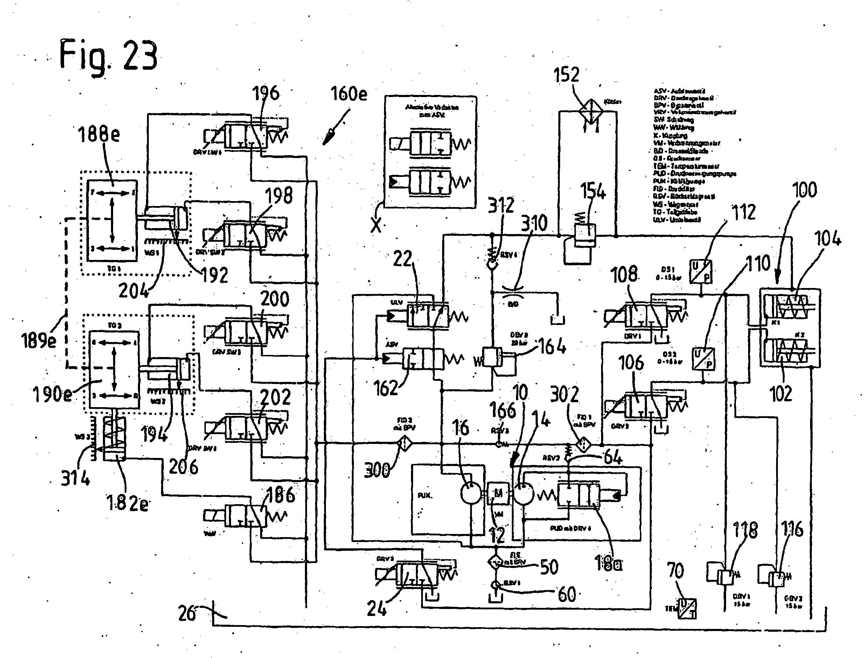

Fig. 23 unterscheidet sich vom Beispiel der Fig. 21 vor allem dadurch, dass anstelle des Ventils 22a das 3/2-Wege-Ventil 22 vorgesehen ist und dass dieses dem Schaltventil 162 in Richtung zur Doppelkupplung 100 nachgeschaltet ist. Das Schaltventil 162 kann als elektrisch betätigbares Ventil ausgeführt sein, wie beim Beispiel der Fig. 21 oder 22 (falls gewünscht - wie dort - mit integrierter Drossel im Durchflusszweig) oder als druckbetätigtes Ventil, wie konkret beim hydraulischen Schaltplan der Fig. 23 realisiert. Falls gewünscht, kann man eine Drossel in den Durchflusszweig des druckangetriebenen Schaltventils vorsehen. Die beiden angesprochenen Ausführungsvarianten in Bezug auf das Schaltventil 162 sind durch entsprechende Schaltsymbole in der Subfigur X repräsentiert.

Betreffend die besonders bevorzugte Ausführungsvariante, dass das auch als "Aufstauventil" bezeichenbare Schaltventil 162 ebenso wie das Ventil 22 als druckangesteuertes Ventil ausgeführt ist, ist insbesondere auf die folgende vorteilhafte Ausführungsmöglichkeit hinzuweisen. Beide Ventile können über das gemeinsam zugeordnete Druck-Steuer/Regel-Ventil 24 angesteuert werden, wobei das Schaltventil 162 und das Ventil 22 vorteilhaft auf unterschiedlichen Druckniveaus arbeiten können. Beispielsweise könnte das Druck-Steuer/Regelventil Drücke zwischen 0 und 10 bar einstellen. Das den Volumenstrom bzw. den Abgabedruck einstellende Ventil 22 könnte dann im Druckbereich von 0 bis 8 bar arbeiten und innerhalb dieses Druckbereichs den Volumenstrom zur Kupplung bzw. zum Ölreservoir (Tank) bzw. zur Ansaugseite der Pumpe 16 proportional zum anstehenden Druck oder gemäß einer vorgegebenen Kennlinie steuern. Das Ventil 22 wirkt dabei als eine Art Stromteiler. Stellt das Ventil 24 einen höheren Druck im Bereich von 9 bis 10 bar ein, schließt das Aufstauventil 162, so dass ein Druck erzeugt wird, der zum Betätigen der Getriebeaktuatorik ausreicht. Die vorstehend erwähnten Druckwerte haben rein exemplarischen (beispielhaften) Charakter. Die gewünschten unterschiedlichen Arbeitsdruckniveaus lassen sich einfach mithilfe unterschiedlicher Federvorspannung der Ventilschieber der Ventile 22 und 162 einstellen.

Die Kühlpumpe 16 wird im Aufstaufall in der Regel immer mehr Öl fördern als für die Getriebeschaltung erforderlich ist. Das überschüssige Öl wird über das Druckbegrenzungsventil 164 abgeleitet und zum Teil für die Kühlung der Doppelkupplung 100 verwendet. Wie in Fig. 23 gezeigt, kann man dem Druckbegrenzungsventil 164 eine zum Tank führende Blende 310 und ein zur Doppelkupplung führendes Rückschlagventil 312 nachschalten. Die Blende 310 und das Rückschlagventil 312 sind dabei vorzugsweise so ausgelegt, dass ein Teil des überschüssigen Öls zurück in den Tank geleitet wird und ein anderer Teil zur Kühlung der Kupplung verwendet wird. Das Rückschlagventil 312 hat speziell die Aufgabe, ein Abfließen von Kühlöl, das durch das Ventil 22 in Richtung zur Kupplung 100 fließt, in Richtung zum Tank zu verhindern.

Betreffend den Getriebebetätigungsabschnitt 160e ist noch darauf hinzuweisen, dass dem Betätigungszylinder (Gassenwahlzylinder) 182e ein Weggeber 314 zugeordnet ist.

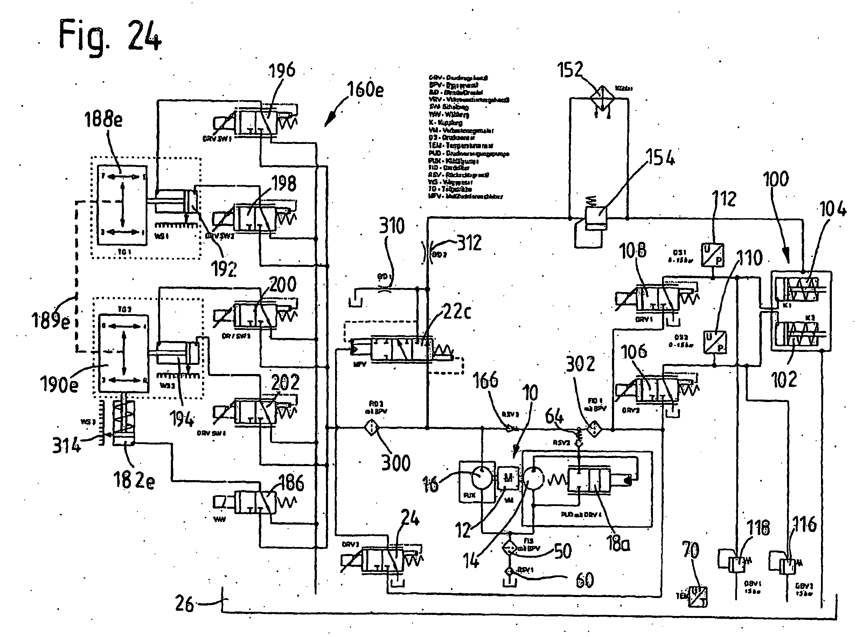

Die Ausführungsvariante der Fig. 24 unterscheidet sich von der Ausführungsvariante der Fig. 23 vor allem dadurch, dass anstelle des 3/2-Wege-Steuer/Regel-Ventils 22 und des Aufstauventils 162 ein 3/3-Wege-Multifunktionsventil 22c vorgesehen ist, das die Funktionen des Aufstauventils 162 und des "Umleitventils" 22 darstellt. In einem unteren Ansteuerdruckbereich arbeitet das Ventil 22c als Stromteiler, der entsprechend dem Ansteuerdruck des Ventils 24 das Öl zur Kupplung bzw. zum Tank/Ansaugtrakt der Kühlölpumpe 16 leitet. Es sei allgemein darauf hingewiesen, dass es gleichwertig ist, das Öl direkt zu einem Ansaugeingang der Kühlölpumpe (oder betreffend die Druckölversorgung mittels der Druckölpumpe 14 zu einem Ansaugeingang der Druckölpumpe) zurück zu leiten oder in ein bzw. das Ölreservoir des Hydrauliksystems, das in Flussverbindung, insbesondere Ansaugverbindung, mit dem Ansaugeingang der betreffenden Pumpe steht.

In einem oberen Druckbereich des Ansteuerdrucks vom Ventil 24 wirkt das Ventil 22c als Aufstauventil. Über eine Rückkopplung wird der aufgestaute Druck auf den Schieber des Ventils 22c rückgekoppelt und so eine Maximaldruckbegrenzung erreicht. Insoweit erfüllt das Ventil 22c auch die Funktion des Druckbegrenzungsventils 164 mit. Die Blenden 310 und 312 sind so ausgelegt, dass dann, wenn sich das Ventil 22c zwischen seiner Aufstau- und Tankweiterleitungsposition befindet, noch ein gewisser Volumenstrom zur Kühlung der Kupplung über die Blende 312 in Richtung zur Doppelkupplung 100 schließt.

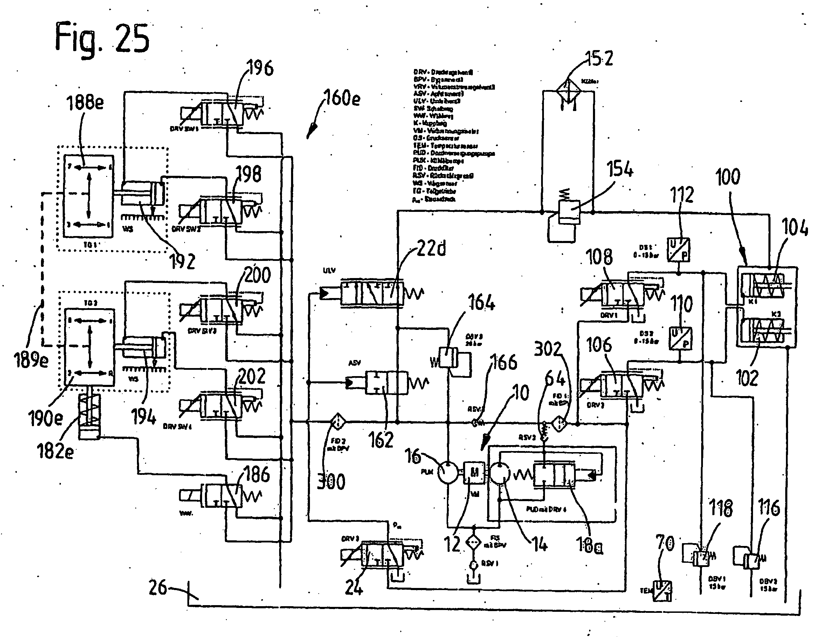

Eine weitere Ausführungsvariante zur Lösung gemäß Fig. 23 ist in Fig. 25 gezeigt. Anstelle des 3/2-Wege-Ventils 22 ist ein 3/3-Wege-Ventil 22d ähnlich wie das Ventil 22c der Fig. 24 vorgesehen, das allerdings keine Druckbegrenzungsfunktion aufgrund einer Druckrückkopplung realisiert. Dem Ventil 22d ist das Schalt- oder Aufstauventil 162 vorgeschaltet, das gemeinsam mit dem Ventil 22d durch den Steuerdruck des Ventils 24 angesteuert wird. Dem Aufstauventil 162 ist das Druckbegrenzungsventil 164 parallel geschaltet.

Eine geeignete Abstimmung der Ventile aufeinander, etwa vermittels einer entsprechenden Abstimmung der Federn der Ventilschieber aufeinander, sieht beispielsweise wie folgt aus. Wird z. B. durch das Druck-Steuer/Regel-Ventil 24 ein Druck von 0 bis 15 bar bereitgestellt, so können die Ventile 22d, 162 und 164 beispielsweise derart ausgelegt sein, dass das Ventil 22d zwischen 0 und 8 bar den Volumenstrom zur Kupplung bzw. zum Tank steuert. In einem darüber liegenden Druckbereich von beispielsweise 9 bis 10 bar tritt das Schaltventil 162 in Aktion und lässt kein Öl zu dem Ventil 22d passieren. Ein unzulässig hoher Druck wird durch das Druckbegrenzungsventil 464 vermieden, indem dieses bei Überschreitung einer Druckschwelle öffnet. Das durch das Druckbegrenzungsventil 164 durchgelassene Öl gelangt dann zum Ventil 22d und kann dann beispielsweise bei einem Steuerdruck im Bereich von 9 bis 10 bar wieder in den Tank geleitet werden. Erhöht man jedoch den Steuerdruck am Steuer/Regel-Ventil 22d (und damit auch am Schaltventil 162) auf ein Niveau von beispielsweise 11 bis 15 bar, so kann mithilfe der dritten Stellung des Ventils 22d eine Steuerung des Volumenstroms zum Tank bzw. der Kupplung erreicht werden, auf Grundlage des über das Druckbegrenzungsventil 164 zugeführten Ölvolumenstroms. Das Schaltventil 162 bleibt dabei geschlossen.

Die Steuerung des Volumenstroms zum Tank bzw. zur Doppelkupplung ist insbesondere dann sinnvoll, wenn häufig geschaltet, also die Getriebeaktuatorik häufig betätigt wird und dementsprechend entsprechend oft bzw. andauernd mittels des Schaltventils 162 Öl zum Druckaufbau aufgestaut werden muss, so dass ohne die Ölzufuhr über das Druckbegrenzungsventil 164 und die dritte Stellung des Ventils 22d vergleichsweise wenig Kühlöl zur Doppelkupplung gelangen würde.

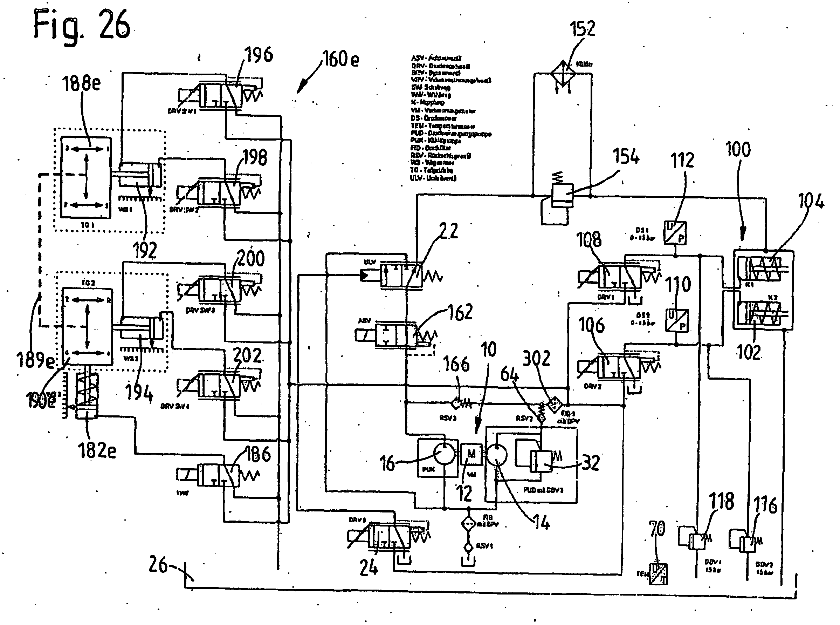

Eine weitere Ausführungsvariante der Lösung gemäß Fig. 23 ist in Fig. 26 gezeigt. Bei der Lösung gemäß Fig. 26 ist das Aufstauventil 162 kein durckgesteuertes, sondern ein elektrisch angesteuertes Ventil. Der Vorteil eines elektrischen Aufstauventils liegt vor allem in der Reaktionszeit des Ventils. Gemäß Fig. 26 wird das Aufstauventil 62 auf elektrischem Wege direkt angesteuert, wohingegen gemäß Fig. 23 das dortige Aufstauventil 122 indirekt über das Ventil 24 angesteuert wird. Der Vorteil des hydraulisch betätigbaren Aufstauventils gemäß Fig. 23 liegt in einem gewissen Kostenvorteil gegenüber der elektrischen Lösung.

Zur Pumpenanordnung 10 der Fig. 26 ist noch darauf hinzuweisen, dass der Druckölpumpe 14 anstelle des Ventils 18a gemäß Fig. 23 ein Druckbegrenzungsventil 32 zugeordnet ist. Gegenüber der Lösung der Fig. 5 ist das dortige Ventil 18 weggefallen. Der abgabeseitige Druck der Druckölpumpe 14 ist somit durch die Auslegung des Druckbegrenzungsventils 32 fest eingestellt.

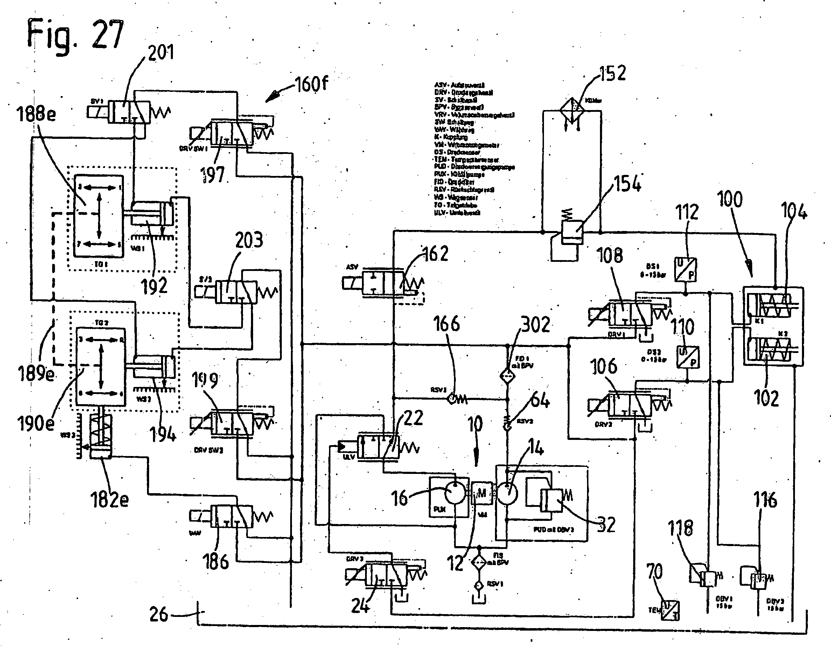

Das Beispiel der Fig. 27 kann als Abwandlung des Beispiels der Fig. 26 angesehen werden. Während gemäß Fig. 26 das Umleitventil 22 dem Aufstauventil 162 nachgeschaltet ist, ist gemäß Fig. 27 das Umleitventil 22 dem Aufstauventil 162 vorgeschaltet, also zwischen der Druckölpumpe 16 und dem Aufstauventil 162 angeordnet. Das Umleitventil 22 könnte beispielsweise direkt an der Pumpe 16 angeordnet oder in diese integriert sein. Der Vorteil der Lösung gemäß Fig. 27 ist, dass Strömungsverluste, die durch das Umpumpen des Kühlöls durch längere Leitungen entstehen, vermieden oder zumindest vermindert werden.

Hinzuweisen ist noch auf den anders gestalteten Getriebebetätigungsabschnitt 160f. Die Auslegung oder Ausgestaltung des Hydraulikabschnitts des Getriebebetätigungsabschnitts 160f entspricht im Wesentlichen dem Beispiel der Fig. 12, mit dem Unterschied, dass den beiden Gassenmechaniken 188e und 190e ein gemeinsamer Nehmerzylinder 182e zugeordnet ist, wobei als Betätigungsanordnung beispielsweise die Lösung der Fig. 17 bis 20 realisiert sein könnte.

Allgemein ist noch auf Folgendes hinzuweisen. Die verschiedenartigen Pumpenanordnungen 10 und 10b gemäß den Fig. 10 bis 16 und 21 bis 27 sind untereinander austauschbar und überdies jeweils durch die andersartigen Pumpenanordnungen 10 gemäß den Fig. 1 bis 9 ersetzbar.

Ferner kann bei allen Beispielen entweder nur ein Saugfilter für die Pumpe bzw. Pumpen oder nur ein Druckfilter für die Pumpe bzw. Pumpen oder sowohl ein Saugfilter und ein Druckfilter für die Pumpe bzw. Pumpen verwendet werden. Maßgeblich ist hier die Empfindlichkeit der verwendeten Ventile auf im Öl mitgeführte Verunreinigungen.

In Abweichung von den Beispielen der Fig. 14 und 15 kommt es durchaus auch in Betracht, als Kühlölpumpe eine elektromotorisch angetriebene Pumpe und als Druckölpumpe eine verbrennungsmotorisch angetriebene Pumpe zu verwenden. Ferner kommt es durchaus in Betracht, sowohl für die Kühlölpumpe als auch für die Druckölpumpe eine elektromotorisch angetriebene Pumpe einzusetzen. Eine weitere Möglichkeit ist, eine sowohl der Kühlölversorgung als auch der Druckölversorgung dienende Pumpe anstelle von insgesamt zwei Pumpen einzusetzen (vgl. Fig. 22), die verbrennungsmotorisch oder elektromotorisch angetrieben sein kann.

Die Beispiele der Fig. 10 bis 16 und 21 bis 27 und ebenso die Beispiele der Fig. 1 bis 9 ermöglichen einen recht guten Wirkungsgrad betreffend die Bereitstellung des Drucköls für die hydraulische Getriebebetätigung, insbesondere im Vergleich zu herkömmlichen Automatgetrieben, bei denen unterschiedliche Druckniveaus durch verschiedene Druckminderventile auf Grundlage eines von einer Pumpe erzeugten, dementsprechend recht hohen Öldrucks bereitgestellt werden. Letzteres bedeutet, dass die betreffende Pumpe immer mehr Öl bei einem hohen Druck erzeugen muss, wodurch ein vergleichsweise schlechter Wirkungsgrad erreicht wird. Anzumerken ist ferner noch, dass mittels einer verbrennungsmotorisch angetriebenen Pumpe ohne gesonderte Maßnahmen eine Start-Stopp-Fähigkeit nicht gegeben ist. Diese kann z. B. auf einfache Weise mit einer elektrohydraulischen Druckversorgung erreicht werden, wie dies bei den Beispielen der Fig. 14 und 15 der Fall ist.

Bei den Beispielen der Fig. 10 bis 16 wurde davon ausgegangen, dass die Pumpenanordnung 10 bzw. 10b bzw. 10c, die gemäß den vorstehend gegebenen Hinweisen durchaus völlig anders ausgeführt sein kann als in den Figuren gezeigt, sowohl für die Druckversorgung zur Kupplungsbetätigung als auch zur Druckversorgung für die Getriebebetätigung dient. Die betreffende Pumpenanordnung kann, ebenso wie im Prinzip die Pumpenanordnungen der Fig. 1 bis 9, auch alleine zur Druckölversorgung für die Getriebebetätigung oder alleine für die Druckölversorgung für die Kupplungsbetätigung dienen. Die verschiedenartigen Ausgestaltungen der Getriebebetätigungsabschnitte 160, 160c, 160d, 160e und 160f sind überdies völlig unabhängig von der Art und Weise der Druckölbereitstellung von Interesse.

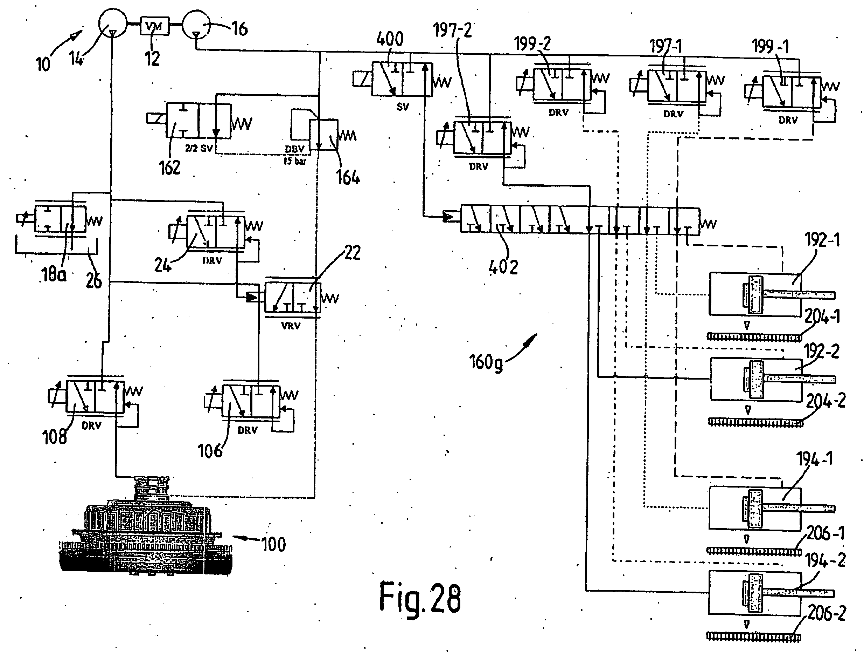

Die Beispiele der Fig. 28 bis 32 entsprechen hinsichtlich der Art und Weise der Bereitstellung des Kühlöls zur Kühlung der Doppelkupplung 100 und des Drucköls zur Betätigung der beiden Kupplungsanordnungen der Doppelkupplung 100 weitgehend dem Beispiel der Fig. 23. Das druckbetätigte Volumenstrom-Steuer/Regel-Ventil 22 ist dem hier allerdings elektrisch betätigbaren Aufstauventil 162 nachgeschaltet. Dem Aufstauventil 162 ist das Druckbegrenzungsventil 164 parallel geschaltet.

Zu den hydraulischen Schaltplänen der Fig. 28 bis 32 ist allgemein darauf hinzuweisen, dass die Rückflussleitungen von den verschiedenen Ventilen zum Reservoir 26 nur für das Ventil 18a exemplarisch eingezeichnet sind.

Die Ausführungsvarianten der Fig. 28 bis 32 unterscheiden sich jeweils durch die Ausgestaltung des Getriebebetätigungsabschnitts. Gemäß Fig. 28 ist ein Getriebebetätigungsabschnitt 160g vorgesehen, der - ähnlich wie beim Beispiel der Fig. 15 - vier doppelt wirkende Betätigungszylinder 192-1, 192-2, 194-1 und 194-2 aufweist. Den vier Zylindern sind insgesamt vier Druck-Steuer/Regel-Ventile, insbesondere Proportionaldruckreglerventile 197-1, 199-1, 197-2 und 199-2 zugeordnet, und es ist ein mittels eines Schaltventils 400 zwischen zwei Schaltstellungen verstellbares Nachfolgeschieberventil 402 vorgesehen, das die Drücke der vier Steuer/Regel-Ventile wahlweise zum einen, dem einen Teilgetriebe des Doppelkupplungsgetriebes zugeordneten Betätigungszylinderpaar und zum anderen, dem anderen Teilgetriebe des Doppelkupplungsgetriebes zugeordneten Betätigungszylinderpaar leitet. Den vier doppelt wirkenden Zylindern ist jeweils ein Wegsensor zugeordnet, wie beim Beispiel der Fig. 15.

Mit den vier Druck-Steuer/Regel-Ventilen bedrucken jeweils zwei zum gleichen Zeitpunkteinen ausgewählten Betätigungszylinder (Schaltzylinder). Dass nicht alle Betätigungszylinder gleichzeitig geschaltet werden können, ist zumindest in der Praxis kein Nachteil, jedenfalls wenn - wie beim Beispiel - je ein Zylinderpaar einem Teilgetriebe des Doppelkupplungsgetriebes zugeordnet ist. Es ist nämlich fast immer nur eine Kupplung der Doppelkupplung aktiv, und auf dem dieser aktiven Kupplung zugeordneten "aktiven Getriebestrang" soll und kann in der Regel. kein Gang geschaltet werden. Für die Getriebebetätigung sind gemäß Fig. 28 neben dem druckbetätigten Nachfolgeschieberventil 402 insgesamt vier elektrisch betätigbare bzw. ansteuerbare Ventile vorgesehen, nämlich die vier Druck-Steuer/Regel-Ventile und das Schaltventil 400.

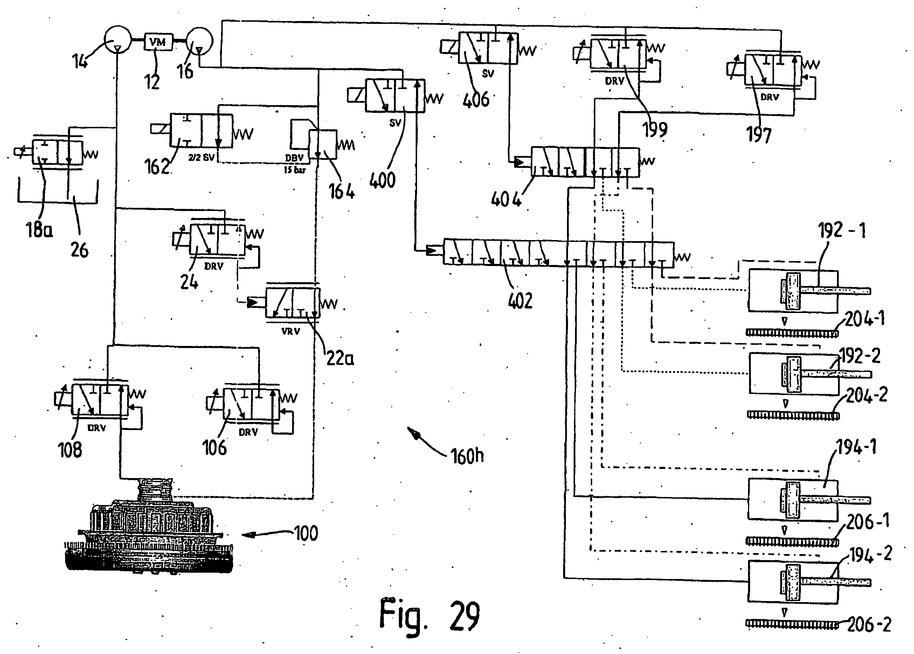

Gemäß der Ausführungsvariante der Fig. 29 sind - ähnlich wie beim Beispiel der Fig. 15 - insgesamt nur zwei Druck-Steuer/Regel-Ventile (insbesondere Proportionalreglerventile) 197 und 199 vorgesehen, die mittels zwei Nachfolgeschieberventile 402 und 404 mit einem ausgewählten der vier doppelt wirkenden Zylinder 192-1, 192-2, 194-1 und 194-2 in Druckbeaufschlagungsverbindung bringbar sind. Die Steuer/Regel-Ventile bedrucken zu einem Zeitpunkt also gemeinsam einen der Betätigungszylinder auf beiden Kolbenseiten. Die beiden Nachfolgeschieberventile 402 und 404 sind jeweils mit einem Steuereingang an einem Schaltventil 400 bzw. 406 angeschlossen.

Die Ausführungsvariante der Fig. 29 kommt neben den beiden druckbetätigten Nachfolgeschiebern 402 und 404 mit zwei elektrisch ansteuerbaren Steuer/Regel-Ventilen und den beiden elektrisch betätigbaren Schaltventilen aus, soweit es um die Getriebebetätigung geht. Gegenüber der Ausführungsweise der Fig. 28 ist die Variante der Fig. 29 etwas komplexer und die Funktionalität des Getriebebetätigungsabschnitts 160h ist gegenüber dem Getriebebetätigungsabschnitt 160g etwas eingeschränkt, da auch bezüglich eines Teilgetriebes des Doppelkupplungsgetriebes nicht beide Zylinder gleichzeitig geschaltet werden können. Dies kann in bestimmten Fällen zu leicht längeren Schaltzeiten führen, was in der Regel aber hinnehmbar ist.

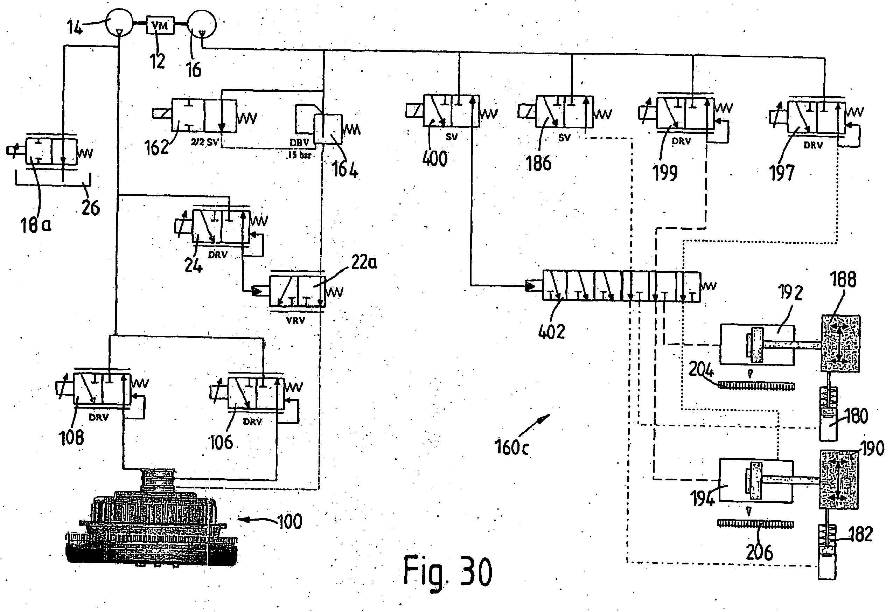

Gemäß dem Beispiel der Fig. 30 weist der Getriebebetätigungsabschnitt 160i zwei doppelt wirkende Schaltzylinder 192, 194 und zwei einfach wirkende Wählzylinder 180, 182 auf, die ihren Betätigungsdruck von zwei Druck-Steuer/Regel-Ventilen (insbesondere Proportionaldruckreglerventilen) 197 und 199 und einem Schaltventil 186 erhalten. Ein durch ein elektrisch betätigbares Schaltventil 400 zwischen zwei Schaltstellungen verstellbares Nachfolgeschieberventil 402 leitet die Drücke der Steuer/Regel-Ventile 197 und 199 und des Schaltventils 186 einem ausgewählten der Zylinderpaare 180, 192 einerseits und 182, 194 andererseits zu.

Auch beim Beispiel der Fig. 30, das neben dem Nachfolgeschieber 402 für die Getriebebetätigung insgesamt vier Ventile aufweist, bietet alle für das Schalten des Schaltgetriebes benötigten Funktionen, wobei allerdings wiederum zu einem Zeitpunkt nur eines der beiden Teilgetriebe geschaltet werden kann. Dies bedeutet, wie schon angesprochen, aber keinen wesentlichen Nachteil.

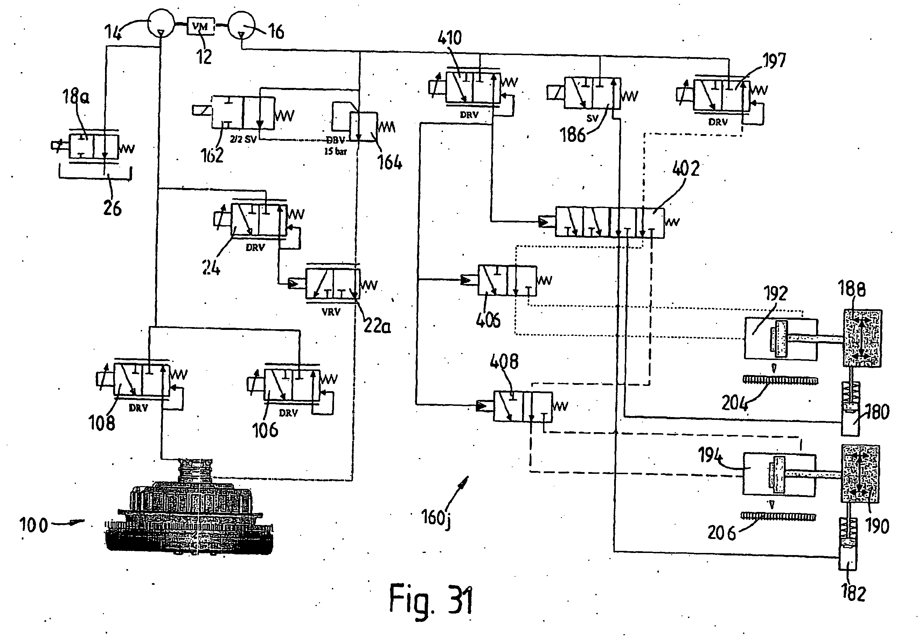

Beim Beispiel der Fig. 31 weist der Getriebebetätigungsabschnitt 160j in Zuordnung zum jeweiligen Doppelkupplungsteilgetriebe ebenfalls ein Zylinderpaar gebildet aus einem doppelt wirkenden Schaltzylinder 192 bzw. 194 und einem einfach wirkenden Wählzylinder 180 bzw. 182 auf. Es ist ein bei den doppelt wirkenden Zylindern zugeordnetes Druck-Steuer/RegelVentil (insbesondere Proportionaldruckreglerventil) 197 vorgesehen, das über ein Nachfolgeschieberventil 402 und zwei Schaltventile 406 und 408 mit einem ausgewählten der beiden doppelt wirkenden Zylinder 192, 194 in Druckanlegeverbindung bringbar ist, und zwar an einer ausgewählten Kolbenseite des betreffenden Zylinders. Es wird also jeweils nur eine Kolbenseite eines der beiden doppelt wirkenden Zylinder mit Betätigungsdruck beaufschlagt. Die Abfuhr des Öls aus dem momentan nicht mit Druck beaufschlagten, durch die Druckbeaufschlagung auf der anderen Kolbenseite sich im Volumen reduzierenden Kolbenraum des betreffenden Zylinders 192 bzw. 194 erfolgt über einen in Fig. 31 nicht dargestellten Abfluss zum Ölreservoir, der vorzugsweise in das Schaltventil 406 bzw. 408 integriert ist und vorzugsweise mit einer Drossel ausgeführt ist.

Die den Zylinderdruck und den Wähldruck auf die gewünschte Kolbenseite des gewünschten Betätigungszylinders schaltenden Nachfolgeschieber 402, 406 und 408, sind jeweils druckangesteuert ausgeführt und sprechen auf diskrete Druckniveaus an, die durch ein weiteres Druck-Steuer/Regel-Ventil (ggf. Proportionalreglerventil) 410 bereitgestellt werden.

Das Ventil 410 produziert vier diskrete Druckniveaus, beispielsweise 0 x Pₙₑₙₙ 1/3 x Pₙₑₙₙ, 2/3 x Pₙₑₙₙ und 1 x Pₙₑₙₙ. Jedem Druckniveau entspricht eine Schaltstellung der drei Schieber 402, 406 und 408, welche gegen eine jeweilige Feder bewegt werden müssen. Die Federvorspannung der Schieber ist unterschiedlich, so dass für jedes Druckniveau nur einer der Schieber geschaltet wird. Schieber mit einer gegenüber dem jeweiligen Druckniveau kleinerer Federvorspannung sind bereits geschaltet und Schieber mit einer gegenüber dem jeweiligen Druckniveau größeren Federvorspannung werden noch nicht geschaltet. Die Schieber sind wie folgt als Kaskade angeordnet, um den Zylinderdruck und den Wähldruck in den gewünschten Arbeitsraum zu leiten:

| Steuerdruck/ Pₙₑₙₙ | Stellung Schieber 402 | Stellung Schieber 406 | Stellung Schieber 408 | Aktiv: Kolbenseite Schaltzylinder | Aktiv: Wählzylinder |
|---|---|---|---|---|---|
| 0 | 0 | 0 | 0 | 192, links | 180 |
| 1/3 | 0 | 1 | 0 | 192, rechts | 180 |
| 2/3 | 1 | 1 | 0 | 194, links | 182 |
| 1 | 1 | 1 | 1 | 194, rechts | 182 |

Die hydraulische Schaltung gemäß Fig. 31 funktioniert besonders gut dann, wenn für eine recht gleichmäßige Druckversorgung gesorgt ist, so dass die diskreten Druckniveaus sicher erreicht werden können. Ein Nachteil der Schaltung gemäß Fig. 31 ist, dass nicht beide Kolbenseiten des betreffenden Zylinders 192 bzw. 194 gleichzeitig mit Druck beaufschlagt werden können, wodurch die Steuerung/Regelung (insbesondere Regelung) der Getriebebetätigung mittels des betreffenden Schaltzylinders etwas erschwert ist.

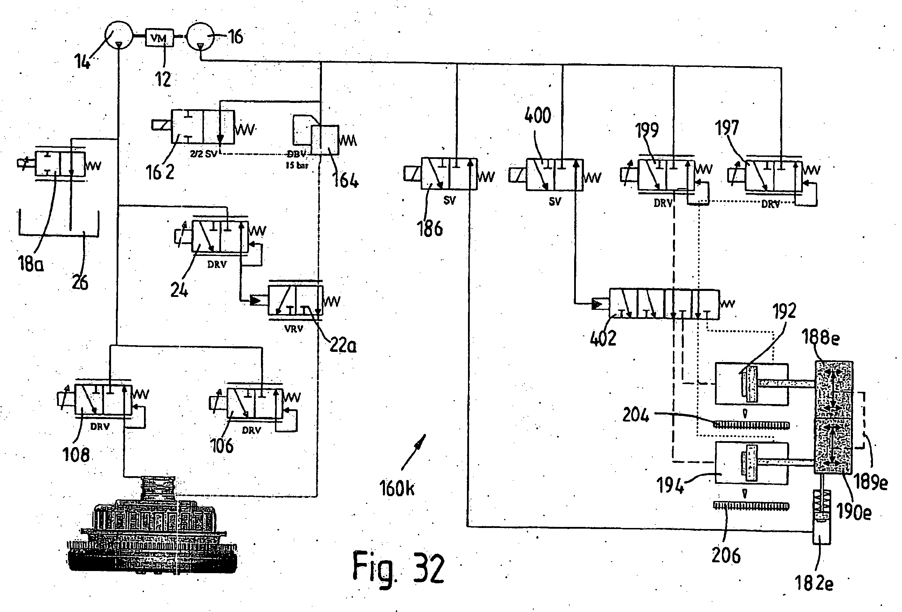

Der Getriebebetätigungsabschnitt 160k des Beispiels der Fig. 32 ist ähnlich wie der Getriebebetätigungsabschnitt 160i des Beispiels der Fig. 30 ausgeführt. Es ist allerdings - wie bei den Beispielen der Fig. 16, 21 bis 27 - nur ein Wählzylinder 182e vorgesehen, der beispielsweise vermittels einer Mechanik entsprechend den Fig. 17 bis 20 auf beide Teilgetriebe wirkt. Das Schaltventil 186 kann deswegen direkt am einfach wirkenden Wählzylinder 182e angeschlossen sein; die Druckversorgung des Wählzylinders braucht also nicht über den Nachfolgeschieber 402 verlaufen. Der Nachfolgeschieber 402 dient, wie beim Beispiel der Fig. 30, dazu, die Drücke der beiden Steuer/Regel-Ventile 197 und 199 auf beiden Kolbenseiten eines ausgewählten der beiden doppelt wirkenden Schaltzylindern 192, 194 anzulegen. Der Nachfolgeschieber 402 wird, wie beim Beispiel der Fig. 30, durch das Schaltventil 400 angesteuert.

Die Ausführungsvariante der Fig. 32 kommt für die Getriebebetätigung mit einer sehr kleinen Anzahl von elektrisch ansteuerbaren Ventilen aus, nämlich mit den beiden Druck-Steuer/Regel-Ventilen 197 und 199 und den beiden Schaltventilen 186 und 400. Dies ist aus Kostengründen vorteilhaft.

Noch einmal Bezug nehmend auf die Ausführungsvariante der Fig. 27 soll noch auf Folgendes hingewiesen werden. Es sind die beiden Druck-Steuer/Regel-Ventile, insbesondere Proportionaldruckreglerventile 197 und 199, vorgesehen, deren Drücke über die beiden Schaltventile 201 und 203 auf beiden Seiten eines ausgewählten, doppelt wirkenden Schaltzylinder 192 und 194 angelegt werden. Ein weiteres Schaltventil dient zur Betätigung des einfach wirkenden Wählzylinders 182e.

Die beiden Schaltventile 201 und 203 können unabhängig voneinander geschaltet werden. Man kann die Schaltfunktion der beiden Schaltventile 201 und 203 allerdings auch gewissermaßen elektrisch zusammenfassen, so dass beide Schaltventile immer gleichzeitig schalten. Man erhält dann eine Funktionalität wie im Falle des Beispiels der Fig. 32, bei der der Nachfolgeschieber 402 für eine entsprechende "Zusammenfassung" sorgt.

Zu allen vorstehend behandelten Beispielen ist noch zu erwähnen, dass man, auch wenn in der jeweiligen Figur nicht dargestellt, eine Wählwegsensierung im Getriebeaktuator bzw. im Getriebebetätigungsabschnitt vorsehen kann.

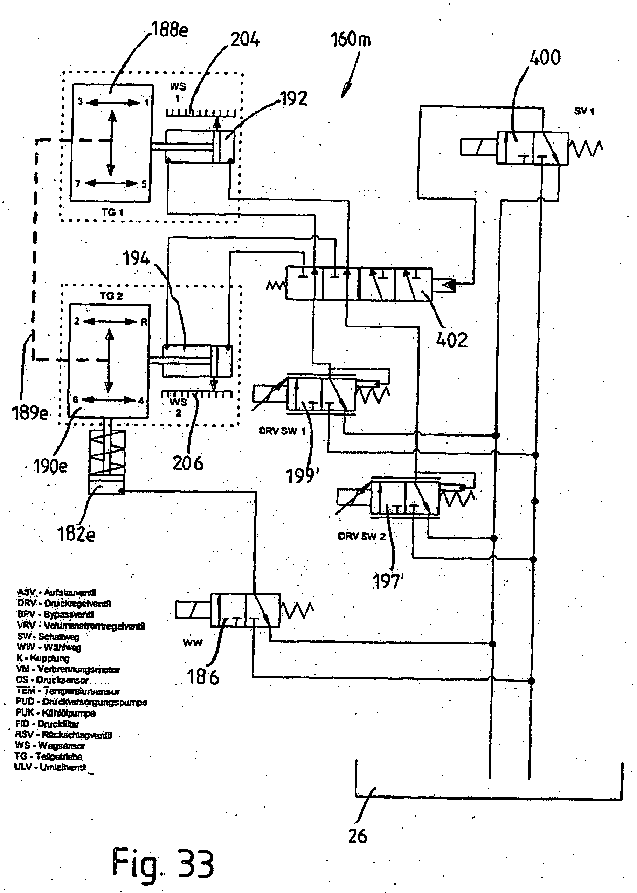

Fig. 33 zeigt hinsichtlich der Ausgestaltung des hydraulischen Getriebebetätigungsabschnitts eine Ausführungsvariante des Beispiels der Fig. 32. Während nach Fig. 32 das Ventil 197 entweder den kolbenstangenseitigen Druckraum des Zylinders 192 oder den kolbenstangenseitigen Druckraum des Zylinders 294 und das Ventil 199 entweder den kolbenstangenfernen Druckraum des Zylinders 192 oder den kolbenstangenfernen Druckraum des Zylinders 194 bedruckt, je nach Stellung des Schiebers 402, bedruckt das Ventil 137' der Fig. 33 entweder den kolbenstangenfernen Druckraum des Zylinders 192 oder den kolbenstangenseitigen Druckraum des Zylinders 194 und bedruckt das Ventil 199' der Fig. 33 entweder den kolbenstangenseitigen Druckraum des Zylinders 192 oder den kolbenstangenfernen Druckraum des Zylinders 194, je nach Stellung des Schiebers 402.

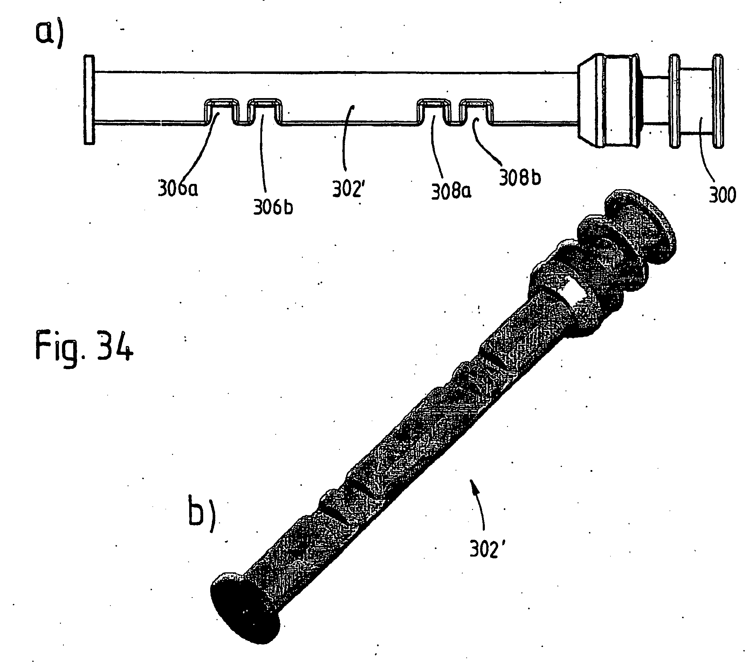

Es wird noch einmal auf das Beispiel der Fig. 17 bis 20 Bezug genommen. Man kann für die beiden Mitnahmeelemente 270 und 272 durchaus auch jeweils zwei Koppelstellen mit der Wählbetätigungsstange 302 vorsehen, so dass in beiden jeweils einer Wählstellung des Mitnahmeelements 270 bzw. 272 entsprechenden Axialpositionen der Wählbetätigungsstange der Formschlusseingriff zwischen dem Mitnahmeelement 270 einerseits und der Wählbetätigungsstange 302 andererseits sowie zwischen dem Mitnahmeelement 272 einerseits und der Wählbetätigungsstange 202 andererseits herstellbar ist, unabhängig davon, welche Schwenkstellung das jeweilige Mitnahmeelement gerade einnimmt, also mit welcher der Schaltstangen 262 und 264 bzw. der Schaltstangen 266 und 268 das jeweilige Mitnahmeelement gerade in Eingriff steht. Fig. 34 zeigt eine entsprechende Abwandlung der Wählbetätigungsstange, die mit 302 bezeichnet ist. Die Wählbetätigungsstange weist dementsprechend zwei Nuten 306a und 306b, die bezogen auf das Beispiel der Fig. 17 bis 20 der Mitnahmenase 210 des Mitnahmeelements 270 zugeordnet sind, und zwei Nuten 308a und 308b, die unter Bezugnahme auf das Beispiel der Fig. 17 bis 20 der Mitnahmenase 212 des Mitnahmeelements 272 zugeordnet sind, auf.

Hintergrund der vorstehend allgemein und in Bezugnahme auf Fig. 34 konkret angesprochenen Ausführungsmöglichkeit der Wählbetätigungsstange ist folgender. Es kommt im Betrieb unter gewissen Umständen immer mal wieder vor, dass im Getriebe ein Gang unter Last spontan herausfällt oder "herausspringt". Man spricht in diese Zusammenhang von einem so genannten "Gangspringer". Bei diesem Herausspringen eines eingelegten Ganges treten hohe Kräfte auf, die den Gang quasi mit Gewalt auslegen. Käme bei dem Beispiel der Fig. 17 bis 20 ein derartiger Gangspringer in einem Moment vor, in dem der normale formschlüssige Eingriff zwischen dem Mitnahmeelement und der Wählbetätigungsstange, vorliegend zwischen der Mitnahmenase 310 bzw. 312 und der Nut 306 bzw. 308 nicht herstellbar ist, die Nase also nicht mit der Nut axial fluchtet, so würde das Mitnahmeelement an der Wählbetätigungsstange anschlagen und diese seitlich, in axialer Richtung der Schaltstangen, wegdrücken. Dies könnte zu einer Zerstörung der Mechanik führen. Durch die Anordnung von Koppelstellenpaaren, vorliegend von Nutpaaren in Zuordnung zu einem jeweiligen Mitnahmeelement wird diese Gefahr umgangen, da in jeder Ruhezustandsposition der Wählbetätigungsstange ein jeweiliger Gang aus jeder Wählposition herausspringen kann und dabei die Herstellung des Eingriffs zwischen dem jeweiligen Mitnahmeelement und der Wählbetätigungsstange, vorliegend der Mitnahmenase 310 bzw. 312 mit einer der beiden Nuten 306a und 306b bzw. 308a und 308b ermöglicht ist. Das Herausspringen des Ganges stößt also nicht auf Widerstand an der Wählbetätigungsstange.

Die Ausbildung der Wählbetätigungsstange auf die beschriebene Art und Weise bietet überdies den Vorteil, dass zu jedem Zeitpunkt ein alter Gang ausgelegt und der jeweils gegenüberliegende Gang eingelegt werden kann, ohne dass vorher die Wählbetätigungsstange verstellt, also gewählt werden müsste.

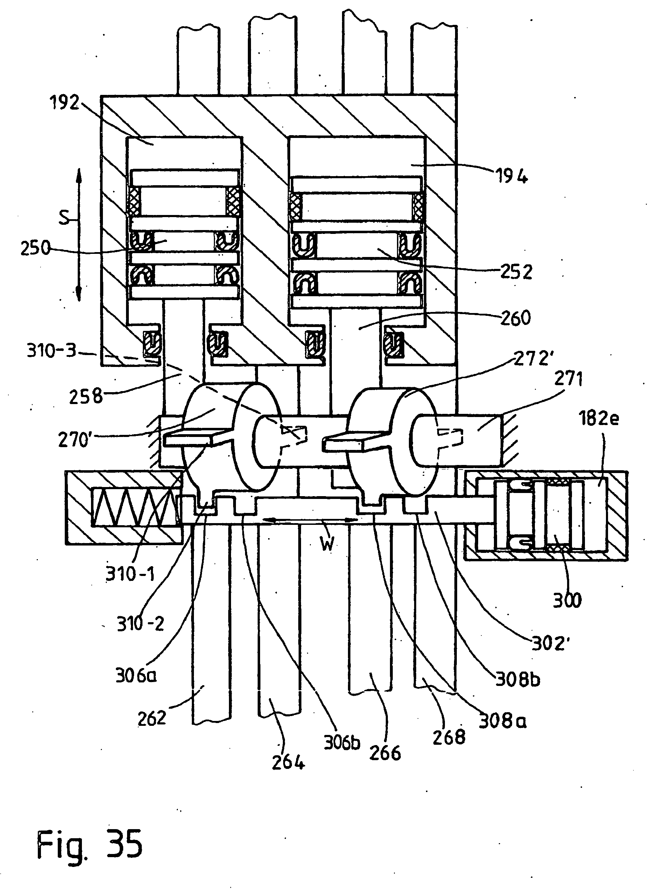

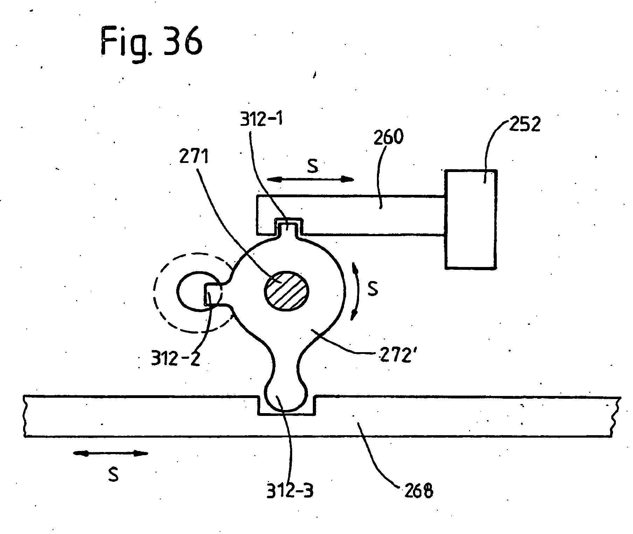

Beim Beispiel der Fig. 17 bis 20 ist der Schaltvorgang, also das Anlegen bzw. Auslegen eines jeweiligen Gangs einer Schiebebetätigung und das Wählen einer Schaltstange oder Kulissengasse einer Dreh- oder Schwenkbetätigung zugeordnet. Man kann aber auch eine umgekehrte Zuordnung vorsehen, also das Ein- und Auslegen eines Gangs könnte einer Dreh- oder Schwenkbetätigung und das Wählen einer Schaltstange bzw. einer Kulissengasse könnte einer Schiebebetätigung zugeordnet sein. Fig. 35 zeigt in Verbindung mit Fig. 36 ein entsprechendes Beispiel, bei dem eine Wählbetätigungsstange 302' entsprechend dem Lösungsvorschlag der Fig. 34 zum Einsatz kommt.

Im Gegensatz zum Beispiel der Fig. 17 bis 20 sitzen die Mitnahmeelemente 270' und 272' nicht auf den Kolbenstangen oder Betätigungsstangen 258 und 260, sondern auf einer gemeinsamen Lagerwelle 271, die sich parallel zur Wählbetätigungsstange 302' und orthogonal zu den Schaltstangen 262, 263, 266 und 268 erstreckt. Die Mitnahmeelemente 270' und 272', die bezogen auf das Beispiel der Fig. 35 und 36 besonders zweckmäßig auch als Koppelglieder bezeichenbar sind, sind axial längs der Lagerwelle 271 verschiebbar und um diese verschwenkbar.

Jedes Koppelglied 270' bzw. 272' weist drei radial vorstehende Mitnahmevorsprünge oder Mitnahmenasen 310-1, 310-2 und 310-3 bzw. 312-1, 312-2 und 312-3 auf, von denen die Mitnahmenase 310-1 bzw. 312-1 ständig mit einer zugeordneten Nut der Kolbenstange 258 bzw. 260 im Eingriff steht, die Mitnahmenase 310-2 bzw. 312-2 im Sinne der Mitnahmenase 310 bzw. 312 gemäß Beispiel der Fig. 17 bis 20 nach der Ausführungsvariante gemäß Fig. 34 wahlweise mit der Nut 306a oder der Nut 306b bzw. der Nut 308a bzw. der Nut 308b der Wählbetätigungsstange 302' in Eingriff steht bzw. bringbar ist und die Nase oder der Vorsprung 310-3 bzw. 312-3 im Sinne des Eingriffs der Eingriffsfinger 280 bzw. 282 bzw. der Eingriffszunge 284 nach dem Beispiel der Fig. 17 bis 20 in Abhängigkeit von der axialen Verschiebung des Mitnahmeelements 270' bzw. 272' längs der Lagerwelle 271 unter Vermittlung der Wählbetätigungsstange 302' entweder mit einer Nut der Schaltstange 262 oder einer Nut der Schaltstange 264 in Eingriff steht oder in Eingriff bringbar ist bzw. entweder mit einer Nut der Schaltstange 276 oder einer Nut der Schaltstange 268 in Eingriff steht oder in Eingriff bringbar ist.

Eine axiale Schaltbewegung S der Kolbenstange 258 bzw. 260 wird also in eine Schwenkbewegung S des Koppelglieds 270' bzw. 272' umgesetzt, die je nach Wählposition des betreffenden Koppelglieds in eine axiale Schaltbewegung S der jeweils ausgewählten Schaltstange umgesetzt wird. Demgegenüber wird eine axiale Wählverstellung W der Wählbetätigungsstange in eine axiale Verschiebung in gleicher Richtung des Koppelglieds 270' bzw. 272' umgesetzt.

Es ist noch darauf hinzuweisen, dass die Schaltstangen und die Wählbetätigungsstange nicht nur auf hydraulischem Wege, sondern auch pneumatisch, elektromotorisch oder elektromagnetisch angetrieben sein können. Entsprechende Aktuatoren sind im Fachgebiet wohlbekannt. Neben Linear-Aktuatoren kommen auch Dreh-Aktuatoren in Betracht.

Bei mehreren der vorangehenden Beispiele stellt die Steuerung/Regelung des Kühlölvolumenstroms zur Kupplungseinrichtung einen wichtigen Aspekt dar. Teilweise wird der Kühlölstrom zur Betätigung der Getriebeaktuatorik und der Kupplung eingesetzt oder ergänzend mitverwendet. Bei derartigen Konstellationen ist die Steuerung bzw. Regelung des Volumenstroms bei verschiedenen Druckniveaus und Versorgungsvolumenströmen von Bedeutung.

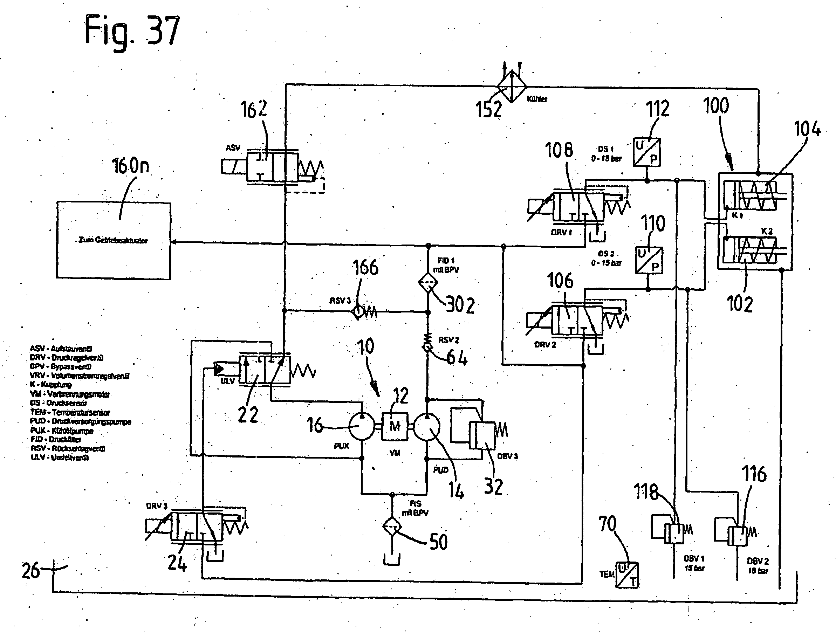

Bezug nehmend beispielsweise auf Fig. 27 oder die demgegenüber verallgemeinerte Fig. 37 ist anzumerken, dass zur Steuerung/Regelung des Kühlölvolumenstrom Druck-Steuer/Regelventile nicht das Optimum darstellen, da die Ventile keine Rückmeldung aus dem istwert des momentanen Volumenstroms erhalten. Es wirken sich dann Änderungen im Druck und in der Viskosität auf den Kühlstrom aus. Schließt man beispielsweise das Aufstauventil 162 im Hydrauliksystem der Fig. 37, so ändert sich am Umleitventil 22 die Druckdifferenz zwischen Arbeitsanschluss und Tankanschluss. Dies kann zur Folge haben, dass über das Aufstauventil, selbst wenn es nicht völlig geschlossen ist, kein Kühlöl mehr zur Kupplung gefördert wird, sondern dass alles von der Kühlölpumpe 16 geförderte Öl über das Umleitventil 22 zurück zur Pumpe fließt. Erst nach einer erneuten Einregelung oder Aussteuerung des Volumenstroms am Umleitventil 22 unter Vermittlung des Druck-Steuer/Regelventils 24 kann erneut ein Kühlölvolumenstrom zur Kupplung eingestellt werden. Es ist also stets nachzusteuern oder nachzuregeln, und es muss mit Ausfällen der Kühlung gerechnet werden.

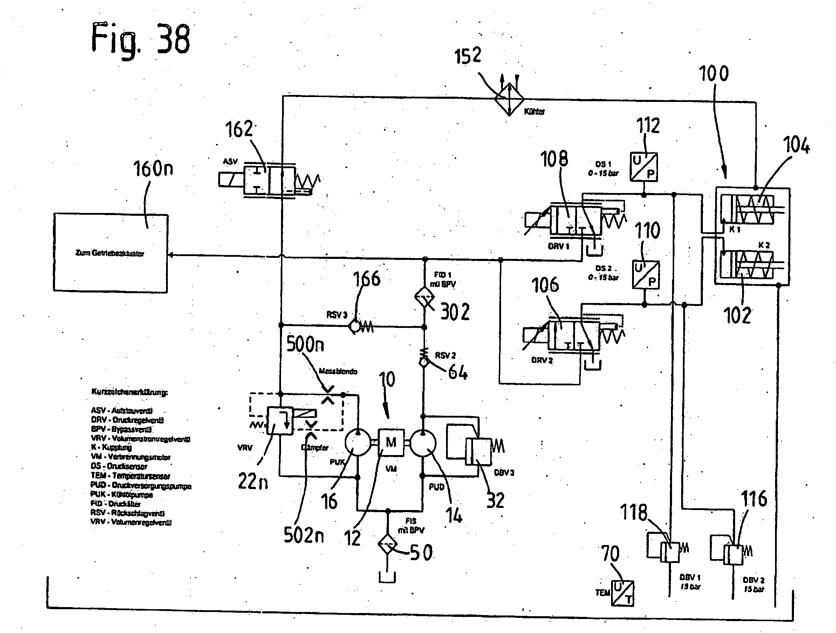

Eine vorteilhafte Lösung stellt die Verwendung eines zweiseitig beaufschlagten Volumenstrom-Regelventils an Stelle des Umleitventils 22 und des Druck-Regelventils 24 gemäß Fig. 37 dar. Fig. 38 zeigt ein Beispiel. Das Volumenstrom-Regelventil 22n arbeitet nach dem Druckwaage-Prinzip. In der Kühlölleitung befindet sich eine Messblende 500n, an der in Abhängigkeit von Volumenstrom ein Differenzdruck abfällt. Dieser Differenzdruck, der den momentanen Volumenstrom repräsentiert, wird an den beiden Seiten (Steuereingängen) des Volumenstrom-Regeleventils 22n angelegt. Dem Druck vor der Messblende 500n plus einer einstellbaren Magnetkraft wird der Druck nach der Blende plus eine Federkraft gegenübergestellt. Um für ein schnelles Schließen des Volumenstrom-Regelventils im Falle eines Druckanstiegs zu sorgen und damit einen Ausfall der Kupplungskühlung zu verhindern, kann zwischen dem pumpenseitigen Druckabgriff und dem der Federkraft entgegenwirkenden Steuereingang vorteilhaft ein Dämpfer 502n angeordnet sein. Das Volumenstrom-Regelventil kann dann schnell auf einen Druckanstieg ansprechen, sich in Schließrichtung verstellen und damit den Abfluss zur Eingangsseite der Pumpe reduzieren.

Wird im Falle des Hydrauliksystems der Fig. 38 das Aufstauventil 162 teilweise geschlossen, so steigt an beiden Seiten des Steuerkolbens des Volumenstrom-Regelventils 22n der Druck auf das gleiche Grundniveau an. Es bildet sich jedoch wie im nicht aufgestauten Zustand ein dem Druck-Grundniveau überlagerter Differenzdruck an der Messblende 500n aus, welcher bei zu geringem Durchfluss das Volumenstrom-Regelventil 22n schließt. Insbesondere in Kombination mit dem Dämpfer 502n kann das Volumenstrom-Regelventil auch auf schnelle Druckanstiege reagieren, wird in einem solchen Fall also in Richtung Schließen bewegt, was einen Ausfall der Kühlung verhindert.

Durch die Volumenstrom-Regelanordnung gemäß Fig. 28 kann ein konstanter Volumenstrom zur Kupplung hin gewährleistet werden, ohne eine Abhängigkeit vom Druckniveau oder auch der Viskosität. Die weitgehende Viskositätsunabhängigkeit resultiert aus einer inhärenten Eigenschaft der Messblende. Eine Messblende arbeitet nämlich - im Gegensatz zu Drosseln - nahezu viskositätsunabhäging.

Möchte man einen konstanten Volumenstrom einstellen, so ist eine Ausführung des Volumenstrom-Regelventils mit Solenoid zur Ausübung einer Magnet-Gegenkraft zur Federkraft nicht erforderlich. Mit der einstellbaren Magnetkraft kann der durch das Volumenstrom-Regelventil eingeregelte Volumenstrom aber eingestellt werden. So ist im Falle der Anordnung gemäß Fig. 38 eine Abregelung des Kühlölstroms zu Kupplung durch das Anlegen eines Magnetstroms möglich.

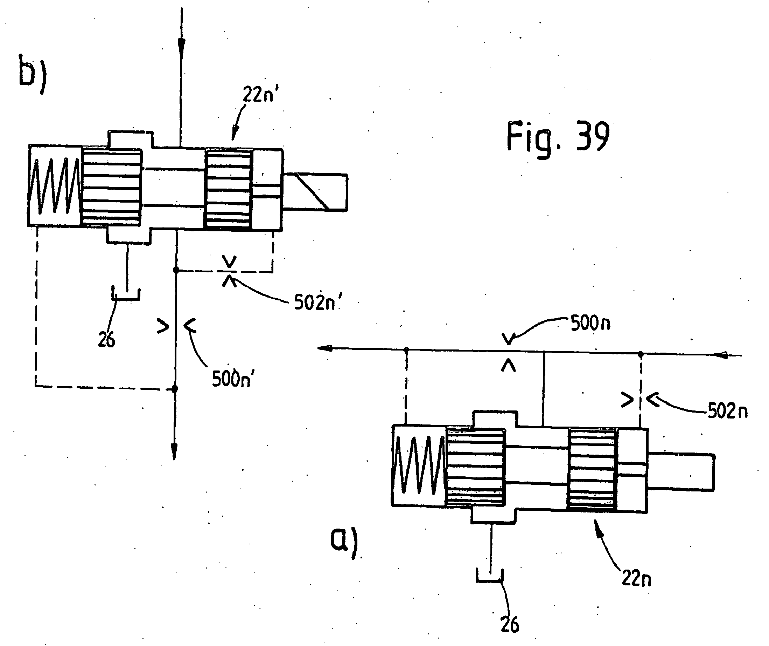

Fig. 39a zeigt schematisch eine mögliche Ausführung des Volumenstrom-Regelventils 22n in einer Einbausituation entsprechend Fig. 38. Der zur Kupplung geführte Kühlölvolumenstrom geht also am Volumenstrom-Regelventil vorbei und die Rückführung zur Eingangsseite der Pumpe geht durch das Volumenstrom-Regelventil 22n hindurch. Ein ggf. vorgesehener weiterer Auslass des Volumenstrom-Regelventils 22n ist geschlossen und wird nicht benutzt.

Demgegenüber zeigt Fig. 39b eine Einbausituation für das nun mit 22n' bezeichnete Volumenstrom-Regelventil, bei der der Kühlölstrom zur Kupplung durch das Ventil 22n' hindurchgeht. Das Ventil 22n ist also in Reihe zur Messblende 500n' geschaltet. Der Steuerkolben des Ventils teilt den zufließenden Mediumstrom auf den in Richtung zur Kupplung gehenden Kühlölvolumenstrom und den zur Eingangsseite der Pumpe bzw. in das Reservoir 26 (den Tank) zurückgehenden Rückführungsstrom auf, in Abhängigkeit vom Druckabfall an der Messblende 500n' und der Bestromung des Solenoids.

Es sei angemerkt, dass an Stelle einer Einstellung des Kühlölvolumenstroms über die Bestromung eines dem Ventil zugeordneten Solenoids oder dergleichen auch eine Volumenstromsteuerung/Regelung auf Grundlage einer verstellbaren Messblende in Betracht kommt. Beispielsweise kann eine über einen Elektromagnet (Solenoid) oder eine hydraulische Druckübersetzung angesteuerte Messblende verwendet werden.

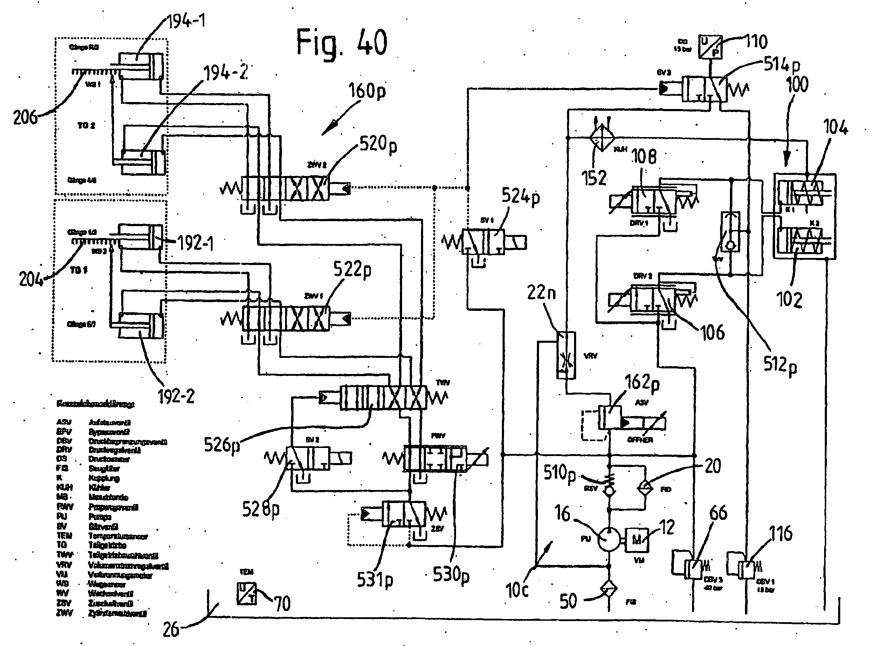

Ein weiteres Hydrauliksystem, das ein Volumenstrom-Regelventil, beispielsweise entsprechend Fig. 38 und 39, verwendet, ist in Fig. 40 gezeigt. Das mit 22n bezeichnete hydraulische Schaltungssymbol repräsentiert das eigentliche Volumenstrom-Regelventil samt zugehöriger Messblende (vgl. Messblende 500n) und ggf. zugehörigem Dämpfer (vgl. Dämpfer 502n).

Ähnlich wie beim Beispiel der Fig. 22 ist gemäß Fig. 40 nur eine einzige, verbrennungsmotorisch angetriebene Pumpe 16, insbesondere eine Konstantpumpe 16, vorgesehen. Diese Pumpe versorgt sowohl den Kupplungsteil (Kupplungsbetätigung und Kupplungskühlung) als auch den Getriebebetätigungsabschnitt 160p. Der Pumpe ist ein Saugfilter 50 vorgeschaltet und ein Druckfilter 20 nachgeschaltet. Man kann auch entweder nur einen Druckfilter oder nur einen Saugfilter vorsehen, je nach Empfindlichkeit der verwendeten Ventile. Für eine Fail-Safe-Funktion ist dem Druckfilter 20 ein Rückschlagventil 14p parallelgeschaltet, so dass trotz verstopftem Druckfilter noch ein Betrieb möglich ist, unter Inkaufnahme von Gefährdungen für die nachfolgenden Ventile. Man kann auch eine derartige Auslegung des Rückschlagventils 410p vorsehen, dass der Druckfilter 20 als Nebenstromfilter arbeitet.

Im stationären Fahrbetrieb, wenn nicht geschaltet wird, wird der von der Pumpe geförderte Ölvolumenstrom am Aufstauventil 162p, einem Proportional-Druckbegrenzungsventil, aufgestaut, auf einen Druck, der einen gewissen Wert über dem Druck liegt, der dem dem anliegenden Motormoment entsprechenden Kupplungsmoment entspricht. Das übertragene (übertragbare) Kupplungsmoment für die beiden Kupplungsanordnungen wird von je einem Proportional-Druckregelventil 106 bzw. 108 eingeregelt.

Gegenüber etwa dem Schaltplan der Fig. 22 ist ein Drucksensor und ein Druckbegrenzungsventil in Zuordnung zu den Ventil-Zylinder-Kombinationen 108, 104 und 106, 102 eingespart, nämlich der Drucksensor 112 und das Druckbegrenzungsventil 118. Stattdessen ist ein Umschaltventil 512p vorgesehen, das jeweils den höheren der beiden Drücke zwischen Ventil 108 und Betätigungszylinder 104 einerseits und Ventil 106 und Betätigungszylinder 102 andererseits durchlässt, zum gemeinsam zugeordneten Druckbegrenzungsventil 116 oder zum gemeinsam zugeordneten Drucksensor 110. Fig. 40 zeigt eine spezielle Ausgestaltung, bei der der Drucksensor 110 zusätzlich noch zur Überwachung des Kühlölkreislaufes eingangsseitig des Kühlers 152 dient. Hierzu ist ein hydraulisch betätigbares Umschaltventil 514p eingebaut, das in Abhängigkeit von im Getriebebetätigungsabschnitt auftretenden Steuerdrücken zwischen dem über das Umschaltventil 512p anliegenden Öldruck und dem eingangsseitig des Ölkühlers 152 auftretenden Öldruck umschaltet.

Der Druckbegrenzer 116 kann beispielsweise für eine Begrenzung auf etwa 15 bar ausgelegt sein. Demgegenüber ist der Druckbegrenzer 66 für die Begrenzung auf einen höheren Druck ausgelegt, beispielsweise auf einen Druck von 40 bar.

Das durch das Aufstauventil 162p abfließende Ölvolumen wird danach von dem Volumenstrom-Regelventil 22n durch den Ölkühler 152 zur Kühlung in die Doppelkupplung oder/und zurück in den Ansaugbereich der Pumpe 16 geleitet, je nach gewünschtem Kühlölvolumenstrom. Die Rückleitung des Öls in den Ansaugbereich der Pumpe hat den Vorteil, dass die Pumpe beim Ansaugen des Öls unterstützt wird, was den Pumpenfüllungsgrad verbessert und die Kavitationsneigung verringert. Es kann durchaus Situationen geben, in denen es gewünscht ist, den von der Pumpe bereitgestellten Ölstrom ganz zurück in den Ansaugbereich der Pumpe zu leiten, so dass nichts mehr zur Kupplung fließt.

Bezug nehmend auf die Beispiele der Fig. 38 und 39 kann das Volumenstrom-Regelventil 22n als Zwei-Wege-Stromregelventil mit Messblende im Bypass ausgeführt sein. Durch die aktive Betätigung eines Schiebers, etwa über Magnetkraft, können auch geringere Volumenströme zur Kühlung der Kupplung eingestellt werden als der sich durch die Druckdifferenz an der Messblende einstellende Volumenstrom. Um eine völlige Abschaltung des Kühlölvolumenstroms zu gewährleisten, kann man im Falle einer Einbausituation entsprechend Fig. 39a ein Druckbegrenzungsventil zwischen Volumenstrom-Regelventil 22n und Ölkühler 152 einbauen, um einen erhöhten Gegendruck in der Zuleitung zur Kupplung zu erreichen. Eine andere Möglichkeit ist die direkte Anströmung des Volumenstrom-Regelventils entsprechend Fig. 39b. Ein zusätzlicher Gegendruck bzw. Widerstand in der Kühlölleitung nach dem Volumenstrom-Regelventil ist dann nicht erforderlich, wenn eine völlige Abschaltung des Kühlölvolumenstroms zur Kupplung gewünscht ist. Es sei angemerkt, dass durchaus auch andere Bauformen als Volumenstrom-Regelventil in Betracht kommen, insbesondere auch ein Drei-Wege-Stromregelventil. Ferner ist an Stelle einer direkten Ansteuerung über Magnetkraft oder einer hinsichtlich des Durchlasswiderstands einstellbaren Messblende auch eine Ausführung des Volumenstrom-Regelventils als vorgesteuertes Ventil möglich.

Kommt nun von der Systemsteuerung ein Schaltbefehl, wird das Aufstauventil 1 62p so weit geschlossen, dass sich der Druck einstellt, der zur Betätigung der Schaltstangen des Getriebes, also für die Funktion des Getriebebetätigungsabschnitts 160p, benötigt wird, wobei Druckverluste in nachfolgenden Ventilen und Schiebern einkalkuliert sein sollten. Es ist in diesem Zustand unter Umständen zweckmäßig, den Ölstrom zur Kühlung der Kupplung auf Null zu reduzieren. Dies kann beispielsweise bei niedrigen Temperaturen sehr vorteilhaft sein, da durch eine Erwärmung des Öls in der Kupplung das Schleppmoment in der Kupplung reduziert wird, was wiederum das Schalten der Gänge erleichtert. Das zu synchronisierende Moment wird reduziert.

Gemäß dem hier zu Grunde gelegten Beispiel erfolgt die Getriebebetätigung über vier Schaltstangen, die die Gänge 1 bis 7 und R schalten. Betätigt werden die Schaltstangen über vier doppelt wirkende Zylinder 192-1, 192-2, 194-1 und 194-2, die vorliegend als Differentialzylinder ausgeführt sind, also auf den beiden Seiten des Kolbens druckbeaufschlagte bzw. druckbeaufschlagbare Flächen unterschiedlicher Größe aufweisen. Am vorliegenden Beispiel ist die eine druckbeaufschlagte Fläche ungefähr oder idealerweise exakt doppelt so groß wie die andere.

Die beiden Schaltstangen des Teilgetriebes TG2, die für die geraden Vorwärtsgänge und den Rückwärtsgang R zuständig sind, werden von einem als Schieberventil ausgeführten Zylinderwahlventil 520p angesteuert, und die Schaltstangen des Teilgetriebes TG1 für die ungeraden Vorwärtsgänge durch das ebenfalls als Schieberventil ausgeführte Zylinderwahlventil 522p.

Die ggf. auch als Schaltgassenschieber bezeichenbaren Zylinderwahlventile sind als hydraulisch vorgesteuerte 8/2-Wege-Ventile ausgeführt, die selbst durch das Schaltventil 524p angesteuert werden. Die beiden Zylinderwahlventile 520p und 522p leiten das zugeführte Drucköl jeweils zu einem der beiden zugeordneten Differentialzylinder, während der jeweils andere Differentialzylinder mit seinen beiden Zylinderräumen mit dem Ölreservoir verbunden wird, beidseitig also im Wesentlichen drucklos gemacht wird. Den beiden Zylinderwahlventilen ist gemeinsam ein Teilgetriebewählventil 526p vorgeschaltet, das ebenfalls als hydraulisch vorgesteuertes 8/2-Wege-Ventil ausgeführt ist. Das Teilgetriebewählventil wird von einem Schaltventil 528p angesteuert. Das Teilgetriebewählventil 526p leitet das ihm von einem beispielsweise als Gangwählventil bezeichenbaren Ventil 530p zugeführte Drucköl entweder dem Zylinderwahlventil 520p zur Betätigung des Teilgetriebes TG2 oder dem Zylinderwahlventil 522p zur Betätigung des Teilgetriebes TG1 zu. Das Gangwählventil 530p ist vorliegend als Proportionalwegeventil, genauer als proportionales 4/3-Wege-Ventil ausgeführt. Seine drei Stellungen haben die folgenden Funktionen:
- In einer der Ruhestellung in Folge der Federkraft entsprechenden ersten Stellung wird das Drucköl in den die kleinere Kolbenfläche des Differentialzylinders aufweisenden kleineren Kolbenraum geleitet und der größere Kolbenraum mit der größeren Kolbenfläche mit dem Öltank verbunden. Dadurch verfährt die Schaltstange in die der kleineren Kolbenfläche bzw. den kleineren Kolbenraum entsprechende Richtung.
- Durch Magnetkraft kann der Schieber des Ventils in eine einer Sperrposition entsprechende zweite Stellung verschoben werden. In dieser Stellung ist der Zufluss ebenso wie der Abfluss aus dem betreffenden Differentialzylinder gesperrt, so dass dieser in seiner momentanen Betätigungsstellung bleibt. In Abweichung von der Darstellung in Fig. 40 kann man auch vorsehen, dass in der zweiten Ventilstellung die beiden Kolbenräume des betreffenden Differentialzylinders über dem Gangwählventil 530p miteinander verbunden sind.
- Bei voller Bestromung des Magneten wird der Schieber des Ventils in die Endstellung (dritte Stellung) geschoben. In dieser Stellung wird Drucköl in beide Kolbenräume des Differentialzylinders geleitet. Da die eine Kolbenfläche ca. doppelt so groß ist wie die andere, bewegt sich die Schaltstange in die der größeren Kolbenfläche bzw. den größeren Kolbenraum entsprechenden Richtung. Über das Ventil 530p in dessen dritter Stellung wird das aus dem kleineren Kolbenraum abfließende Öl dem größeren Kolbenraum zugeleitet.

Vorteilhaft ist, dass mittels des Aufstauventils 162p ein Betätigungsdruckniveau und damit eine von den Differentialzylindern ausgeübte Schaltkraft eingestellt werden kann und dass - bei entsprechender Ausbildung - mittels des Proportionalwegeventils 530p oder durch ein zusätzliches Ventil durch Einstellung des Volumenstroms die Betätigungsgeschwindigkeit, also die Schaltgeschwindigkeit, eingestellt werden kann. Die momentane Position der Schaltstangen kann mittels eines jeweiligen Wegsensors 204 bzw. 206 erfasst werden.

Dem Gangwählventil 530p und dem Schaltventil 528p ist ein hydraulisch betätigbares Zuschaltventil 531 p vorgeschaltet. Dieses dient dazu, dass im Fahrbetrieb, wenn am Getriebe nicht geschaltet wird, die Ölversorgung der Ventile für die Getriebeaktuartorik unterbrochen wird. Das Zuschaltventil 531 p wird gemäß dem gezeigten Beispiel durch den durch das Aufstauventil 162p eingestellten Öldruck angesteuert. Der Öffnungsdruck für das Zuschaltventil 531p kann zweckmäßig so ausgelegt werden, dass er einen gewissen Wert über dem Druck liegt, der dem einer Übertragung des maximalen Motormoments durch die Kupplungsanordnungen entsprechenden Druck liegt. Auf das Zuschaltventil 531p kann durchaus auch verzichtet werden. Eine Alternative ist beispielsweise, dass das Gangwählventil 530p in Sperrstellung gehalten wird, solange kein Schalten erforderlich ist. Dies hat den Nachteil der ständigen Bestromung des Solenoids des Ventils 530p. Ferner könnten die Ventile 530p und 528p sich festsetzen.

Die Funktionsweise der hydraulischen Schaltung der Fig. 40 kann beispielsweise wie folgt sein. Kommt vom Steuergerät ein Schaltwunsch-Befehl, so wird das Aufstauventil 162p soweit bestromt, dass der Druck über den dem maxiamalen Motormoment entsprechenden Druck ansteigt. Dies hat zur Folge, dass das Zuschaltventil 531 p auf Durchfluss schaltet. Gleichzeitig mit dem Bestromen des Aufstauventils 162p beim Schaltwunsch wird auch das Gangwählventil 530p so weit bestromt, dass es in die Sperrstellung (2. oder mittlere Stellung) fährt. In diesem Zustand liegt am Druckanschluss des Gangwählventils 530p Druck an. Je nachdem, welcher Gang nun geschaltet werden soll, wird das Gangwählventil in Stellung 1 oder Stellung 3 gefahren, das Schaltventil 528p bestromt oder nicht und das Schaltventil 524p bestromt oder nicht.

Beispielsweise kann wie folgt aus dem Leerlauf in den ersten Gang geschaltet werden. Das Aufstauventil 1 62p wird bestromt und staut den Druck auf Schaltdruckniveau auf. Das Zuschaltventil 531 p schaltet auf Durchfluss. Das Schaltventil 524p wird bestromt, so dass beide Zylinderwahlschieber (Schaltgassenschieber) in jene Stellung bewegt werden, in der die Gänge 1/3 bzw. R/2 geschaltet werden. Das Schaltventil 528p bleibt unbestromt, so dass das Teilgetriebewahlventil 526p in der Stellung steht, in der das Drucköl zum Zylinderwahlventil 522p geleitet wird entsprechend einer Betätigung des über das Zylinderwahlventil 522p ausgewählten Differentialzylinders 192-1. Es kann also nun nur der erste oder dritte Gang geschaltet (eingelegt) werden.

Das Gangwählventil 530p wird gleichzeitig mit dem Aufstauventil 162p so weit bestromt, dass es in die Sperrstellung fährt. Danach wird das Gangwählventil 530p stärker bestromt, so dass es entgegen der Rückstellkraft der Feder in die dritte Stellung fährt, in der beide Kolbenräume des Differentialzylinders mit Druckmedium beaufschlagt (bedruckt) werden und die Schaltstange dementsprechend in Richtung des ersten Ganges fährt. Es wurde also hier angenommen, dass die dem ersten Gang zugeordnete Kolbenfläche bzw. der diesem Gang zugeordnete Kolbenraum größer als die andere Kolbenfläche bzw. der andere Kolbenraum ist.

Soll hingegen vom Leerlauf in den dritten Gang geschaltet werden, so wird nach Bestromung des Gangwählventils 530p dieses wieder stromlos gemacht, so dass das Ventil durch Federkraft in die Stellung 1 gedrückt wird, so dass nur der kleinere der beiden Kolbenräume des Differentialzylinders 192-1 bedruckt wird und die Schaltstange sich in Richtung des dritten Gangs bewegt.

Diese Schaltvorgänge und andere Schaltvorgänge werden jeweils durch die Wegsensoren überwacht. Nach beendetem Schaltvorgang wird der Strom am Aufstauventil 162p wieder zurückgenommen, so dass das Zuschaltventil 531 p wieder die Sperrstellung einnimmt. Das Gangwählventil bleibt stromlos und, unter Einwirkung der Rückstellfederkraft, in Stellung 1.

Das Schaltventil 524p und - wenn zuvor betätigt - das Schaltventil 528p wird stromlos gemacht, so dass die Schieberventile 520p und 522p und ggf. das Schieberventil 526p in ihre federkraftbedingte Ruhestellung zurückfahren. Die Kolbenräume der Differentialzylinder sind dann alle mit dem Tank verbunden. Dies hat den Vorteil, dass die Schaltstangen nach dem Schaltvorgang kraftfrei sind.

Es wird noch einmal auf das Schaltventil 514p Bezug genommen. Dieses Ventil wird hydraulisch betätigt und gibt entweder den Kupplungsdruck oder den Kühlöldruck zum Drucksensor 110 frei. Wird das elektrische Schaltventil 524p nicht bestromt, so bleibt das Schaltventil 514p in der Stellung, in der der Kupplungsdruck gemessen wird. Um den Kühlölstrom und damit die Funktion des Volumenstrom-Regelventils 162p zu überprüfen, kann in bestimmten Fahrsituationen, z.B. wenn am Getriebe nicht geschaltet wird, das Schaltventil 524p bestromt werden, so dass das Schaltventil 514p den Kühlöldruck zum Messen frei gibt.

Die hydraulische Schaltung gemäß Fig. 40 ist insoweit vorteilhaft, nämlich vergleichsweise kostengünstig, als dass nur wenige elektrisch betätigte Ventile vorgesehen sind. Ferner werden der Druckbegrenzer 116 und der Drucksensor 110 multifunktional verwendet, nämlich in Zuordnung zu verschiedenen Teilabschnitten des Hydrauliksystems. Der Einsatz weiterer Druckbegrenzer und Drucksensoren ist damit überflüssig, wodurch sich ebenfalls nicht unbeachtliche Kostenvorteile ergeben.

Vorteilhaft, da im Sinne der Reduzierung der Teilevielzahl wirksam und damit kostensparend, ist auch die Verwendung gleichartiger Schieberventile für die Ventile 520p, 522p und 526p.

Die Schaltung der Fig. 40 ist auch hinsichtlich der erreichten Betriebssicherheit, auch im Sinne einer Gewährleistung einer Notfunktionalität, vorteilhaft. So kann beim Ausfall eines der beiden Druckregelventile 106 und 108 auf Grundlage der jeweils anderen Kupplungsanordnung weitergefahren werden. Das Aufstauventil 162p ist vorteilhaft als Öffner-Ventil ausgeführt. Das heißt, das Ventil ist im stromlosen Zustand zu, so dass man schalten und die Kupplung halten kann. Durch die integrierte Druckbegrenzungsfunktion des Aufstauventils ist überdies eine Mindestkühlung der Kupplung gewährleistet.

Für das Volumenstromregelventil 22 gilt, dass dieses im Falle einer Auslegung gemäß Fig. 39 im stromlosen Zustand zum Tankabfluss geschlossen bzw. bezogen auf den Durchflussdurchgang offen ist. Für beide Einbausituationen gemäß Fig. 39 würde damit in einem derartigen Ausnahmezustand für einen maximalen Kühlölstrom zur Kupplung gesorgt sein.

Zum Gangwählventil 530p ist zu sagen, dass dieses im stromlosen Zustand unter Einwirkung der Federkraft sich in der Stellung 1 befindet, so dass stets Gänge geschaltet werden können. Die beiden Zylinderwahlventile 520p und 522p erlauben in ihren beiden Stellungen, damit auch in der durch die Federvorspannung des Schiebers sich selbsttätig einstellenden Stellung, jeweils das Schalten einer Schaltstange des jeweiligen Teilgetriebes.

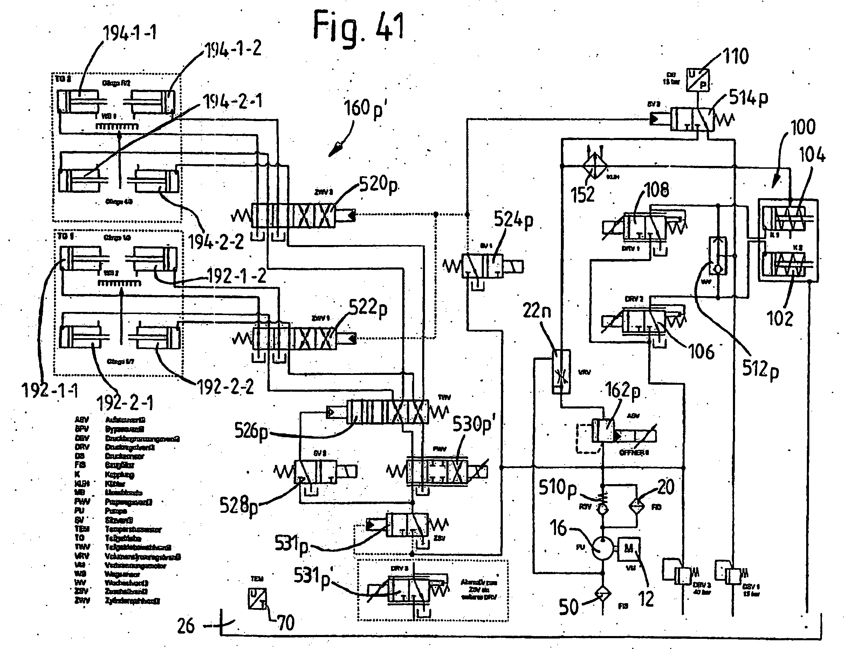

Das Hydrauliksystem der Fig. 41 entspricht weitgehend dem Hydrauliksystem der Fig. 40. An Stelle der doppelt wirkenden Betätigungszylinder, genauer der Differentialzylinder, sind für jede Schaltstange zwei einfach wirkende Zylinder 192-1-1 und 192-1-2; 192-2-1 und 192-2-2; 194-1-1 und 194-1-2 bzw. 194-2-1 und 194-2-2, also insgesamt acht einfach wirkende Zylinder (vier für jedes Teilgetriebe) vorgesehen, für die eine fast identische Hydraulikansteuerung wie bei Fig. 40 verwendet werden kann. Der einzige Unterschied ist die Ausbildung des Gangwählventils 530p', bei dem die dritte Schaltstellung anders als beim Gangwählventil 530p der Fig. 40 ausgeführt ist. Es wird zum Verschieben der jeweiligen Schaltstange jeweils immer nur einer der beiden einfach wirkenden Zylinder mit Drucköl beaufschlagt. Der jeweils andere Zylinder ist über das Ventil 530p' zum Tank geöffnet.

Beispielsweise im Hinblick auf den Fall, dass mit dem Aufstauventil nicht der gewünschte, nämlich nur ein zu hoher Druck für den Getriebeaktuator bereitgestellt werden kann, z.B. weil der benötigte Kupplungsbetätigungsdruck zu hoch liegt, kann an Stelle des Zuschaltventils 531p ein weiteres Druckregelventil 531p' verwendet werden, das den benötigten Schaltdruck einstellt und in Phasen ohne Getriebebetätigung den Getriebebetätigungsabschnitt 160p' vom Betriebsdruck abkoppelt. Diese alternative Ausgestaltung der hydraulischen Schaltung ist in Fig. 41 zusätzlich angedeutet.

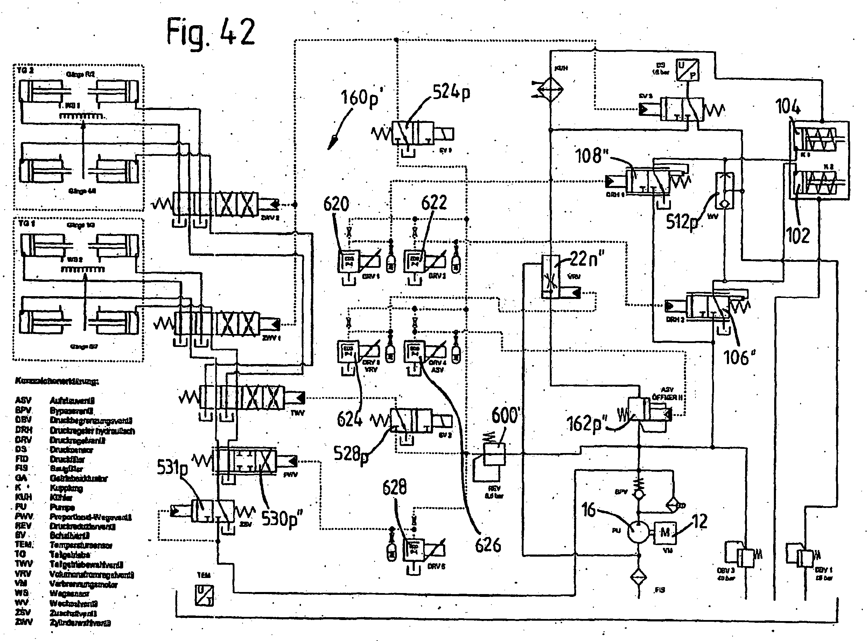

Fig. 42 unterscheidet sich vom Beispiel der Fig. 41 dadurch, dass die nun mit 108" und 106" bezeichneten Druckregelventile, das nun mit 162p" bezeichnete Aufstauventil, das nun mit 22n" bezeichnete Volumenstromregelventil und das nun mit 530" bezeichnete Gangwählventil 530p" als vorgesteuerte Ventile ausgeführt sind. Dies bedeutet, dass der jeweilige Ventilschieber nicht mehr von einer Magnetkraft betätigt wird, sondern über einen Steuerdruck. Der jeweilige Steuerdruck kann über ein zugeordnetes Vorsteuerventil 620, 622, 624, 626 bzw. 628 eingestellt werden. Diese Vorsteuerventile können beispielsweise kostengünstig als Sitzventile ausgeführt sein. Auch diese Vorsteuerventile werden über Magnete angesteuert, diese können aber bedeutend kleiner sein als bei einem direkt gesteuerten Ventil. Die Ausführung der Vorsteuerventile als Sitzventile ist auch insoweit vorteilhaft, als dass diese weniger schmutzempfindlich sind als Schieberventile.

Vorteilhaft an der vorgesteuerten Ventilandordnung ist insbesondere, dass über den Vorsteuerdruck leichter eine höhere Kraft auf den Nachfolgeschieber erzeugt werden kann als mit einem Magneten, der direkt den Schieber betätigt. Die Vorsteuerventile 620 bis 628 benötigen einen geringeren Druck als den Systemdruck, z.B. den auch für die Druckmedium-Notversorgung verwendeten Konstantdruck von beispielsweise 5,5 bar. Dieser Druck wird durch das Reduzierventil 600' eingestellt.

Angemerkt sei, dass es umgekehrt durchaus auch in Betracht kommt, das Zuschaltventil 531 p nicht als hydraulisch betätigtes, sondern als elektrisch betätigtes Ventil auszuführen.

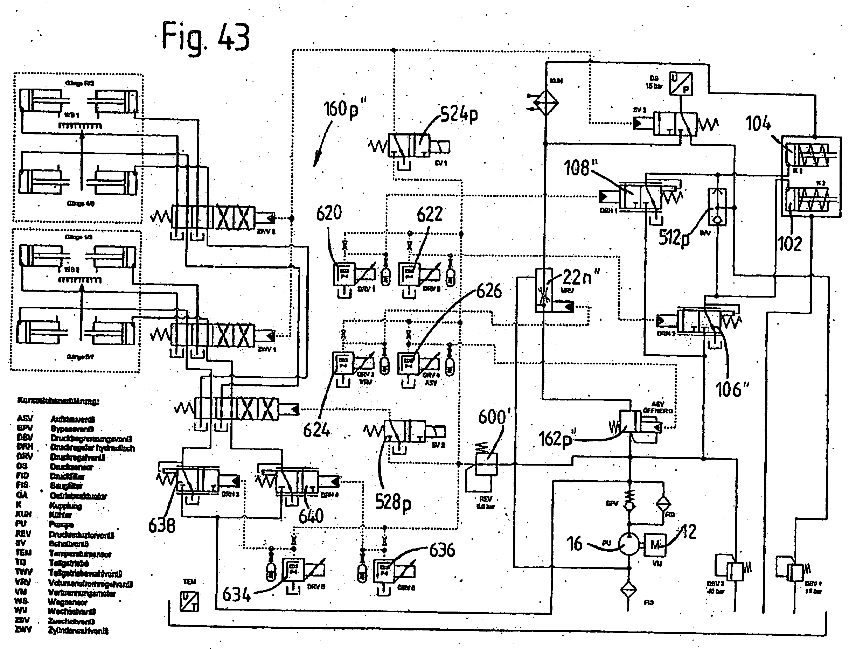

Fig. 43 zeigt eine Variante des Beispiels der Fig. 42 mit gewissen Ähnlichkeiten zum Beispiel der Fig. 41 hinsichtlich des Anschlusses des Getriebebetätigungsabschnitts 160p' am restlichen Hydrauliksystem. Es wird hier auf die Variante mit dem elektrischen Druckregelventil 531 p' an Stelle des hydraulisch betätigten Zuschaltventils 531 p Bezug genommen.

An Stelle des Zuschaltventils 531 p bzw. des Ventils 531 p' sowie an Stelle des Proportionalwegeventils 530p' sind gemäß Fig. 43 am Eingang des Getriebebetätigungsabschnitts 160p" die vorgesteuerten Druckreglerventile 638 und 640 mit zugeordnetem Vorsteuerventil 634 bzw. 636 vorgesehen. Beim Schalten wird der Druck in den Schaltzylindern über diese Ventile 638 und 640 eingestellt.

Der Vorteil im Vergleich zu den Varianten mit dem Gangwählventil 530p bzw. 530p' bzw. 530p" und dem einfachen Zuschaltventil ist, dass der Schaltdruck nicht über das Aufstauventil, vorliegend das Ventil 162p", während einer Schaltung variiert werden muss. Dies könnte Auswirkungen auf den Kupplungsdruck haben, da dann der Systemdruck variiert. Mit den vorgesteuerten Ventilen 638 und 640 kann man ohne Rückwirkung auf die Kupplungsbetätigung auch einen niedrigen Druck, d.h. niedrige Schaltkräfte, für die Getriebebetätigung einstellen.

## Patentansprüche

1. Kraftfahrzeug-Antriebsstrang, umfassend eine Antriebseinheit (12), ein Getriebe und ein Kupplungssystem mit einer zwischen der Antriebseinheit und dem Getriebe angeordneten Kupplungseinrichtung (100) zur Momentenübertragung zwischen der Antriebseinheit und dem Getriebe, wobei die Kupplungseinrichtung wenigstens eine unter Vermittlung von Druckmedium betätigbare und für einen Betrieb unter Einwirkung eines Betriebsmediums vorgesehene Kupplungsanordnung (102, 104) aufweist und das Getriebe mittels einer zugeordneten Aktuatorik (160; 160c; 160d; ...; 160p') unter Vermittlung von Druckmedium betätigbar ist, wobei auf Grundlage einer der Kupplungseinrichtung und dem Getriebe gemeinsam zugeordneten Pumpenanordnung (10; 10b; 10c)
a) das Druckmedium für die Betätigung der Kupplungsanordnung (102, 104) bereitstellbar ist und der Kupplungseinrichtung (100) für den Betrieb unter Einwirkung des Betriebsmediums Betriebsmedium zuführbar ist sowie
b) das Druckmedium für die Betätigung des Getriebes bereitstellbar ist,
**dadurch gekennzeichnet,**
**dass** das Getriebe ein einem ersten Satz von Getriebegängen zugeordnetes erstes Teilgetriebe und ein einem zweiten Satz von Getriebegängen zugeordnetes zweites Teilgetriebe aufweist, die mittels der Aktuatorik (160; 160c; 160d; ...; 160p') unabhängig voneinander betätigbar sind, um eine Lastschaltfunktion vorzusehen, wobei die Aktuatorik (160; 160c; 160d; ...; 160p') unter Verzicht auf eine Gassenauswahlmechanik derart ausgebildet ist, dass wenigstens eine Schaltstange des Getriebes oder zumindest eines der Teilgetriebe mittels einer dieser zugeordneten Kraftzylinderanordnung auf Grundlage zugeführten Druckmediums axial verstellbar ist,
und wobei die Kupplungsanordnung (102, 104) eine nasslaufende Kupplungsanordnung ist, und der Betrieb unter Einwirkung des Betriebsmediums ein nasslaufender Betrieb ist und dass das Betriebsmedium eine Betriebsflüssigkeit ist,
und wobei das Druckmedium ein hydraulisches Druckmedium ist, das auch als Betriebsflüssigkeit dient,
und wobei die Aktuatorik wenigstens einen doppelt wirkenden Betätigungszylinder (192-1, 192-2, 194-1, 194-2; 192, 194) aufweist, dem wahlweise in Zuordnung zu einem ersten Zylinderdruckraum Druckmedium zuführbar und von dem wahlweise in Zuordnung zu einem zweiten Zylinderraum Druckmedium abführbar ist,
und wobei mehreren doppelt wirkenden Betätigungszylindern der Aktuatorik wenigstens ein DruckSteuer/Regel-Ventil (197), vorzugsweise wenigstens zwei Druck-Steuer/Regel-Ventile (197-1, 197-2, 199-1, 199-2; 197, 199) zugeordnet ist/sind, wobei mittels einer die Betätigungszylinder und das Druck-Steuer/Regel-Ventil bzw. die Druck-Steuer/RegelVentile verbindenden Auswahlanordnung (402; 402, 404; 402, 406, 408) die Betätigungszylinder wahlweise für eine Betätigung in einer ersten Betätigungsrichtung oder für eine Betätigung in einer zweiten, zur ersten Betätigungsrichtung entgegengesetzten Betätigungsrichtung auswählbar sind,
und wobei bei einem ausgewählten doppelt wirkenden Betätigungszylinder der erste Zylinderraum, dem für eine Betätigung in der ersten Betätigungsrichtung Druckmedium zuführbar und aus dem für eine Betätigung in der zweiten Betätigungsrichtung Druckmedium abführbar ist, über die Auswahlanordnung (402; 402, 404) mit einem zugeordneten ersten Druck-Steuer/Regel-Ventil und der zweite Zylinderraum, dem für eine Betätigung in der zweiten Betätigungsrichtung Druckmedium zuführbar und aus dem für eine Betätigung in der ersten Betätigungsrichtung Druckmedium abführbar ist, über die Auswahlanordnung mit einem zugeordneten zweiten Druck-Steuer/Regel-Ventil verbunden ist.

2. Antriebsstrang nach Anspruch 1, **dadurch gekennzeichnet, dass** die Pumpenanordnung (10; 10b; 10c) wenigstens eine durch die Antriebseinheit (12) antreibbare Pumpe (14, 16; 16) umfasst, deren Eingangsseite und Ausgangsseite über eine Steuer/Regel-Ventilanordnung (18, 22; 18a, 22a; 22a) verbindbar ist, um durch Rückführung von Medium von der Ausgangsseite zur Eingangsseite das Medium auf der Ausgangsseite oder an einer ausgangsseitigen Abgabestelle auf einem Soll-Druck bereitzustellen oder/und durch Rückführung von Medium von der Ausgangsseite zur Eingangsseite einen Soll-Volumenstrom an Medium an der Ausgangsseite oder der ausgangsseitigen Abgabestelle bereitzustellen.

3. Antriebsstrang nach einem der Ansprüche 1 bis 2, **dadurch gekennzeichnet, dass** die Pumpenanordnung (10c) genau eine durch die Antriebseinheit antreibbare Pumpe (16) umfasst, auf deren Grundlage das Druckmedium für die Betätigung der Kupplungsanordnung bereitstellbar ist und der Kupplungseinrichtung für den Betrieb unter Einwirkung des Betriebsmediums Betriebsmedium zuführbar ist sowie das Druckmedium für die Betätigung des Getriebes bereitstellbar ist.

4. Antriebsstrang nach einem der Ansprüche 2 oder 3, **dadurch gekennzeichnet, dass** die Steuer/Regel-Ventilanordnung wenigstens ein Wegeventil aufweist, das zwischen die Ausgangsseite und die Eingangsseite geschaltet oder schaltbar ist und unter dessen Vermittlung der Soll-Druck oder der Soll-Volumenstrom einstellbar ist.

5. Antriebsstrang nach einem der Ansprüche 2 oder 3, **dadurch gekennzeichnet, dass** die Steuer/Regel-Ventilanordnung wenigstens ein Druck-Steuer/Regelventil aufweist, das zwischen die Ausgangsseite und die Eingangsseite geschaltet oder schaltbar ist und unter dessen Vermittlung der Soll-Druck oder - über Einstellung einer Druckdifferenz oder eines Druckniveaus - der Soll-Volumenstrom einstellbar ist.

6. Antriebsstrang nach einem der Ansprüche 2 oder 3, **dadurch gekennzeichnet, dass** die Steuer/Regel-Ventilanordnung wenigstens ein Volumen-Steuer/Regelventil (22n; 22n') aufweist, das zwischen die Ausgangsseite und die Eingangsseite geschaltet oder schaltbar ist und unter dessen Vermittlung der Soll-Volumenstrom oder - über Einstellung eines Volumenstroms - der Soll-Druck einstellbar ist.

7. Antriebsstrang nach einem der Ansprüche 1 bis 6, **dadurch gekennzeichnet, dass** ein der Getriebebetätigung zugeordneter Hydrauliksystemabschnitt (160p; 160p') von einem der Betätigung der Kupplungsanordnung oder/und der Versorgung der Kupplungseinrichtung mit Betriebsmedium zugeordneten, die Pumpenanordnung aufweisenden Hydrauliksystemabschnitt hydraulisch abkoppelbar ist.

8. Antriebsstrang nach Anspruch 7, **dadurch gekennzeichnet, dass** der der Getriebebetätigung zugeordnete Hydrauliksystemabschnitt (160p; 160p') vermittels eines vorzugsweise von einem anliegenden Hydraulikdruck betätigbaren Ventils (530p; 530p') an dem die Pumpenanordnung aufweisenden Hydrauliksystemabschnitt hydraulisch ankoppelbar und von diesem abkoppelbar ist.

9. Antriebsstrang nach einem der Ansprüche 1 bis 8, **dadurch gekennzeichnet, dass** das Getriebe ein einem ersten Satz von Getriebegängen zugeordnetes erstes Teilgetriebe und ein einem zweiten Satz von Getriebegängen zugeordnetes zweites Teilgetriebe aufweist, die zumindest im Falle einer Doppel- oder Mehrfach-Kupplungseinrichtung (100) vorzugsweise unabhängig voneinander betätigbar sind, um eine Lastschaltfunktion vorzusehen.

10. Antriebsstrang nach einem der Ansprüche 1 bis 9, **dadurch gekennzeichnet, dass** wenigstens eine Schaltstange des Getriebes oder zumindest eines der Teilgetriebe mittels einer dieser zugeordneten Kraftzylinderanordnung (192; 194; 192-1; 192-2; 194-1; 194-2) auf Grundlage zugeführten Druckmediums axial verstellbar ist.

11. Antriebsstrang nach Anspruch 10, **dadurch gekennzeichnet, dass** die Kraftzylinderanordnung einen direkt oder indirekt mit der Schaltstange gekoppelten oder koppelbaren doppelt wirkenden Zylinder (192; 194; 192-1; 192-2, 194-1; 194-2) aufweist.

12. Antriebsstrang nach Anspruch 10, **dadurch gekennzeichnet, dass** die Kraftzylinderanordnung zwei direkt oder indirekt mit der Schaltstange gekoppelte oder koppelbare einfach wirkende Zylinder (192-1-1, 192-1-2; 192-2-1, 192-2-2; 194-1-1, 194-1-2; 194-2-1, 194-2-2) aufweist, von denen der eine für axiale Verstellung der Schaltstange in einer axialen Richtung mit Druckmedium beaufschlagbar und der andere für axiale Verstellung der Schaltstange in die andere axialer Richtung mit Druckmedium beaufschlagbar ist.

13. Antriebsstrang nach Anspruch 10 oder 11, **dadurch gekennzeichnet, dass** mehreren Schaltstangen des Getriebes bzw. Teilgetriebes jeweils eine eigene Kraftzylinderanordnung, vorzugsweise jeweils umfassend einen direkt oder indirekt mit der Schaltstange gekoppelten oder koppelbaren doppelt wirkenden Zylinder (192-1; 192-2; 194-1; 194-2), zur axialen Verstellung zugeordnet ist.

14. Antriebsstrang nach einem der Ansprüche 10 bis 13, **dadurch gekennzeichnet, dass** mehreren zur axialen Verstellung wenigstens einer zugeordneten Schaltstangen des Getriebes dienenden Kraftzylinderanordnungen (192, 194) jeweils eine eigene Steuer/Regel-Ventilanordnung (196, 198; 200, 202) zur gesteuerten oder geregelten Zufuhr oder/und Abfuhr von Druckmedium zugeordnet ist.

15. Antriebsstrang nach einem der Ansprüche 10 bis 14, **dadurch gekennzeichnet, dass** mehreren zur axialen Verstellung wenigstens einer zugeordneten Schaltstangen des Getriebes dienenden Kraftzylinderanordnungen (192, 194; 192-1, 192-2, 194-1, 194-2) eine gemeinsame Steuer/Regel-Ventilanordnung (197, 199) zur gesteuerten oder geregelten Zufuhr bzw. Abfuhr von Druckmedium zugeordnet ist, und dass mittels einer Schaltventilanordnung (201, 203; 210-1, 210-2, 212-1. 212-2) jede der Kraftzylinderanordnungen für eine Zufuhr oder/und Abfuhr von Druckmedium auswählbar ist durch Verbindung mit der gemeinsamen Steuer/RegelVentilanordnung oder mit einem Druckmediumabfluss oder einer Druckmediumaufnahme über die Schaltventilanordnung.

16. Antriebsstrang nach Anspruch 15, **dadurch gekennzeichnet, dass** mehrere Kraftzylinderanordnungen (192, 194) vorgesehen sind, die in wenigstens zwei Gruppen gruppiert sind, derart, dass jede Gruppe wenigstens eine Kraftzylinderanordnung umfasst, und dass eine jeweilige Gruppe von Kraftzylinderanordnungen mittels wenigstens eines dieser zugeordneten Schaltventils (526p), vorzugsweise wenigstens eines X/Y-Wege-Ventils (526p), für eine Beaufschlagung mit Druckmedium auswählbar ist.

17. Antriebsstrang nach einem der Ansprüche 1 bis 16, **gekennzeichnet durch** wenigstens einen Drucksensor (30, 112; 110) zur Erfassung eines momentanen Druckmediumdrucks oder Betriebsmediumdruck.

18. Antriebsstrang nach Anspruch 17, **dadurch gekennzeichnet, dass** der Drucksensor (110) über eine Ventilanordnung (512p, 514p) mit mehreren Messstellen des Hydrauliksystems alternativ in Messverbindung bringbar ist.

19. Antriebsstrang nach einem der vorhergehenden Ansprüche, **dadurch gekennzeichnet, dass** die Kupplungsanordnung (102, 104) eine nasslaufende Kupplungsanordnung ist, dass der Betrieb unter Einwirkung des Betriebsmediums ein nasslaufender Betrieb ist und dass das Betriebsmedium eine Kühlflüssigkeit ist.

20. Antriebsstrang nach einem der vorhergehenden Ansprüche, **dadurch gekennzeichnet, dass** die Kupplungsanordnung (102, 104) als Lamellen-Kupplungsanordnung ausgebildet ist.

21. Antriebsstrang nach einem der vorhergehenden Ansprüche, **dadurch gekennzeichnet, dass** das Druckmedium ein Hydrauliköl ist, das auch als Kühlflüssigkeit dient.

22. Antriebsstrang nach einem der vorhergehenden Ansprüche, **dadurch gekennzeichnet, dass** die Kupplungseinrichtung (100) als Mehrfach-Kupplungseinrichtung, insbesondere Doppel-Kupplungseinrichtung (100), ausgeführt ist und eine erste Kupplungsanordnung (102), der wenigstens ein erster Nehmerzylinder (102) zugeordnet ist, und eine zweite Kupplungsanordnung (104), der wenigstens ein zweiter Nehmerzylinder (104) zugeordnet ist, aufweist, wobei den beiden Nehmerzylindern unabhängig voneinander von der Pumpenanordnung (10; 10b) bereitgestelltes Medium als Druckmedium zuführbar ist.

23. Antriebsstrang nach Anspruch 1, **dadurch gekennzeichnet, dass** mehrere doppelt wirkende Betätigungszylinder gleichzeitig auswählbar sind, wobei zu einem Zeitpunkt eine erste Gruppe von Betätigungszylindern auswählbar ist, unter Nichtauswahl oder Aufhebung der Auswahl einer zweiten Gruppe von Betätigungszylindern.

24. Antriebsstrang nach Anspruch 23, **dadurch gekennzeichnet, dass** von den doppelt wirkenden Betätigungszylindern zu einem Zeitpunkt nur einer auswählbar ist, unter Aufhebung der Auswahl eines vorangehend ausgewählten Betätigungszylinders.

25. Antriebsstrang nach Anspruch 23 oder 24, **dadurch gekennzeichnet, dass** die Auswahlanordnung (402; 402, 404; 402, 406, 408) zwischen mehreren Auswahlzuständen umschaltbar ist auf Grundlage von an wenigstens einem Ventil der

## Claims

1. Motor-vehicle drive train, comprising a drive unit (12), a gearbox and a clutch system with a clutch device (100) which is arranged between the drive unit and the gearbox for the transmission of torque between the drive unit and the gearbox, the clutch device having at least one clutch arrangement (102, 104) which can be actuated via pressure medium and is provided for operation under the action of an operating medium, and it being possible for the gearbox to be actuated by means of an associated actuator means (160; 160c; 160d, ...; 160p') via pressure medium, wherein, on the basis of a pump arrangement (10; 10b; 10c) which is assigned jointly to the clutch device and the gearbox,
a) the pressure medium can be provided for actuating the clutch arrangement (102, 104) and operating medium can be fed to the clutch device (100) for operation under the action of the operating medium, and
b) the pressure medium can be provided for actuating the gearbox,
**characterized in that** the gearbox has a first part gearbox which is assigned to a first set of gearbox gears and a second part gearbox which is assigned to a second set of gearbox gears, which part gearboxes can be actuated independently of one another by means of the actuator means (160; 160c; 160d; ...; 160p'), in order to provide a power shift function, the actuator means (160; 160c; 160d; ...; 160p') being configured in such a way, with the omission of a gate selection mechanism, that at least one selector rod of the gearbox or of at least one of the part gearboxes can be adjusted axially by means of a power cylinder arrangement which is assigned to it, on the basis of the pressure medium which is fed in,
and the clutch arrangement (102, 104) being a wet-running clutch arrangement, and operation under the action of the operating medium being wet-running operation, and **in that** the operating medium is an operating fluid,
and the pressure medium being a hydraulic pressure medium which also serves as operating fluid,
and the actuator means having at least one dual-action actuating cylinder (192-1, 192-2, 194-1, 194-2; 192, 194) which can optionally be fed pressure medium in association with a first cylinder pressure chamber and from which pressure medium can optionally be removed in association with a second cylinder chamber,
and a plurality of dual-action actuating cylinders of the actuator means being assigned at least one pressure controlling/regulating valve (197), preferably at least two pressure controlling/regulating valves (197-1, 197-2, 199-1, 199-2; 197, 199), it being possible for the actuating cylinders to be selected optionally for an actuation in a first actuating direction or for an actuation in a second actuating direction in the opposite direction to the first actuating direction, by means of a selecting arrangement (402; 402, 404; 402, 406, 408) which connects the actuating cylinders and the pressure controlling/regulating valve and/or the pressure controlling/regulating valves,
and, in the case of a selected dual-action actuating cylinder, the first cylinder chamber which can be fed pressure medium for an actuation in the first actuating direction and from which pressure medium can be removed for an actuation in the second actuating direction being connected via the selecting arrangement (402; 402, 404) to an associated first pressure controlling/regulating valve, and the second cylinder chamber which can be fed pressure medium for an actuation in the second actuating direction and from which pressure medium can be removed for an actuation in the first actuating direction being connected via the selecting arrangement to an associated second pressure controlling/regulating valve.

2. Drive train according to Claim 1, **characterized in that** the pump arrangement (10; 10b; 10c) comprises at least one pump (14, 16; 16) which can be driven by the drive unit (12) and the inlet side and outlet side of which can be connected via a controlling/regulating valve arrangement (18, 22; 18a, 22a; 22a), in order, by returning medium from the outlet side to the inlet side, to provide the medium on the outlet side or at an outlet-side dispensing point at a setpoint pressure and/or, by returning medium from the outlet side to the inlet side, to provide a setpoint volumetric flow of medium at the outlet side or the outlet-side dispensing point.

3. Drive train according to either of Claims 1 and 2, **characterized in that** the pump arrangement (10c) comprises precisely one pump (16) which can be driven by the drive unit and on the basis of which the pressure medium can be provided for actuating the clutch arrangement and operating medium can be fed to the clutch device for operation under the action of the operating medium, and the pressure medium can be provided for actuating the gearbox.

4. Drive train according to either of Claims 2 and 3, **characterized in that** the controlling/regulating valve arrangement has at least one directional valve which is connected or can be connected between the outlet side and the inlet side and via which the setpoint pressure or the setpoint volumetric flow can be set.

5. Drive train according to either of Claims 2 and 3, **characterized in that** the controlling/regulating valve arrangement has at least one pressure controlling/regulating valve which is connected or can be connected between the outlet side and the inlet side and via which the setpoint pressure or, via setting of a pressure difference or a pressure level, the setpoint volumetric flow can be set.

6. Drive train according to either of Claims 2 and 3, **characterized in that** the controlling/regulating valve arrangement has at least one volume controlling/regulating valve (22n; 22n') which is connected or can be connected between the outlet side and the inlet side and via which the setpoint volumetric flow or, via setting of a volumetric flow, the setpoint pressure can be set.

7. Drive train according to one of Claims 1 to 6, **characterized in that** a hydraulic-system section (160p; 160p') which is assigned to the gearbox actuation can be decoupled hydraulically from a hydraulic-system section which has the pump arrangement and is assigned to the actuation of the clutch arrangement and/or to the supply of operating medium to the clutch device.

8. Drive train according to Claim 7, **characterized in that** the hydraulic-system section (160p; 160p') which is assigned to the gearbox actuation can be coupled hydraulically to the hydraulic-system section which has the pump arrangement and can be decoupled from it via a valve (530p; 530p') which can preferably be actuated by a prevailing hydraulic pressure.

9. Drive train according to one of Claims 1 to 8, **characterized in that** the gearbox has a first part gearbox which is assigned to a first set of gearbox gears and a second part gearbox which is assigned to a second set of gearbox gears, which part gearboxes, at least in the case of a dual-clutch or multiple-clutch device (100), can be actuated preferably independently of one another, in order to provide a power shift function.

10. Drive train according to one of Claims 1 to 9, **characterized in that** at least one selector rod of the gearbox or at least one of the part gearboxes can be adjusted axially by means of a power cylinder arrangement (192; 194; 192-1; 192-2; 194-1; 194-2) which is assigned to it, on the basis of pressure medium which is fed in.

11. Drive train according to Claim 10, **characterized in that** the power cylinder arrangement has a dual-action cylinder (192; 194; 192-1; 192-2, 194-1; 194-2) which is coupled or can be coupled to the selector rod directly or indirectly.

12. Drive train according to Claim 10, **characterized in that** the power cylinder arrangement has two single-action cylinders (192-1-1, 192-1-2; 192-2-1, 192-2-2; 194-1-1, 194-1-2; 194-2-1, 194-2-2) which are coupled or can be coupled to the selector rod directly or indirectly and of which one can be loaded with pressure medium for axial adjustment of the selector rod in an axial direction and the other can be loaded with pressure medium for axial adjustment of the selector rod in the other axial direction.

13. Drive train according to Claim 10 or 11, **characterized in that** a plurality of selector rods of the gearbox or part gearbox are assigned in each case a dedicated power cylinder arrangement for axial adjustment, preferably comprising in each case a dual-action cylinder (192-1; 192-2; 194-1; 194-2) which is coupled or can be coupled to the selector rod directly or indirectly.

14. Drive train according to one of Claims 10 to 13, **characterized in that** a plurality of power cylinder arrangements (192, 194) which serve to adjust axially at least one associated selector rod of the gearbox are assigned in each case a dedicated controlling/regulating valve arrangement (196, 198; 200, 202) for the controlled or regulated feeding in and/or discharging of pressure medium.

15. Drive train according to one of Claims 10 to 14, **characterized in that** a plurality of power cylinder arrangements (192, 194; 192-1, 192-2, 194-1, 194-2) which serve to adjust axially at least one associated selector rod of the gearbox are assigned a common controlling/regulating valve arrangement (197, 199) for the controlled or regulated feeding in and/or discharging of pressure medium, and **in that**, by means of a switching valve arrangement (201, 203; 210-1, 210-2, 212-2, 212-2), each of the power cylinder arrangements can be selected for feeding in and/or discharging pressure medium by connection to the common controlling/regulating valve arrangement or to a pressure-medium outflow or a pressure-medium intake via the switching valve arrangement.

16. Drive train according to Claim 15, **characterized in that** a plurality of power cylinder arrangements (192, 194) are provided which are grouped into at least two groups in such a way that each group comprises at least one power cylinder arrangement, and **in that** a respective group of power cylinder arrangements can be selected for loading with pressure medium by means of at least one switching valve (526p) which is assigned to it, preferably at least one X/Y-way valve (526p).

17. Drive train according to one of Claims 1 to 16, **characterized by** at least one pressure sensor (30, 112; 110) for detecting an instantaneous pressure-medium pressure or operating-medium pressure.

18. Drive train according to Claim 17, **characterized in that** the pressure sensor (110) can be brought alternatively into measuring connection with a plurality of measuring locations of the hydraulic system via a valve arrangement (512p, 514p).

19. Drive train according to one of the preceding claims, **characterized in that** the clutch arrangement (102, 104) is a wet-running clutch arrangement, **in that** operation under the action of the operating medium is wet-running operation, and **in that** the operating medium is a cooling fluid.

20. Drive train according to one of the preceding claims, **characterized in that** the clutch arrangement (102, 104) is configured as a multiple disc clutch arrangement.

21. Drive train according to one of the preceding claims, **characterized in that** the pressure medium is a hydraulic oil which also serves as cooling fluid.

22. Drive train according to one of the preceding claims, **characterized in that** the clutch device (100) is configured as a multiple clutch device, in particular a dual clutch device (100), and has a first clutch arrangement (102) which is assigned at least one first slave cylinder (102) and a second clutch arrangement (104) which is assigned at least one second slave cylinder (104), it being possible for medium which is provided by the pump arrangement (10; 10b) to be fed as pressure medium to the two slave cylinders independently of one another.

23. Drive train according to Claim 1, **characterized in that** a plurality of dual-action actuating cylinders can be selected at the same time, it being possible for a first group of actuating cylinders to be selected at one instant, with the non-selection or cancellation of the selection of a second group of actuating cylinders.

24. Drive train according to Claim 23, **characterized in that**, at one instant, only one of the dual-action actuating cylinders can be selected, with cancellation of the selection of an actuating cylinder which was previously selected.

25. Drive train according to Claim 23 or 24, **characterized in that** the selecting arrangement (402; 402, 404; 402, 406, 408) can be switched between a plurality of selecting states on the basis of to at least one valve of the

## Revendications

1. Transmission pour véhicule automobile, comprenant une unité d'entraînement (12), une boîte de vitesses et un système d'embrayage avec un dispositif d'embrayage (100) disposé entre l'unité d'entraînement et la boîte de vitesses, pour le transfert de couple entre l'unité d'entraînement et la boîte de vitesses, le dispositif d'embrayage présentant au moins un agencement d'embrayage (102, 104) actionnable par le biais d'un fluide sous pression et prévu pour fonctionner sous l'effet d'un fluide de travail, la boîte de vitesses pouvant être actionnée au moyen d'un système d'actionneurs associé (160 ; 160c ; 160d ; ... ; 160p') par l'intermédiaire de fluide sous pression, dans laquelle :
par le biais d'un agencement de pompe (10 ; 10b ; 10c) associé conjointement au dispositif d'embrayage et à la boîte de vitesses,
a) le fluide sous pression peut être fourni en vue d'actionner l'agencement d'embrayage (102, 104) et du fluide de travail peut être acheminé au dispositif d'embrayage (100) pour son fonctionnement sous l'effet du fluide de travail, et
b) le fluide sous pression peut être fourni pour l'actionnement de la boîte de vitesses,
**caractérisée en ce que**
la boîte de vitesses présente une première boîte de vitesses partielle associée à un premier jeu de vitesses de la boîte de vitesses, et une deuxième boîte de vitesses partielle associée à un deuxième jeu de vitesses de la boîte de vitesses, lesquelles peuvent être actionnées indépendamment l'une de l'autre au moyen du système d'actionneurs (160 ; 160c ; 160d ; ... ; 160p') afin de prévoir une fonction de changement de rapports sous charge, le système d'actionneurs (160 ; 160c ; 160d ; ... ; 160p') étant réalisé en se passant d'un mécanisme de sélection de voies, de telle sorte qu'au moins une tringle de changement de vitesse de la boîte de vitesses ou d'au moins l'une des boîtes de vitesses partielles puisse être déplacée axialement au moyen d'un agencement de cylindres de force associé à celle-ci, sur la base du fluide sous pression acheminé,
et l'agencement d'embrayage (102, 104) étant un agencement d'embrayage humide, et le fonctionnement étant un fonctionnement humide sous l'effet du fluide de travail, et **en ce que** le fluide de travail est un liquide de travail,
et le fluide sous pression étant un fluide sous pression hydraulique qui sert aussi de liquide de travail,
et le système d'actionneurs présentant au moins un cylindre d'actionnement à double effet (192-1, 192-2, 194-1, 194-2 ; 192, 194) auquel peut être acheminé, au choix, en association à un premier espace de pression de cylindre, du fluide sous pression, et duquel peut être évacué, au choix, en association avec un deuxième espace de cylindre, du fluide sous pression,
et au moins une soupape de commande/régulation de pression (197), de préférence au moins deux soupapes de commande/régulation de pression (197-1, 197-2, 199-1, 199-2 ; 197, 199) étant associée(s) à plusieurs cylindres d'actionnement à effet double du système d'actionneurs, les cylindres d'actionnement pouvant être sélectionnés au choix pour un actionnement dans un premier sens d'actionnement ou pour un actionnement dans un deuxième sens d'actionnement opposé au premier, au moyen d'un agencement de sélection (402 ; 402, 404 ; 402, 406, 408) reliant les cylindres d'actionnement et la ou les soupapes de commande/régulation de pression,
et dans le cas d'un cylindre d'actionnement à double effet sélectionné, le premier espace du cylindre, auquel du fluide sous pression peut être acheminé pour un actionnement dans le premier sens d'actionnement, et duquel du fluide sous pression peut être éjecté pour un actionnement dans le deuxième sens d'actionnement, étant connecté par le biais de l'agencement de sélection (402 ; 402, 404) à une première soupape de commande/régulation de pression associée et le deuxième espace du cylindre, auquel du fluide sous pression peut être acheminé pour un actionnement dans le deuxième sens d'actionnement et duquel du fluide sous pression peut être éjecté pour un actionnement dans le premier sens d'actionnement, étant connecté par le biais de l'agencement de sélection à une deuxième soupape de commande/régulation de pression associée.

2. Transmission selon la revendication 1, **caractérisée en ce que** l'agencement de pompe (10 ; 10b; 10c) comprend au moins une pompe (14, 16 ; 16) pouvant être entraînée par cette unité d'entraînement (12), dont le côté d'entrée et le côté de sortie peuvent être connectés par le biais d'un agencement de soupapes de commande/régulation (18, 22 ; 18a, 22a ; 22a), afin de fournir à une pression de consigne, le fluide situé du côté de la sortie ou en un point de décharge du côté de la sortie, par recirculation de fluide du côté de la sortie vers le côté d'entrée, et/ou de fournir un débit volumique de consigne de fluide se trouvant du côté de la sortie ou au point de décharge du côté de la sortie, par recirculation de fluide du côté de la sortie vers le côté d'entrée.

3. Transmission selon l'une quelconque des revendications 1 à 2, **caractérisée en ce que** l'agencement de pompe (10c) comprend précisément une pompe (16) pouvant être entraînée par l'unité d'entraînement, qui permet de fournir le fluide sous pression pour l'actionnement de l'agencement d'embrayage, d'acheminer du fluide de travail au dispositif d'embrayage pour le fonctionnement sous l'effet du fluide de travail, et de fournir le fluide sous pression pour l'actionnement de la boîte de vitesses.

4. Transmission selon l'une quelconque des revendications 2 ou 3, **caractérisée en ce que** l'agencement de soupapes de commande/régulation présente au moins un distributeur qui est monté ou peut être monté entre le côté de la sortie et le côté d'entrée et par l'intermédiaire duquel la pression de consigne ou le débit volumique de consigne peut être ajusté(e).

5. Transmission selon l'une quelconque des revendications 2 ou 3, **caractérisée en ce que** l'agencement de soupapes de commande/régulation présente au moins une soupape de commande/régulation de pression, qui est montée ou peut être montée entre le côté de la sortie et le côté d'entrée et par l'intermédiaire de laquelle la pression de consigne ou le débit volumique de consigne - par le biais de l'ajustement d'une différence de pression ou d'un niveau de pression - peut être ajusté(e).

6. Transmission selon l'une quelconque des revendications 2 ou 3, **caractérisée en ce que** l'agencement de soupapes de commande/régulation présente au moins une soupape de commande/régulation de volume (22n ; 22n'), qui est montée ou peut être montée entre le côté de la sortie et le côté d'entrée et par l'intermédiaire de laquelle le débit volumique de consigne ou-par le biais de l'ajustement d'un débit volumique - la pression de consigne - peut être ajusté(e).

7. Transmission selon l'une quelconque des revendications 1 à 6, **caractérisée en ce qu'**une portion du système hydraulique (160p; 160p') associée à l'actionnement de la boîte de vitesses peut être désaccouplée fluidiquement d'une portion du système hydraulique présentant l'agencement de pompe et associée à l'actionnement de l'agencement d'embrayage et/ou à l'alimentation du dispositif d'embrayage en fluide de travail.

8. Transmission selon la revendication 7, **caractérisée en ce que** la portion du système hydraulique (160p ; 160p') associée à l'actionnement de la boîte de vitesses peut être accouplée hydrauliquement à la portion du système hydraulique présentant l'agencement de pompe et peut en être désaccouplée, par l'intermédiaire d'une soupape (530p ; 530p') pouvant être de préférence actionnée par une pression hydraulique appliquée.

9. Transmission selon l'une quelconque des revendications 1 à 8, **caractérisée en ce que** la boîte de vitesses présente une première boîte de vitesses partielle associée à un premier jeu de vitesses de la boîte de vitesses, et une deuxième boîte de vitesses partielle associée à un deuxième jeu de vitesses de la boîte de vitesses, lesquelles peuvent être actionnées de préférence indépendamment l'une de l'autre si l'on utilise un dispositif à double embrayage ou à embrayage multiple (100), afin de prévoir une fonction de changement de rapports sous charge.

10. Transmission selon l'une quelconque des revendications 1 à 9, **caractérisée en ce qu'**au moins une tringle de changement de vitesse de la boîte de vitesses ou d'au moins l'une des boîtes de vitesses partielles peut être déplacée axialement au moyen d'un agencement de cylindres de force (192 ; 194 ; 192-1 ; 192-2 ; 194-1 ; 194-2) associé à celle-ci, sur la base du fluide sous pression acheminé.

11. Transmission selon la revendication 10, **caractérisée en ce que** l'agencement de cylindres de force présente un cylindre à double fonction (192 ; 194 ; 192-1 ; 192-2 ; 194-1 ; 194-2) accouplé ou pouvant être accouplé directement ou indirectement à la tringle de changement de vitesse.

12. Transmission selon la revendication 10, **caractérisée en ce que** l'agencement de cylindres de force présente deux cylindres à simple fonction (192-1-1, 192-1-2 ; 192-2-1 , 192-2-2 ; 194-1-1, 194-1-2 ; 194-2-1, 194-2-2) accouplés ou pouvant être accouplés directement ou indirectement à la tringle de changement de vitesse, dont l'un peut être sollicité avec du fluide sous pression pour le déplacement axial de la tringle de changement de vitesse dans une direction axiale, et l'autre peut être sollicité avec du fluide sous pression pour le déplacement axial de la tringle de changement de vitesse dans l'autre direction axiale.

13. Transmission selon la revendication 10 ou 11, **caractérisée en ce que** l'on associe à plusieurs tringles de changement de vitesse de la boîte de vitesses ou de la boîte de vitesses partielle à chaque fois un agencement de cylindres de force propre, de préférence comprenant à chaque fois un cylindre à effet double (192-1 ; 192-2 ; 194-1 ; 194-2) accouplé ou pouvant être accouplé directement ou indirectement à la tringle de changement de vitesse, en vue du déplacement axial.

14. Transmission selon l'une quelconque des revendications 10 à 13, **caractérisée en ce que** l'on associe à plusieurs agencements de cylindres de force (192, 194) servant au déplacement axial d'au moins une tringle de changement de vitesse associée de la boîte de vitesses, à chaque fois un agencement de soupape de commande/régulation propre (196, 198 ; 200, 202) pour l'alimentation et/ou l'évacuation commandée ou régulée de fluide sous pression.

15. Transmission selon l'une quelconque des revendications 10 à 14, **caractérisée en ce que** l'on associe à plusieurs agencements de cylindres de force (192, 194 ; 192-1, 192-2, 194-1, 194-2) servant au déplacement axial d'au moins une tringle de changement de vitesse associée de la boîte de vitesses, un agencement commun de soupape de commande/régulation (197, 199) pour l'alimentation et/ou l'évacuation commandée ou régulée de fluide sous pression, et **en ce qu'**au moyen d'un agencement de soupape de commutation (201, 203 ; 210-1, 210-2, 212-1, 212-2) chacun des agencements de cylindres de force peut être sélectionné pour une alimentation et/ou une évacuation de fluide sous pression par connexion à l'agencement commun de soupape de commande/régulation ou à une sortie de fluide sous pression ou à un prélèvement de fluide sous pression par le biais de l'agencement de soupape de commutation.

16. Transmission selon la revendication 15, **caractérisée en ce que** l'on prévoit plusieurs agencements de cylindres de force (192, 194), qui sont regroupés en au moins deux groupes, de telle sorte que chaque groupe comprenne au moins un agencement de cylindres de force et **en ce qu'**un groupe respectif d'agencements de cylindres de force est sélectionné pour être sollicité par du fluide sous pression au moyen d'au moins une soupape de commutation associée à celui-ci (526p), de préférence au moins une soupape à X/Y voies (526p).

17. Transmission selon l'une quelconque des revendications 1 à 16, **caractérisée par** au moins un capteur de pression (30, 112 ; 110) pour détecter une pression temporaire de fluide de pression ou de fluide de travail.

18. Transmission selon la revendication 17, **caractérisée en ce que** le capteur de pression (110) peut être amené en liaison de mesure par le biais d'un agencement de soupape (512p, 514p) en alternance avec plusieurs points de mesure du système hydraulique.

19. Transmission selon l'une quelconque des revendications précédentes, **caractérisée en ce que** l'agencement d'embrayage (102, 104) est un agencement d'embrayage humide, **en ce que** le fonctionnement est un fonctionnement humide sous l'effet du fluide de travail, et **en ce que** le fluide de travail est un liquide de refroidissement.

20. Transmission selon l'une quelconque des revendications précédentes, **caractérisée en ce que** l'agencement d'embrayage (102, 104) est réalisé sous forme d'agencement d'embrayage à disques.

21. Transmission selon l'une quelconque des revendications précédentes, **caractérisée en ce que** le fluide sous pression est une huile hydraulique qui sert aussi de liquide de refroidissement.

22. Transmission selon l'une quelconque des revendications précédentes, **caractérisée en ce que** le dispositif d'embrayage (100) est réalisé sous forme de dispositif d'embrayage multiple, en particulier de dispositif de double embrayage (100), et présente un premier agencement d'embrayage (102), auquel est associé au moins un premier cylindre récepteur (102), et un deuxième agencement d'embrayage (104), auquel est associé au moins un deuxième cylindre récepteur (104), les deux cylindres récepteurs pouvant recevoir indépendamment l'un de l'autre, du fluide fourni par l'agencement de pompe (10 ; 10b) sous forme de fluide sous pression.

23. Transmission selon la revendication 1, **caractérisée en ce que** plusieurs cylindres d'actionnement à double effet peuvent être sélectionnés en même temps, un premier groupe de cylindres d'actionnement pouvant être sélectionné à un instant, sans sélectionner ou en supprimant la sélection d'un deuxième groupe de cylindres d'actionnement.

24. Transmission selon la revendication 23, **caractérisée en ce que** parmi les cylindres d'actionnement à double effet, on n'en sélectionne qu'un seul à un instant, en supprimant la sélection d'un cylindre d'actionnement sélectionné précédemment.

25. Transmission selon la revendication 23 ou 24, **caractérisée en ce que** l'agencement de sélection (402 ; 402, 404 ; 402, 406, 408) peut être commuté entre plusieurs états de sélection, par le biais de à au moins une soupape de
